(19) Europäisches Patentamt
European Patent Office
Office européen des brevets

(11) EP 3 728 367 B1

(12) **EUROPEAN PATENT SPECIFICATION**

(45) Date of publication and mention of the grant of the patent:
**16.07.2025 Bulletin 2025/29**

(21) Application number: **18829958.0**

(22) Date of filing: **21.12.2018**

(51) International Patent Classification (IPC):
***C08G 18/44*** *(2006.01)* ***C08G 64/34*** *(2006.01)*
***C08G 18/76*** *(2006.01)*

(52) Cooperative Patent Classification (CPC):
**C08G 18/44; C08G 18/7664; C08G 64/34;**
C08G 2110/0025

(86) International application number:
**PCT/GB2018/053749**

(87) International publication number:
**WO 2019/122923 (27.06.2019 Gazette 2019/26)**

(54) **RIGID FOAMS**

HARTSCHAUMSTOFFE

MOUSSES RIGIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2017 GB 201721650**
**29.05.2018 GB 201808720**

(43) Date of publication of application:
**28.10.2020 Bulletin 2020/44**

(60) Divisional application:
**25154144.7**

(73) Proprietor: **Econic Technologies Limited**
**Macclesfield, Cheshire SK10 4TG (GB)**

(72) Inventors:
- **KEMBER, Michael**
**Macclesfield, Cheshire SK10 4TG (GB)**
- **KABIR, Rakibul**
**Macclesfield, Cheshire SK10 4TG (GB)**
- **ANDREWS, Mark**
**Macclesfield, Cheshire SK10 4TG (GB)**

(74) Representative: **Brand, Thomas Louis**
**Brand Murray Fuller LLP**
**50 Eastcastle Street**
**London W1W 8EA (GB)**

(56) References cited:
**WO-A1-2017/037441 US-A1- 2016 115 288**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The present invention relates to rigid foams produced from the reaction of (poly)isocyanates and polyols comprising polyethercarbonate polyols. The invention extends to the use of such rigid foams as flame retardant materials and low flammability rigid foams and their methods of production.

### Background

Polyurethanes are polymers which are prepared by reacting a di- or polyisocyanate with a polyol. Polyurethanes are used in many different products and applications, including as insulation panels, high performance adhesives, high-resilience foam seating, seals and gaskets, wheels and tyres, synthetic fibres, and the like.

The polyols used to make polyurethanes are polymers which have multiple reactive sites (e.g. multiple hydroxyl functional groups). The polyols which are most commonly used are based on polyethers or polyesters.

Rigid polyurethane or polyisocyanurate foams are widely used in the construction and appliances industry to provide a rigid insulation material. It is often sold in the form of boards for construction but may be moulded or cut to shape in many applications which require insulation such as freezers or fridges. Its use in and on the facing of buildings is subject to many safety requirements and in particular those related to flame retardancy.

Polyethercarbonate polyols -that is polyols that contain both ether and carbonate linkages - are less widely used. WO2016135109 - Covestro - discloses visco-elastic foams that are produced by the reaction of di or polyisocyanates and polyethercarbonate polyols. These polyethercarbonate polyols are produced by reaction of carbon dioxide and epoxides such as propylene oxide (PO) in the presence of DMC catalysts. In general, polyols produced by DMC catalyst methods are limited to lower $CO_2$ content (<20wt%) particularly at lower molecular weights. The activation process for DMC catalysts in general is more efficient in the absence of $CO_2$, Accordingly, the start of the polymerisation reaction is predominantly an epoxide homopolymerisation reaction, producing a growing polyether chain. Even moderate $CO_2$ content is only possible as the polymerisation progresses to higher molecular weights. Example 1 discloses a viscoelastic foam made from a polyethercarbonate polyol with a $CO_2$ content of just 7wt% with a molecular weight of 700 g/mol.

US9512259 discloses the production of flexible foams with high $CO_2$ content polypropylenecarbonate (PPC) polyols. They are highly viscous and difficult to handle.

WO2014186397 discloses the production of polyurethane foams from polycarbonate polyols, including rigid and flexible foams. No examples of foam formation are given to demonstrate the applicability of PPC polyols to rigid foam manufacture.

WO2017037441 discloses the production of polyethercarbonate polyols containing significant amounts of ether and carbonate linkages and indicates their possible use generally in polyurethane production. However, no specific types of polyurethane are disclosed.

Unexpectedly, PEC polyols with a balanced content of ether and carbonate linkages have been shown to be significantly more stable to both the high temperatures and basic catalysts (such as amines and metal carboxylates) used for some rigid foam forming reactions (e.g. isocyanurate formation) than alternating PPC polyols. The dramatically reduced viscosity gives improved polyol processing and allows the polyols to be used without forming blends to moderate viscosity. Furthermore, the rigid foams have unexpected reductions in flammability and smoke emissions.

### Summary of the Invention

According to a first aspect of the present invention there is provided a rigid foam comprising the reaction product of an (poly)isocyanate, and a polyethercarbonate polyol copolymer wherein the polyethercarbonate polyol copolymer is derived from the copolymerisation of one or more epoxides with $CO_2$, wherein the total-$CO_2$- content of the polyethercarbonate polyol copolymer is between 1 and 40wt%, the carbonate linkages are <95% of the total linkages from the copolymerisation, and the molecular weight is between 100 to 5000 g/mol.

The rigid foam is generally a polyurethane foam, more typically, a polyisocyanurate or a mixed polyisocyanurate/polyurethane foam. Advantageously, such foams prepared from the polyols of the invention have shown lower flammability than industry standard foams due to the increased carbonate content of the polyols. This has been observed as a higher mass retention after burning and lower total heat release and rate of heat release. The presence of $CO_2$ within the polyol backbone also reduces the production of toxic gases such as CO and $CO_2$ during combustion compared with benchmark polyols.

In addition, the presence of some ether content in the polyols reduces the viscosity of the polyols in comparison to PPC polyols and whilst PEC polyols can still be used in blends to optimise OH number, functionality etc for the benefit of the formulation, the significant reduction in viscosity means blending is not a necessity and allows PEC polyols to be used in

formulations on their own in the absence of other polyols in producing a rigid foam.

Still further, unlike highly alternating polyols with approaching 100% carbonate linkages, PEC polyols with <95% carbonate linkages in the polymer chain derived from the epoxide and $CO_2$ copolymerisation have been found to be stable to both the exothermic conditions of polyisocyanurate formation and the basic trimerization catalysts used. Highly alternating polyols are shown to degrade under these conditions and cause foam cracking and a higher exotherm within the foam.

Furthermore, as the polyol contains a balance of ether and carbonate linkages, the viscosities are exponentially reduced compared to fully alternating polycarbonate polyols.

**Polyols**

Generally, the polyethercarbonate polyol copolymer forms from 20 to 100wt% of the total polyol present during the reaction with the (poly) isocyanate to produce the rigid foam, more typically, 40 to 100wt%, most typically, 50-100wt% of the total polyol present such as at least, 60, 70, 80, 90, 92, 94, 96, 98, or 99wt% of the total polyol present.

Preferably, the $CO_2$ content in the polyether carbonate polyol copolymer is 5-35wt%, more preferably, 10-30wt%, most preferably, 15-30wt%, such as 15-25wt%.

Preferably, the carbonate linkage content of the polyethercarbonate polyol is up to 90% of a fully alternating polycarbonate polyol which is free of ether linkages, more preferably, <85%. Preferably, the ether linkage content of the polyethercarbonate polyol copolymer is at least 10%, more preferably at least 15%. Carbonate content may be measured by NMR methods such as those defined in WO2017037441 or US2014/0323670.

Typically, more than 95% of the chain ends of the polyethercarbonate polyol copolymer are -OH groups, more preferably, at least 98%, most preferably, at least 99%. The functionality of the polyol may be between 2-6, more typically, 2-4, most typically, 2-3 such as 2.

The OH content in the polyol may be in the range 20-500mg KOH/g, preferably 70-350, more preferably, 100-300. A suitable technique to measure the OH content is ASTM D4274.

The invention utilises a polyethercarbonate polyol which has m carbonate linkages and n ether linkages, wherein m and n are integers, and wherein m/(n+m) is from greater than zero to less than 0.95. Accordingly, in such an arrangement in the invention the carbonate linkages are less than 95% of the total linkages from the copolymerisation.

For example, polyethercarbonate polyols may have a wide range of m/(n+m) values. It will be understood that m/(n+m) may be about 0.05, about 0.10, about 0.15, about 0.20, about 0.25, about 0.25, about 0.30, about 0.35, about 0.40, about 0.45, about 0.50, about 0.55, about 0.60, about 0.65, about 0.70, about 0.75, about 0.80, about 0.85, about 0.90, about 0.95, or within any range falling within two of these specific values. For example, m/(n+m) may be from about 0.05 to about 0.95, from about 0.10 to about 0.90, from about 0.15 to about 0.85, from about 0.20 to about 0.80, or from about 0.25 to about 0.75, etc.

More typically, the invention utilises polyethercarbonate polyols where m/(n+m) is from about 0.1 to about 0.9, e.g. from about 0.2 to about 0.7.

Thus, the invention utilises polyethercarbonate polyols having high proportion of carbonate and also some ether linkages, e.g. m/(n+m) may be greater than about 0.10, such as from greater than about 0.3 to less than about 0.95, e.g. about 0.3 to about 0.8, e.g. about 0.3 to about 0.7.

For example, the polyethercarbonate polyols utilised in the invention may have the following formula (IV):

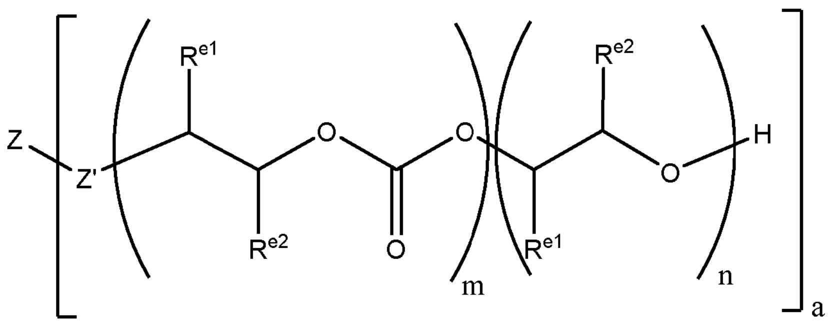
(IV)

It will be appreciated that the identity of Z and Z' will depend on the nature of the starter compound, and that the identity of $R^{e1}$ and $R^{e2}$ will depend on the nature of the epoxide used to prepare the polyethercarbonate polyol. m and n define the amount of the carbonate and ether linkages in the polyethercarbonate polyol.

Exemplary starter compounds include diols such as 1,2-ethanediol (ethylene glycol), 1-2-propanediol, 1,3-propanediol (propylene glycol), 1,2-butanediol, 1-3-butanediol, 1,4-butanediol, 1,5-pentanediol, 1,6-hexanediol, 1,8-octanediol, 1,10-decanediol, 1,12-dodecanediol, 1,4-cyclohexanediol, 1,2-diphenol, 1,3-diphenol, 1,4-diphenol, neopentyl glycol, catechol, cyclohexenediol, 1,4-cyclohexanedimethanol, dipropylene glycol, diethylene glycol, tripropylene glycol, triethylene glycol, tetraethylene glycol, polypropylene glycols (PPGs) or polyethylene glycols (PEGs) having an Mn of up to about 1500g/mol, such as PPG 425, PPG 725, PPG 1000 and the like, triols such as glycerol, benzenetriol, 1,2,4-butanetriol, 1,2,6-hexanetriol, tris(methylalcohol)propane, tris(methylalcohol)ethane, tris(methylalcohol)nitropropane, trimethylol propane, polyethylene oxide triols, polypropylene oxide triols and polyester triols, tetraols such as calix[4] arene, 2,2-bis(methylalcohol)-1,3-propanediol, erythritol, pentaerythritol or polyalkylene glycols (PEGs or PPGs) having 4-OH groups, polyols, such as sorbitol or polyalkylene glycols (PEGs or PPGs) having 5 or more -OH groups, or compounds having mixed functional groups including ethanolamine, diethanolamine, methyldiethanolamine, and phenyldiethanolamine.

It will be appreciated that the functionality of the starter compound will determine the functionality of the polyol. It will be appreciated that two or more different starter compounds may be used. In this case, the overall functionality will be dependent on the ratio of the starters used and their functionalities. For example, if a polyol is made with 50% diol starter (such as propylene glycol) and 50% triol starter (such as tri(methylol)propane) then the final polyol will have a functionality of 2.5. In such a case the polyol may be a mixture of structures IV-A and IV-B.

The starter compound may be of the formula (III):

$$Z(R^Z)_a \qquad (III)$$

Z can be any group which can have 2 or more $-R^Z$ groups attached to it. Thus, Z may be selected from optionally substituted alkylene, alkenylene, alkynylene, heteroalkylene, heteroalkenylene, heteroalkynylene, cycloalkylene, cycloalkenylene, hererocycloalkylene, heterocycloalkenylene, arylene, heteroarylene, or Z may be a combination of any of these groups, for example Z may be an alkylarylene, heteroalkylarylene, heteroalkylheteroarylene or alkylheteroarylene group.

a is an integer which is at least 2, each $R^Z$ may be -OH, -NHR', -SH, -C(O)OH, -P(O)(OR')(OH), - PR'(O)$(OH)_2$ or -PR'(O)OH, and R' may be H, or optionally substituted alkyl, heteroalkyl, aryl, heteroaryl, cycloalkyl or heterocycloalkyl.

The skilled person will understand that in the polymers of formula (IV), the adjacent epoxide monomer units in the backbone may be head-to-tail linkages, head-to-head linkages or tail-to-tail linkages. The skilled person will also understand that although formula (IV) depicts the starter Z ( $R^Z)_a$ reacting first with the epoxide, in some cases it can react first with carbon dioxide. Some polyols may contain polymer chains were Z ( $R^Z)_a$ has reacted with either epoxide and $CO_2$ and therefore contain a mixture of Z' units.

It will also be appreciated that formula (IV) does not require the carbonate links and the ether links to be present in two distinct "blocks" in each of the sections defined by "a", but instead the carbonate and ether repeating units may be statistically distributed along the polymer backbone, or may be arranged so that the carbonate and ether linkages are not in two distinct blocks.

Thus, the polyethercarbonate polyol utilised (e.g. a polymer of formula (IV)) may be referred to as a random copolymer, a statistical copolymer, an alternating copolymer, or a periodic copolymer.

The skilled person will appreciate that the wt% of carbon dioxide incorporated into a polyol polymer cannot be definitively used to determine the amount of carbonate linkages in the polymer backbone.

For example, two polymers which incorporate the same wt% of carbon dioxide may have very different ratios of carbonate to ether linkages. This is because the "wt% incorporation" of carbon dioxide does not take into account the length and nature of the starter compound. For instance, if one polymer ($M_n$ 2000 g/mol) is prepared using a starter with a molar mass of 100 g/mol, and another polymer ($M_n$ also 2000 g/mol) is prepared using a starter having a molar mass of 500 g/mol, and both the resultant polymers have the same ratio of m/n then the wt% of carbon dioxide in the polymers will be different due to the differing proportion of the mass of the starter in the overall polymer molecular weight ($M_n$). For example, if m/(m+n) was 0.5, the two polyols described would have carbon dioxide contents of 26.1 wt% and 20.6 wt% respectively.

As highlighted above, polyethercarbonate polyols may have a wide range of carbonate to ether linkages (e.g. m/(n+m) can be from greater than zero to less than 1), which, when using propylene oxide, corresponds to incorporation of up to about 43 wt% carbon dioxide.

It will be appreciated, for a propylene oxide based polyol for example, that depending on the ratio of the starter and final polyol molar mass, 43wt% carbon dioxide will not always be attainable even if m/n+m = 1 due to the contribution the starter makes to the mass of the final polyol. Not all $CO_2$ wt% values will be attainable in every polyol structure, depending on the ratio of m/n+m, starter mass and polyol $M_n$. For example, a polyol of $M_n$ 700 produced from a starter of mass 200 g/mol would have a maximum $CO_2$ wt% of 30.7%, when m/n+m = 1.

Furthermore, catalysts which are used to prepare polycarbonate polyols can typically achieve a ratio of carbonate to ether linkages of 0.95 or above (usually about 0.98 or above), and thus also incorporate a high wt% of carbon dioxide. However, these catalysts are not capable of preparing polyols having a ratio of carbonate to ether linkages below 0.95. The carbon dioxide wt% can be moderated by changing the mass of the starter: the resultant polyols contain

blocks of polycarbonate. For many applications this is not desirable, as polycarbonates produced from epoxides and carbon dioxide are less thermally stable than polyethers and block copolymers can have very different properties from random or statistical copolymers. In rigid foam formation, the presence of blocks of alternating polycarbonate polyol decreases the stability to thermal and basic conditions required to form polyisocyanurate foams.

As set out above, the invention typically utilises a random copolymer, a statistical copolymer, an alternating copolymer, or a periodic polyether carbonate polyol copolymer. Thus, the carbonate linkages are not in a single block, thereby utilising a polymer which has improved properties, such as improved thermal stability to degradation and improved stability to degradation by bases, as compared to a polycarbonate polyol. Preferably, the polymer utilised is a random copolymer or a statistical copolymer.

The polyethercarbonate polyol typically utilised in the invention may be of formula (IV), in which n and m are integers of 1 or more, the sum of all m and n groups is from 4 to 200, and wherein m/(m+n) is in the range of from greater than zero to less than 0.95. As set out above, m/(n+m) may be from about 0.05, about 0.10, about 0.15, about 0.20, about 0.25, about 0.25, about 0.30, about 0.35, about 0.40, about 0.45, about 0.50, about 0.55, about 0.60, about 0.65, about 0.70, about 0.75, about 0.80, about 0.85, about 0.90, about 0.95, or within any range prepared from these specific values. For example, m/(n+m) may be from about 0.05 to about 0.95, from about 0.10 to about 0.90, from about 0.15 to about 0.85, from about 0.20 to about 0.80, or from about 0.25 to about 0.75, etc.

The skilled person will also appreciate that the polyol must contain at least one carbonate and at least one ether linkage. Therefore, it will be understood that the number of ether and carbonate linkages (n+m) in the polyol will be $\geq$ a. The sum of n+m must be greater than or equal to a.

Each $R^{e1}$ may be independently selected from H, halogen, hydroxyl, or optionally substituted alkyl, alkenyl, alkynyl, cycloalkyl, heterocycloalkyl, aryl, heteroaryl, heteroalkyl or heteroalkenyl. Preferably $R^{e1}$ may be selected from H or optionally substituted alkyl.

Each $R^{e2}$ may be independently selected from H, halogen, hydroxyl, or optionally substituted alkyl, alkenyl, alkynyl, cycloalkyl, heterocycloalkyl, aryl, heteroaryl, heteroalkyl or heteroalkenyl. Preferably $R^{e2}$ may be selected from H or optionally substituted alkyl.

It will also be appreciated that $R^{e1}$ and $R^{e2}$ may together form a saturated, partially unsaturated or unsaturated ring containing carbon and hydrogen atoms, and optionally one or more heteroatoms (e.g. O, N or S). For example, $R^{e1}$ and $R^{e2}$ may together form a 5 or six membered ring.

As set out above, the nature of $R^{e1}$ and $R^{e2}$ will depend on the epoxide used in the reaction. If the epoxide is cyclohexene oxide (CHO), then $R^{e1}$ and $R^{e2}$ will together form a six-membered alkyl ring (e.g. a cyclohexyl ring). If the epoxide is ethylene oxide, then $R^{e1}$ and $R^{e2}$ will both be H. If the epoxide is propylene oxide, then $R^{e1}$ will be H and $R^{e2}$ will be methyl (or $R^{e1}$ will be methyl and $R^{e2}$ will be H, depending on how the epoxide is added into the polymer backbone). If the epoxide is butylene oxide, then $R^{e1}$ will be H and $R^{e2}$ will be ethyl (or *vice versa*). If the epoxide is styrene oxide, then $R^{e1}$ may be hydrogen, and $R^{e2}$ may be phenyl (or *vice versa*).

It will also be appreciated that if a mixture of epoxides are used, then each occurrence of $R^{e1}$ and/or $R^{e2}$ may not be the same, for example if a mixture of ethylene oxide and propylene oxide are used, $R^{e1}$ may be independently hydrogen or methyl, and $R^{e2}$ may be independently hydrogen or methyl.

Thus, $R^{e1}$ and $R^{e2}$ may be independently selected from hydrogen, alkyl or aryl, or $R^{e1}$ and $R^{e2}$ may together form a cyclohexyl ring, preferably $R^{e1}$ and $R^{e2}$ may be independently selected from hydrogen, methyl, ethyl or phenyl, or $R^{e1}$ and $R^{e2}$ may together form a cyclohexyl ring.

Z' corresponds to $R^z$, except that a bond replaces the labile hydrogen atom. Therefore, the identity of each Z' depends on the definition of $R^Z$ in the starter compound. Thus, it will be appreciated that each Z' may be -O-, -NR'-, -S-, -C(O)O-, -P(O)(OR')O-, -PR'(O)(O-)$_2$ or -PR'(O)O- (wherein R' may be H, or optionally substituted alkyl, heteroalkyl, aryl, heteroaryl, cycloalkyl or heterocycloalkyl, preferably R' is H or optionally substituted alkyl), preferably Z' may be -C(O)O-, -NR'- or -O-, more preferably each Z' may be -O-, -C(O)O- or a combination thereof, more preferably each Z' may be -O-. It will be appreciated that although the polymer drawn in IV depicts Z' bound to the carbon of an ethylene unit from the epoxide, $R^z$ may react first with $CO_2$ if it is -OH, -SH, -NHR', P(O)(OR')(OH), -PR'(O)(OH)$_2$ or -PR'(O)OH. In these instances, Z' would correspondingly be -O-C(O)O-, -S-C(O)O-, -NR'-C(O)O-, - P(O)(OR')O-C(O)O-, -PR'(O)(OH)O-C(O) O- or -PR'(O)O-C(O)O-.

Z also depends on the nature of the starter compound. Thus, Z may be selected from optionally substituted alkylene, alkenylene, alkynylene, heteroalkylene, heteroalkenylene, heteroalkynylene, cycloalkylene, cycloalkenylene, hererocycloalkylene, heterocycloalkenylene, arylene, heteroarylene, or Z may be a combination of any of these groups, for example Z may be an alkylarylene, heteroalkylarylene, heteroalkylheteroarylene or alkylheteroarylene group. Preferably Z is alkylene, heteroalkylene, arylene, or heteroarylene, e.g. alkylene or heteroalkylene. It will be appreciated that each of the above groups may be optionally substituted, e.g. by alkyl.

The variable a will also depend on the nature of the starter compound, for formula (IV), a is an integer of at least 2, preferably a is in the range of between 2 and 8, preferably a is in the range of between 2 and 6.

The skilled person will also appreciate that the value of a will influence the shape of the polyol prepared by the

method of the invention. For example, when a is 2, the polyol of formula (IV) may have the following structure:

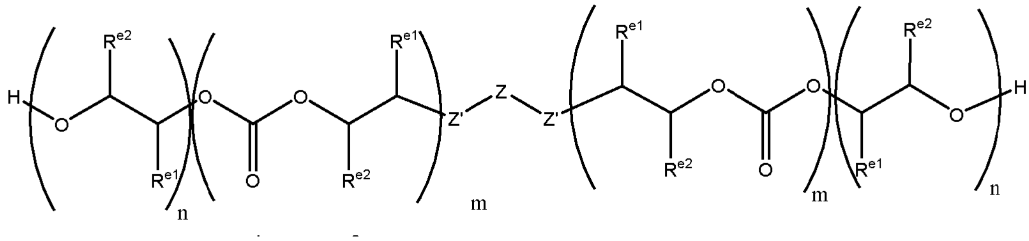

(IV-A)

Where Z, Z', m, n, $R^{e1}$ and $R^{e2}$ are as described above for formula (IV).

For example, when a is 3, the polyol of formula (IV) may have the following formula:

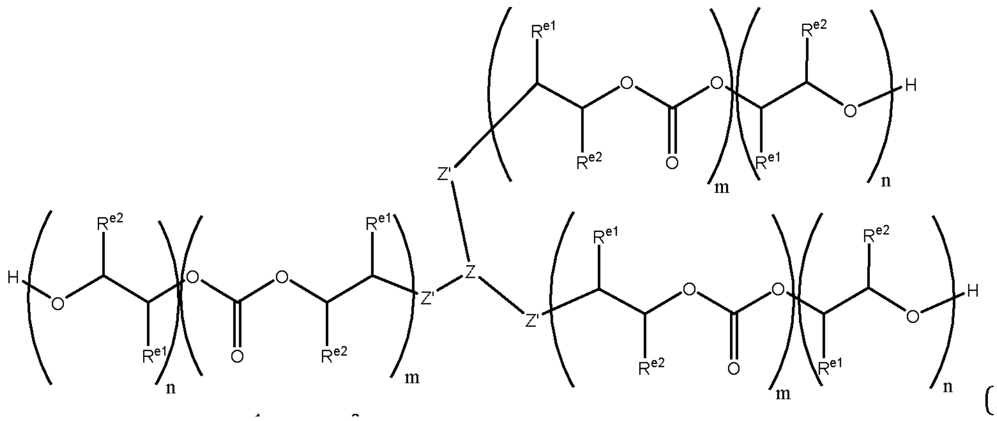

(IV-B)

Where Z, Z', m, n, R and $R^{e2}$ are as described above for formula (IV).

The skilled person will understand that each of the above features may be combined. For example, $R^{e1}$ and $R^{e2}$ may be independently selected from hydrogen, alkyl or aryl, or $R^{e1}$ and $R^{e2}$ may together form a cyclohexyl ring, each Z' may be -O-, -C(O)O- or a combination thereof (preferably each Z' may be -O-), and Z may be optionally substituted alkylene, heteroalkylene, arylene, or heteroarylene, e.g. alkylene or heteroalkylene, and a may be between 2 and 8.

The polyols utilised in the invention are preferably low molecular weight polyols. It will be appreciated that the nature of the epoxide used to prepare the polyethercarbonate polyol will have an impact on the resulting molecular weight of the product. Thus, the upper limit of n+m is used herein to define "low molecular weight" polyol polymers of the invention. Accordingly, the number of ether and carbonate linkages (n+m) in the polyether carbonate will define the molecular weight of the poly ether carbonate polymer. For example, preferably $n \leq 5$ and $m \leq 5$, or $n \leq 10$ and $m \leq 10$, or $n \leq 20$ and $m \leq 20$ or $n \leq 50$ and $m \leq 50$.

Preferably, $m + n \leq 10$, or $m + n \leq 20$, or $m + n \leq 100$.

Preferred ranges for m + n are from 2, 5, 10 or 20 up to 50 or 100, for example 2 to 100, or 5 to 100 or 10 to 50.

The invention typically utilises a polyethercarbonate polyol having a narrow molecular weight distribution. In other words, the polyethercarbonate polyol may have a low polydispersity index (PDI). The PDI of a polymer is determined by dividing the weight average molecular weight ($M_w$) by the number average molecular weight ($M_n$) of a polymer, thereby indicating the distribution of the chain lengths in the polymer product. It will be appreciated that PDI becomes more important as the molecular weight of the polymer decreases, as the percent variation in the polymer chain lengths will be greater for a short chain polymer as compared to a long chain polymer, even if both polymers have the same PDI.

Preferably the polyol polymers utilised in the invention have a PDI of from about 1 to less than about 2, preferably from about 1 to less than about 1.75, more preferably from about 1 to less than about 1.5, even more preferably from about 1 to less than about 1.3.

The $M_n$ and $M_w$, and hence the PDI of the polyol polymers utilised in the invention may be measured using Gel Permeation Chromatography (GPC). For example, the GPC may be measured using an Agilent 1260 Infinity GPC machine with two Agilent PLgel μ-m mixed-E columns in series. The samples may be measured at room temperature (293K) in THF with a flow rate of 1mL/min against narrow polystyrene standards (e.g. polystyrene low easivials supplied by Agilent Technologies with a range of $M_n$ from 405 to 49,450 g/mol). Optionally, the samples may be measured against poly(ethylene glycol) standards, such as polyethylene glycol easivials supplied by Agilent Technologies.

The molecular weight may be calculated from the OH value of the polyol by following equations:

$$Molecular\ weight = equivalent\ weight\ \times functionality$$

$$Equivalent\ weight = \frac{56.1\ \times 1000}{OH\ value + acid\ value}$$

Where the acid value and OH value may be measured by any accepted standard method, such as ASTM D4274 (OH value) and ASTM D4662 (acid value).

Preferably, the polyol polymers utilised in the invention may have a molecular weight in the range of from about 100 to about 5,000 g/mol, preferably from about 200 to about 3,000 g/mol, preferably from about 300 to about 2,000 g/mol, more preferably from about 300 to about 1000 g/mol, most preferably from about 300 to 800 g/mol. The term "molecular weight" herein refers to number average molecular weight unless otherwise indicated.

Alternatively, the molecular weight of the polyol may be expressed by the total m+n groups.

The invention typically utilises one or more polyols, which is reacted with one or more (poly)isocyanates to produce the final product.

Also disclosed herein is a polyethercarbonate polyol copolymer derived from the copolymerisation of one or more epoxides with $CO_2$, wherein the polyethercarbonate copolymer has a functionality of greater than 2 and wherein the total $-CO_2-$ content of the polyethercarbonate polyol copolymer is between 10 and 35wt%, preferably between 10 and 30wt%, the carbonate linkages are <95% of the total linkages from the copolymerisation, and the molecular weight of the polyethercarbonate polyol copolymer is less than 1500 g/mol, preferably less than 1000 g/mol.

When the polyethercarbonate polyol copolymer has a functionality of greater than 2, for example if the polyol has three hydroxyl groups, the polyol has the added advantage that it may be used as a crosslinking moiety, particularly in reactions to form the rigid polyurethane foams of the first aspect of the invention.

Also disclosed herein is a polyethercarbonate polyol copolymer derived from the copolymerisation of one or more epoxides with $CO_2$, wherein the molecular weight of the polyethercarbonate polyol copolymer is less than 1000 g/mol, the carbonate linkages are <95% of the total linkages from the copolymerisation, and the total $-CO_2-$ content is between 20 and 35wt%, preferably between 22 and 35wt%, between 25 and 35wt% or between 30 and 35wt%.

Such polyethercarbonate polyols are particularly useful in reactions to form the rigid polyurethane foams of the first aspect of the invention. As discussed above foams prepared from such polyols have shown lower flammability than industry standard foams due to the increased carbonate content of the polyols. This has been observed as a higher mass retention after burning and lower total heat release and rate of heat release. The presence of $CO_2$ within the polyol backbone also reduces the production of toxic gases such as CO and $CO_2$ during combustion compared with benchmark polyols.

Generally, the copolymerisation of the epoxide with $CO_2$ takes place in the presence of at least one starter compound so that the residue of the starter compound is incorporated into the polyethercarbonate polyol copolymer. Suitable starter compounds are detailed above.

**Other Polyols**

Other polyol components may be used which may or may not be polyethercarbonate polyols. Such polyols may form from 0wt% up to 80wt% of the total polyols present in the reaction with the (poly)isocyanate.

Such other polyols may be polycarbonate polyols, polyester polyols, polyether polyols, mannich polyols, polymer polyols (filled with polystyrene or other polymers), polyether-ester carbonate polyols, dendritic polyols such as dendritic polyesters, natural oil polyols, for instance from soy bean oil, canola oil, cashew nut oil, castor oil and peanut oil, alkanols, phenols, sugars and mixtures thereof.

The other polyols may have hydroxyl numbers between 20-2000 mgKOH/g.

Suitably, higher functional polyols for use with the polyols of the invention include polycarbonate polyols, polyester polyols, polycaprolactone polyols, polyvalerolactone polyols, polyvalerolactone-caprolactone co-polyols, polyether polyols, mannich polyols, polystyrene polyols, polylactic acid polyols, dendritic polyols such as made from 2,2-dimethylol propionic acid, polyether-ester carbonates, natural oil polyols, alkanols such as pentaerithrytol, trimethylolpropane, trimethylolethane, phenols and sugars such as sorbitol, with average functionalities of 2-8 and hydroxyl values of 20-2000 mgKOH/g such as 20-1000 or 500 mgKOH/g.

**Prepolymers**

The rigid foams of the present invention may be made from a prepolymer. The prepolymer may be made by any suitable means, for example, it may be made by the reaction between the polyethercarbonate polyol copolymer of the invention and/or another polyol and an isocyanate with at least >1 mole of isocyanate groups per mole OH group. A second

polyol, which can be the polyethercarbonate polyol copolymer of the invention may then be added to carry out the foaming process.

It is also possible to make a rigid foam directly from the pre-polymer without use of another polyol.

## Rigid Foam

A rigid foam herein may be taken to mean a generally (at least 50%) closed cell polyurethane and/or polyisocyanurate rigid foam.

Alternatively, or additionally, a rigid foam may be defined as a generally cross-linked polymer network formed by reaction between polyisocyanates and polyols, wherein cross linking is introduced either by high functionality polyols (functionality >2), higher functionality polyisocyanates (functionality >2) and/or by cross-linking reactions of polyisocyanates, such as the trimerization reaction to form isocyanurates. Rigidity is preferably imparted by relatively short distances between cross-links, which generally requires relatively low molecular weight polyols. Generally, polyols suitable for rigid foams of the invention have a molecular weight less than 5000 g/mol. More typically, polyols suitable for rigid foams of the invention have a molecular weight less than 1500 g/mol. Still more typically, polyols suitable for rigid foam formation of the invention have a molecular weight less than 1000 g/mol. Preferably, polyols suitable for rigid foam formation of the invention have a molecular weight less than 800 g/mol.

A rigid foam herein may be one which when compressed or elongated to greater than or equal to 20 % deflection based on its original dimension, will not return to its original dimension. More typically, a rigid foam herein may be one which when compressed or elongated to greater than or equal to 10 % deflection based on its original dimension, will not return to its original dimension. A rigid foam herein typically has the majority (>50 %) of its cell structure as closed cell.

Acccording to a further aspect of the present invention there is provided a rigid foam as defined herein wherein the flammability according to ASTM D3014 is in the range 40-100% of mass retained.

Typically, the flammability is >75 % mass retained with burn out time < 30 s according to the Butler chimney test.

The skilled person will appreciate that polyisocyanurates are crosslinked as a result of a trimerisation reaction. When the rigid foam is a polyisocyanurate it is therefore generally produced using a trimerisation catalyst in addition to a polyurethane production catalyst in the reaction of the (poly)isocyanate and the polyol copolymer.

It is typical to increase isocyanate content in the foam to lower the flammability thereof. However, high isocyanate foams are not necessarily desirable. Isocyanates are highly toxic and expensive. The rigid foam of the present invention may alternatively have lower isocyanate content than a traditional formulation whilst providing the same flammability performance.

Accordingly, the invention extends to a rigid polyurethane foam according to the first aspect of the present invention having a flammability less than 20% mass lost and an isocyanate content of 30-99 wt%, preferably 40-90 wt%, more preferably 50-80 wt%.

Alternatively, the invention can be utilised to produce rigid polyurethane foams which have the same or similar flame retardancy as foams produced by benchmark polyols but with a reduced isocyanate content as set out above.

Typically, the rigid foam of the present invention has a compression strength in the range 10-700 kPa. more typically, 100-700kPa.

Typically, the rigid foam of the present invention has a density in the range 5-80 $kg/m^3$.

Typically, the rigid foam advantageously has a mass retention on burning of greater than 40 %, more typically, greater than 70%, most typically, greater than 80 %.

The invention can be utilised to produce a foam which has a lower total heat release and rate of heat release than those produced by traditional polyols, meaning in the case of a fire the foam contributes less to the development of the fire. Furthermore, the foams produce significantly less smoke than benchmark polyols and reduce the emissions of toxic gases like CO and $CO_2$ significantly during a fire.

## (Poly)isocyanates

The rigid foams of the present invention comprise (poly)isocyanate reaction products with polyols. These (poly) isocyanates are effective to react with the polyethercarbonate polyols to form the rigid foams of the invention.

Suitable (poly)isocyanates will be known to those skilled in the art of rigid foam production.

Typically, the (poly)isocyanate comprises two or more isocyanate groups per molecule. Preferably, the (poly) isocyanates are diisocyanates. However, the (poly)isocyanates may be higher (poly)isocyanates such as triisocyanates, tetraisocyanates, isocyanate polymers or oligomers, and the like. The (poly)isocyanates may be aliphatic (poly)isocyanates or derivatives or oligomers of aliphatic (poly)isocyanates or may be aromatic (poly)isocyanates or derivatives or oligomers of aromatic (poly)isocyanates. The rigid foams may comprise the reaction products of any two or more of the above types of isocyanates. Typically, the (poly)isocyanate component used in the rigid foam production of the present invention has a functionality of 2 or more. In some embodiments, the (poly)isocyanate component comprises a mixture of

diisocyanates and higher isocyanates formulated to achieve a particular functionality number for a given application.

In some embodiments, the (poly)isocyanate employed has a functionality greater than 2. In some embodiments, such (poly)isocyanates have a functionality between 2 to 5, more typically, 2-4, most typically, 2-3.

Suitable (poly)isocyanates may be used including aromatic, aliphatic and cycloaliphatic polyisocyanates and combinations thereof. Such polyisocyanates may be selected from the group consisting of: 1,3-Bis(isocyanatomethyl) benzene, 1,3-Bis(isocyanatomethyl)cyclohexane (H6-XDI), 1,4-cyclohexyl diisocyanate, 1,2-cyclohexyl diisocyanate, 1,4-phenylene diisocyanate, 1,3-phenylene diisocyanate, 1,4-tetramethylene diisocyanate, 1,6-hexamethylene diisocyanate, 1,6-hexamethylaminediisocyanate (HDI), isophorone diisocyanate (IPDI), 2,4-toluene diisocyanate (TDI), 2,4,4-trimethylhexamethylene diisocyanate (TMDI), 2,6-toluene diisocyanate (TDI), 4,4' methylene-bis(cyclohexyl isocyanate) (H12MDI), naphthalene-1,5-diisocyanate, diphenylmethane-2,4'-diisocyanate (MDI), diphenylmethane-4,4'-diisocyanate (MDI), triphenylmethane-4,4',4"triisocyanate, isocyanatomethyl-1,8-octane diisocyanate (TIN), m-tetramethylxylylene diisocyanate (TMXDI), p-tetramethylxylylene diisocyanate (TMXDI), Tris(p-isocyanatomethyl)thiosulfate, trimethylhexane diisocyanate, , lysine diisocyanate, m-xylylene diisocyanate (XDI), p-xylylene diisocyanate (XDI), 1,3,5-hexamethyl mesitylene triisocyanate, 1-methoxyphenyl-2,4-diisocyanate, toluene-2,4,6-triisocyanate, 4,4'-biphenylene diisocyanate, 3,3'-dimethyl-4,4'-diphenyl diisocyanate, 4,4'-dimethyldiphenyl methane-2,2',5,5'-tetraisocyanate and mixtures of any two or more of these. In addition, the (poly)isocyanates may be selected from polymeric version of any of these isocyanates, these may have high or low functionality. Preferred polymeric isocyanates may be selected from MDI, TDI, and polymeric MDI.

Any of the foregoing isocyanates listed can be modified by oligomerisation or prepolymerisation (with any of the polyols listed) where urethane, urea, biuret, allophanate, carbodiimide, uretonimine, isocyanurate, amide, and others are included to impart, for instance, "liquidity" and "low temperature stable liquid".

Another aspect of modification of the isocyanate used is the formation of prepolymers that are isocyanate terminated. In this case, any of the above isocyanates may be reacted with a polyol or amine terminated compound to give an isocyanate excess product that may confer properties such as "flexibilisation" or "toughness" to the rigid foam. The H-active compound used to make these prepolymers can be, for instance, hydroxyl-functional polybutadienes, amine terminated polyethers, or "polymer" polyols which contain a dispersion of polymer particles, such as polyurea, polystyrene, polyacrylonitrile, polystyrene-co-acrylonitrile.

Typically, in the present invention an excess of isocyanate, more typically, an excess of polymeric isocyanate relative to polyol is used so that polyisocyanurate ring formation in the presence of trimerisation catalyst is possible.

To make available enough isocyanate to get the desired proportion of isocyanurate in the final product, isocyanate indexes of from 115 to 600 are used which is a stoichiometric measure of the excess of isocyanate groups to hydroxyl groups present in the formulation.

**Catalysts**

Typically, the mixtures which produce rigid foams of the present invention contain one or more catalysts. Any suitable urethane catalyst may be used, including tertiary amine compounds and organometallic compounds. Examples of tertiary amine compounds include N-alkylmorpholines, N-alkylalkanolamines, N,N-dialkylcyclohexyldiamine and alkyl amines. Typical examples of these include trimethylamine, triethylamine, tripropylamine, tributylamine, tripentylamine, trihexylamine, pyridine, quinoline, nicotine, dimethylethanolamine, N-methylmorpholine, N-ethylmorpholine, N-cocomorpholine, N-methyltriazabicyclodecene (MTBD), N,N-dimethylaminopropyl dipropylamine, N,N-dimethylcyclohexylamine, N,N-dimethyl-N',N'-dimethyl isopropylpropylenediamine, N,N-diethylethanolamine, N,N-diethyl-3-diethylaminopropylamine, N,N-dimethylaminomethyl-N-methylethanolamine, N,N'-dimethylbenzylamine, triethylenediamine, tetramethylethylenediamine, pentamethyldiethylenetriamine, N-methylpiperazine, N,N-dimethylaniline, N,N-dimethylpiperazine, N,N,N,N - tetramethyl-1,3-propanediamine, N,N,N,N - tetramethyl-1,4-butanediamine, N,N,N',N'-tetramethyl hexanediamine, 1-methyl-4-dimethylaminoethylpiperazine, methyl-hydroxyethyl piperazine, 1,2-ethylene piperidine, N,N-dimorpholinodiethylether, N-methyl imidazole, 1,4-diazabicyclo[2.2.2]octane (DABCO), 1,5-diazabicyclo-[4.3.0]nonene-5 (DBN), 1,8-Diazabicyclo-[5.4.0]undecene-7 (DBU), triazabicyclodecene (TBD) and 3-methoxy-N-dimethylpropylamine.

Tertiary amines may be selected from the group consisting of: 2,2'-bis(dimethylamino ethyl ether) (BDMAEE), N,N,N'-trimethyl-N'-(2-hydroxyethyl)bis(2-aminoethyl)ether, DABCO, DBU, DBU phenol salt, N,N-dimethylcyclohexylamine, 1,3,5-tris(3-dimethylaminopropyl)hexahydro-s-triazine, 2,4,6-tris(N,N-dimethylaminomethyl)phenol (TMR-30), pentamethyldipropylenetriamine, N,N,N',N",N"-pentamethyldiethylenetriamine, N,N,N',N",N"-pentamethyldipropylenetriamine, triethylene diamine, N-ethylmorpholine, N-methylimidazole, N,N-dimethylpiperazine, N-(3-aminopropyl)imidazole, 2,2'-dimorpholinodiethylether, dimorpholinopolyethylene glycol, N,N-dimethylhexadecylamine, dimethylethanolamine and 2-hydroxypropyltrimethylammonium formate and combinations or formulations of any of these.

Tertiary amine catalysts may be used in the form of tertiary ammonium salts, such as those formed with an organic acid such as formic acid, cyanoacetic acid, sebacic acid, adipic acid or acetic acid.

Organic catalysts may be functionalised with isocyanate reactive groups such as urea, amino, amido or hydroxyl

groups to incorporate the catalysts into the polymer network, in order to prevent their release as volatile organic compounds (VOCs).

Typically, organometallic catalysts include salts of iron, lead, mercury, bismuth, zinc, titanium, zirconium, cobalt, aluminium, uranium, cadmium, nickel, cesium, molybdenum, vanadium, copper, manganese and tin. More typically, the invention utilises one or more organometallic catalysts selected from stannous chloride, tin, bismuth and zinc salts of carboxylic acids such as dibutyltin dilaurate, dimethyltin dilaurate, dibutyltin diacetate, tin oleate, tin glycolate, di-n-butylbis(laurylthio)tin, tin octanoate, dibutyltinbis(isooctylmaleate), zinc acetate, zinc neodecanoate, bismuth acetate, bismuth neodecanoate, and dibutyltinbis(isooctylmercapto acetate), nickel acetylacetonate, iron acetylacetonate, copper acetylacetonate, ferric chloride, ferrous chloride, antimony trichloride, antimony glycolate, lead 2-ethylhexanoate, bismuth nitrate and potassium acetate.

Organometallic catalysts may be anchored on a solid support, such as a polymeric support or metal oxide support.

Typical amounts of catalyst are 0.0001 to 1 parts of catalyst per 100 parts by weight of total composition. Typically, catalyst levels in the formulation, when used, range between about 0.01 and about 0.1.

## Trimerisation Catalysts

The rigid foams of the present invention may be or may include polyisocyanurates via the trimerisation reaction. Suitable catalysts for the trimerisation reaction include tertiary amines, alkali metal carboxylates, quaternary ammonium salts, combinations of tertiary amines and epoxides. Such catalysts are used in an amount which promotes (poly) isocyanurate formation. Suitable tertiary amine catalysts include 1,3,5-tris(dialkylaminoalkyl) hexahydrotriazines such as 1,3,5-tris(dimethylaminopropyl) hexahydrotriazine, 1,3,5-trialkyl hexahydrotriazines such as 1,3,5-tripropyl hexahydrotriazine, 2,4,6-tris(dimethylaminomethyl) phenols such as 2,4,6-tris(dimethylaminomethyl) phenol and diaminobicyclooctane. Suitable alkali metal carboxylate catalysts include potassium acetate and potassium octanoate. Suitable quaternary ammonium salts include salts of the structure $(NR_4)_yA$ where:

A is an anion derived from an acid having a pK value (wherein pK is the negative log of the dissociation constant), in aqueous solution at substantially room temperature, of 2.0 or greater and being free of substituents which can react with isocyanates under conditions of trimerization and being selected from the group consisting of inorganic oxygen acids, carboxylic acids and carbonic acid.

Each R is any organic group other than A and free of any substituents and functional groups which can react with isocyanates under conditions of trimerization, no more than one R per N containing an aromatic ring attached directly to N, and y is a whole number equal in value to the valence of A.

Examples of such quaternary ammonium salts include trimethylammonium formate, tetramethyl ammonium carbonate, tetramethylammonium 2-ethyl hexanoate, tetramethyl ammonium chloroacetate, tetramethyl octanoate, tetramethyl ammonium dibutylphosphate.

Suitable tertiary amines for use with epoxides include DABCO (diethylene triamine), tetramethyl ethylenediamine, pentamethyl diethylene triamine, triethylene diamine and hexamethyl triethylene tetramine.

Any of these catalysts may be used in conjunction with one or more other trimerization catalysts, for example using tertiary ammonium salts such as 2,4,6-tris(dimethylaminomethyl) phenol in conjunction with alkali metal salts such as potassium acetate or potassium octanoate, or two alkali metal salts such as potassium acetate and potassium octanoate may be used together.

It is understood that the choice of catalysts and trimerisation catalysts can be used to tune various properties of the foam and foam formation, including polyol reactivity, cure time, ratio of urethane/isocyanurate linkages, density, compression strength, cell structure, flammability, dimensional stability and thermal conductivity among others.

## Blowing Agents

The invention typically utilises one or more blowing agents to produce rigid foams. Blowing agents may be selected from chemical blowing agents or physical blowing agents. Chemical blowing agents typically react with (poly) isocyanate components and liberate volatile compounds such as $CO_2$. Physical blowing agents typically vaporize during the formation of the foam due to their low boiling points. Suitable blowing agents will be known to those skilled in the art of rigid foam production, and the amounts of blowing agent added can be a matter of routine experimentation. One or more physical blowing agents may be used or one or more chemical blowing agents may be used, in addition one or more physical blowing agents may be used in conjunction with one or more chemical blowing agents.

Chemical blowing agents include water and formic acid. Both react with a portion of the (poly)isocyanate producing carbon dioxide which can function as the blowing agent Alternatively, carbon dioxide may be used directly as a blowing agent, this has the advantage of avoiding side reactions and lowering urea crosslink formation, if desired. Water may be used in conjunction with other blowing agents or on its own.

Typically, physical blowing agents for use in the current invention may be selected from acetone, carbon dioxide, optionally substituted hydrocarbons, and chloro/fluorocarbons. Chloro/fluorocarbons include hydrochlorofluorocarbons, chlorofluorocarbons, fluorocarbons and chlorocarbons. Fluorocarbon blowing agents are typically selected from the group consisting of: difluoromethane, trifluoromethane, fluoroethane, 1,1-difluoroethane, 1,1,1-trifluoroethane, tetrafluoroethanes difluorochloroethane, dichloromono-fluoromethane, 1,1-dichloro-1-fluoroethane, 1,1-difluoro-1,2,2-trichloroethane, chloropentafluoroethane, tetrafluoropropanes, pentafluoropropanes, hexafluoropropanes, heptafluoropropanes, pentafluorobutanes.

With the evolution of olefin blowing agents with excellent environmental properties, any of the following may be incorporated in foam systems, namely trans-1-chloro-3.3.3-trifluoropropene (LBA), trans-1,3,3,3-tetrafluoro-prop-1-ene (HFO-1234ze), 2,3,3,3-tetrafluoro-propene (HFO-1234yf), cis-1,1,1,4,4,4-hexafluoro-2-butene (HFO-1336mzz).

Typically, non-halogenated hydrocarbons for use as physical blowing agents may be selected from butane, isobutane, 2,3-dimethylbutane, n- and i-pentane isomers, hexane isomers, heptane isomers and cycloalkanes including cyclopentane, cyclohexane and cycloheptane. More typically, non-halogenated hydrocarbons for use as physical blowing agents may be selected from cyclopentane, iso-pentane and n-pentane.

Typically, where one or more blowing agents are present, they are used in an amount of from about 0 to about 10 parts, more typically 2-6 parts of the total formulation. Where water is used in conjunction with another blowing agent the ratio of the two blowing agents can vary widely, e.g. from 1 to 99 parts by weight of water in total blowing agent, preferably, 25 to 99+ parts by weight water.

Typical aromatic polyester polyols are known to be poorly miscible with some conventional blowing agents and in particular with physical blowing agents. Rigid foams are typically formed in a two-pot process wherein the polyol is first mixed with a blowing agent in "pot A" prior to mixing with the isocyanate comprising component known as "pot B". With typical aromatic polyester polyols the mixing of the polyol with the blowing agent to form pot A of the two part formulation is difficult. The resulting mixtures have high and even increased viscosity making processing difficult, Surprisingly, the polyols of the invention have been found to have good miscibility with conventional blowing agents as demonstrated by the low viscosity of the resultant mixtures.

Thus according to a further aspect of the invention there is provided a composition forming one part of a two part composition for producing a rigid foam, said composition comprising a polyethercarbonate polyol copolymer and a blowing agent, wherein the polyethercarbonate polyol copolymer is derived from the copolymerisation of one or more epoxides with $CO_2$, wherein the total-$CO_2$- content of the polyethercarbonate polyol copolymer is between 1 and 40wt%, the carbonate linkages are <95% of the total linkages from the copolymerisation, and the molecular weight is between 100 to 5000 g/mol, and wherein the blowing agent is a hydrocarbon, preferably selected from the group comprising butane, isobutane, 2,3-dimethylbutane, n- and iso-pentane isomers, hexane isomers, heptane isomers and cycloalkanes including cyclopentane, cyclohexane and cycloheptane, more preferably from the group comprising cyclopentane, iso-pentane, n-pentane, hexane and heptane.

Preferably the blowing agent is selected from cyclopentane, iso-pentane, n-pentane. More preferably the blowing agent is n-pentane.

### Additives

In addition to the above components, mixtures may optionally contain various additives as are known in the art of rigid foam technology. In addition to blowing agents, water and catalysts, such additives may include, but are not limited to compatibilisers, colorants, surfactants, flame retardants, antistatic compounds, antimicrobials, UV stabilizers, plasticizers, cell openers, chain extenders, anti-scorch agents, viscosity modifiers, curing agents and crosslinkers

### Colorants

Typically, mixtures which produce rigid foams may comprise of one or more suitable colorants. Typical colorants are known in the art but may be selected from chromium oxide, iron oxide, titanium dioxide, azo dyes, diazo dyes, dioxazines, phthalocyanines and carbon black.

### UV Stabilizers

Typically, mixtures which produce rigid foams may comprise of one or more suitable UV stabilizers. Typical UV stabilisers for use in the present invention may be selected from benzotriazoles, hydroxybenzotriazoles, benzophenones, hydroxybenzophenones, phosphites, 2,6-ditertiary butylcatechol, zinc dibutyl thiocarbamate, hindered amines, Tinuvin® B 75, Tinuvin® 571, Tinuvin® 213 and Uvinul® 3039.

**Flame Retardants**

The rigid foams of the present invention may comprise one or more suitable flame retardants. Typical flame retardants will be known to those skilled in the art of rigid foam production and may be selected from phosphonamidates, 9,10-dihydro-9-oxa-phosphaphenanthrene-10-oxide (DOPO), chlorinated phosphate esters, Tris(2-chloroisopropyl) phosphate (TCPP), Triethyl phosphate (TEP), tris(chloroethyl) phosphate, tris(2,3-dibromopropyl) phosphate, 2,2-bis(chloromethyl)-1,3-propylene bis(di(2-chloroethyl) phosphate), tris(1,3-dichloropropyl) phosphate, tetrakis(2-chloroethyl) ethylene diphosphate, tricresyl phosphate, cresyl diphenyl phosphate, diammonium phosphate, melamine, melamine pyrophosphate, urea phosphate, alumina, boric acid, various halogenated compounds, antimony oxide, chlorendic acid derivatives, phosphorus containing polyols, bromine containing polyols, nitrogen containing polyols, and chlorinated paraffins.

Flame retardants may be present in amounts from 0-60 parts of the total mixture.

**Antimicrobial Agents**

Typical antimicrobial agents may be selected from isothiazolone, zinc pyrithione, N-butyl-1,2-benzisothiazolin-3-one, zinc 2-pyridine-thiol-1-oxide, zinc compounds, copper compounds and silver compounds.

**Plasticizers**

Typical plasticisers may be selected from succinate esters, adipate esters, phthalate esters, diisooctylphthalate (DIOP), benzoate esters and N,N-bis(2-hydroxyethyl)-2-aminoethane sulfonic acid (BES).

**Surfactants**

Typical surfactants are known to those skilled in the art and may be selected from silicone surfactants, polyether-silicone block copolymers (polysiloxane polyalkylene oxide block copolymers), polydimethylsiloxane and alkylene oxide adducts of aniline, which can be used as polyols or surfactants.

Examples of suitable surfactants include amine and alkali metal salts of fatty acids. They include sodium oleate, sodium stearate, diethanolamine oleate, diethanolamine stearate, diethanolamine ricinoleate. Sulphonic acid derivatives may also be used, including sodium dodecylbenzenesulphonate.

Examples of commercially available organosilicone surfactants include Tegostab B8707, DC193, L-520 and L-521.

**Cell-Openers**

Typical cell-openers in the art of rigid foam production are known in the art and may be selected from finely divided solids, liquid perfluocarbons, long-chain fatty acids, silicone-based cell-openers, dimethyl siloxane, waxes, paraffin oils and certain polyether polyols made using high concentrations of ethylene oxide.

**Antistatic Agents**

Typical antistatic agents may be selected from carboxylic acid salts, quaternary ammonium salts, ionizable metal salts and phosphate esters.

**Compatibilizers**

Typical compatibilizers will be known to those skilled in the art of rigid foam production. Typically, compatibilizers may be selected from amides, (poly)amines, tertiary amines, hydrocarbon oils, phthalates, polybutyleneglycols, and ureas.

**Viscosity modifiers**

Suitable materials are generally low molecular weight polar materials which break up hydrogen bonding and thereby increase resin "flow" by reducing viscosity in the pre-cure stage. Examples of such polar materials are propylene carbonate and ethylene carbonate. These additives may be used in amounts from 1 to 30 weight percent based on the weight of polyol.

**Chain Extenders, Curing Agents and Crosslinkers**

Typical chain extenders, curing agents and crosslinkers are low-molecular weight alcohols or amines, generally less than 1500 g/mol, typically less than 1000 g/mol. Chain extenders may also include carboxylic acid or thiol groups, or any combination of isocyanate reactive groups. Typically, mixtures which produce rigid foams may comprise water, and/or one or more glycols and/or one or more amines. Typically, glycols are selected from monoethyleneglycol (MEG), diethylene glycol (DEG), monopropylene glycol (MPG), dipropylene glycol (DPG), 1,3-propanediol, 1,4-butane-diol (BDO), 1,5-pentanediol, 2-methyl,-1,5-pentanediol, 2-methyl-1,3-propane-diol (MP-diol), 1,6-hexanediol, 1,8-octanediol, neopentyl glycol, cyclohexanedimethanol, glycerol, trimethylolpropane (TMP), trimethylolhexane, 2-(hydroxymethyl)-1,3-propanediol, 1,2,6-hexanetriol, 1,2,4-butanetriol, trimethylolethane, pentaerythritol, dipentaerythritol, di-TMP, Mannitol, sorbitol, methyl glucoside, triethylene glycol, tetraethylene glycol, tripropylene glycol, dipropylene glycol (DPG), and diethanolamine (DEOA).

Typically, amines are selected from, ethylene diamine (EDA), propylene diamine, butylene diamine, isophorone diamine (IPDA), diethyltoluene diamine (DETDA), dimethylthiotoluene diamine (DMTDA), Hexamethylenediamine (HMDA), and amine terminated polyethers prepared by aminating terminal hydroxyl groups such as polyetheramine D230 (Jeffamine), polyetheramine D400 (Jeffamine) and polyetheramine D2000 (Jeffamine).

Typical chain extenders including one or more different functional groups include dimethylolpropionic acid (DMPA), dimethylolbutanoic acid (DMBA), tartaric acid, diethanolamine, diisopropanolamine, dipropanolamine, N-methyldiethanolamine, 3-dimethylaminopropane-1,2-diol and N-methyldiisopropanolamine.

**Catalysts for Polyol**

The polyols of the present invention may be prepared from a suitable epoxide and carbon dioxide in the presence of a suitable catalyst system such as a catalyst of formula (I) or formula (II), a double metal cyanide (DMC) catalyst and a starter compound. Such a catalyst system has been defined in, for example, WO2017/037441.

A suitable catalyst of formula (I) is as follows:

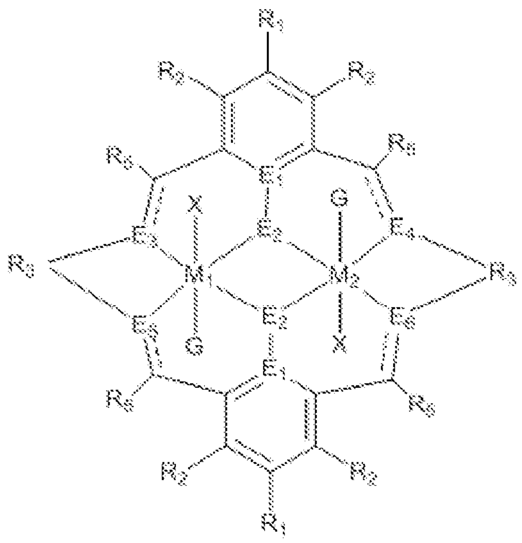

(I)

wherein:

$M_1$ and $M_2$ are independently selected from Zn(II), Cr(II), Co(II), Cu(II), Mn(II), Mg(II), Ni(II), Fe(II), Ti(II), V(II), Cr(III)-X, Co(III)-X, Mn(III)-X, Ni(III)-X, Fe(III)-X, Ca(II), Ge(II), Al(III)-X, Ti(III)-X, V(III)-X, Ge(IV)-$(X)_2$ or Ti(IV)-$(X)_2$;

$R_1$ and $R_2$ are independently selected from hydrogen, halide, a nitro group, a nitrile group, an imine, an amine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group;

$R_3$ is independently selected from optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or

heteroalicyclic;

$R_5$ is independently selected from H, or optionally substituted aliphatic, heteroaliphatic, alicyclic, heteroalicyclic, aryl, heteroaryl, alkylheteroaryl or alkylaryl;

$E_1$ is C, $E_2$ is O, S or NH or $E_1$ is N and $E_2$ is O;

$E_3$, $E_4$, $E_5$ and $E_6$ are selected from N, $NR_4$, O and S, wherein when $E_3$, $E_4$, $E_3$ or $E_6$ are N, ------ is ═══════, and wherein when $E_3$, $E_4$, $E_3$ or $E_6$ are $NR_4$, O or S, ------ is ————; $R_4$ is independently selected from H, or optionally substituted aliphatic, heteroaliphatic, alicyclic, heteroalicyclic, aryl, heteroaryl, alkylheteroaryl, -alkylC(O)$OR_{19}$ or -alkylC≡N or alkylaryl;

X is independently selected from $OC(O)R^x$, $OSO_2R$ , $OSOR^x$, $OSO(R^x)_2$, $S(O)R^x$, $OR^x$, phosphinate, halide, nitrate, hydroxyl, carbonate, amino, amido or optionally substituted aliphatic, heteroaliphatic, alicyclic, heteroalicyclic, aryl or heteroaryl, wherein each X may be the same or different and wherein X may form a bridge between $M_1$ and $M_2$;

$R_x$ is independently hydrogen, or optionally substituted aliphatic, haloaliphatic, heteroaliphatic, alicyclic, heteroalicyclic, aryl, alkylaryl or heteroaryl; and

G is absent or independently selected from a neutral or anionic donor ligand which is a Lewis base.

The DMC catalyst comprises at least two metal centres and cyanide ligands. The DMC catalyst may additionally comprise at least one of: one or more organic complexing agents, water, a metal salt and/or an acid (e.g. in non-stoichiometric amounts).

For example, the DMC catalyst may comprise:

$$m'_d[M''_e(CN)_f]_g$$

wherein M' is selected from Zn(II), Ru(II), Ru(III), Fe(II), Ni(II), Mn(II), Co(II), Sn(II), Pb(II), Fe(III), Mo(IV), Mo(VI), Al(III), V(V), V(VI), Sr(II), W(IV), W(VI), Cu(II), and Cr(III),

M" is selected from Fe(II), Fe(III), Co(II), Co(III), Cr(II), Cr(III), Mn(II), Mn(III), Ir(III), Ni(II), Rh(III), Ru(II), V(IV), and V(V); and

d, e, f and g are integers, and are chosen to such that the DMC catalyst has electroneutrality.

In preferred embodiments, the polyol is produced using a DMC catalyst that contains at least two metal centres, cyanide ligands, a first complexing agent and a second complexing agent, wherein the first complexing agent is a polymer.

The polymer may be selected from a polyether, a polycarbonate ether, and a polycarbonate.

Typically, when the polymer is a polyether it may be a polypropylene glycol (PPG) or polyethylene glycol (PEG), e.g. a PPG or PEG polyol, preferably wherein the PPG or PEG has a molecular weight of from about 250 g/mol to about 8,000 g/mol, more preferably of from about 400 g/mol to about 4,000 g/mol.

Alternative catalysts to that of formula (I) is the catalyst of formula (II) as follows:

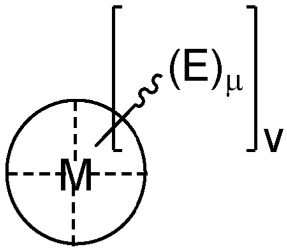

(II)

wherein:

M is a metal cation represented by M-$(L)_{V'}$;

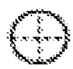

is a multidentate ligand (e.g. it may be either (i) a tetradentate ligand, or (ii) two bidentate ligands);

$(E)_\mu$ represents one or more activating groups attached to the ligand(s), where is a linker group covalently bonded to the ligand, each E is an activating functional group; and $\mu$ is an integer from 1 to 4 representing the number of E groups present on an individual linker group;

L is a coordinating ligand, for example, L may be a neutral ligand, or an anionic ligand that is capable of ring-opening an

epoxide;
v is an integer from 0 to 4; and
v' is an integer that satisfies the valency of M such that complex represented by formula (II) above has an overall neutral charge. For example, v' may be 0, 1 or 2, e.g. v' may be 1 or 2.
If v' is 0 or if v' is a positive integer and each L is a neutral ligand, v is an integer from 1 to 4.

## Method

According to a further aspect of the present invention there is provided a method of producing a rigid foam comprising the reaction product of a (poly)isocyanate, and a polyethercarbonate polyol copolymer comprising the steps of: reacting a (poly)isocyanate with a polyethercarbonate polyol copolymer, in the presence of a suitable catalyst for polyurethane production, and optionally in the presence of a trimerisation catalyst for polyisocyanurate production, under conditions that will produce a rigid foam, wherein the polyethercarbonate polyol copolymer is derived from the copolymerisation of one or more epoxides with $CO_2$, wherein the total $-CO_2-$ content of the copolymer is between 1 and 40wt%, the carbonate linkages are <95% of the total linkages from the copolymerisation and the molecular weight is between 100 to 5000 g/mol.

## Reaction Conditions

Typically, the reaction is carried out at an isocyanate index of at least 220, more typically, of at least 240 such as 250 or 300. The isocyanate index for the reaction may be in the range 100 to 800. Typically, the isocyanate index for the reaction may be in the range 200-350.
Typically, the initial reaction temperatures during the polyol/isocyanate reaction are between 0 and 200 °C, more typically between 60 - 100 °C.
Typically, the temperatures during the trimerisation reaction are between 20 and 200 °C, more typically between 60 - 140 °C.
The polyurethane and/or trimerization reaction may cause an exotherm which increases the internal temperature of the foam up to 250 °C.

## Applications

The rigid foams of the present invention accordingly include rigid PIR and PUR foams. The foams may be of the following types: boardstock including rigid faced panels, flexible faced panels, unfaced panels, SIPS panels; pour in place; one component foam: spray foam; and pipe-in-pipe. Applications of the rigid foams of the present invention include insulation for walls (including cavity and external facing), roof insulation, floor insulation, pipe insulation, marine insulation, automotive and transport, expansion filling and electrical applications.

## Definitions

For the purpose of the present invention, an aliphatic group is a hydrocarbon moiety that may be straight chain or branched and may be completely saturated, or contain one or more units of unsaturation, but which is not aromatic. The term "unsaturated" means a moiety that has one or more double and/or triple bonds. The term "aliphatic" is therefore intended to encompass alkyl, alkenyl or alkynyl groups, including multivalent equivalents such as alkylene, alkenylene and alkynylene, and combinations thereof. An aliphatic group is preferably a $C_{1-20}$ aliphatic group, that is, an aliphatic group with 1, 2, 3, 4, 5, 6, 7, 8, 9, 10, 11, 12, 13, 14, 15, 16, 17, 18, 19 or 20 carbon atoms. Preferably, an aliphatic group is a $C_{1-15}$aliphatic, more preferably a $C_{1-12}$aliphatic, more preferably a $C_{1-10}$aliphatic, even more preferably a $C_{1-8}$aliphatic, such as a $C_{1-6}$aliphatic group.
An alkyl group is preferably a "$C_{1-20}$ alkyl group", that is an alkyl group that is a straight or branched chain with 1 to 20 carbons. The alkyl group therefore has 1, 2, 3, 4, 5, 6, 7, 8, 9, 10, 11, 12, 13, 14, 15, 16, 17, 18, 19 or 20 carbon atoms. Preferably, an alkyl group is a $C_{1-15}$ alkyl, preferably a $C_{1-12}$ alkyl, more preferably a $C_{1-10}$ alkyl, even more preferably a $C_{1-8}$ alkyl, even more preferably a $C_{1-6}$ alkyl group. Specifically, examples of "$C_{1-20}$ alkyl group" include methyl group, ethyl group, n-propyl group, iso-propyl group, n-butyl group, iso-butyl group, sec-butyl group, tert-butyl group, n-pentyl group, n-hexyl group, n-heptyl group, n-octyl group, n-nonyl group, n-decyl group, n-undecyl group, n-dodecyl group, n-tridecyl group, n-tetradecyl group, n-pentadecyl group, n-hexadecyl group, n-heptadecyl group, n-octadecyl group, n-nonadecyl group, n-eicosyl group, 1,1-dimethylpropyl group, 1,2-dimethylpropyl group, 2,2-dimethylpropyl group, 1-ethylpropyl group, n-hexyl group, 1-ethyl-2-methylpropyl group, 1,1,2-trimethylpropyl group, 1-ethylbutyl group, 1-methylbutyl group, 2-methylbutyl group, 1,1-dimethylbutyl group, 1,2-dimethylbutyl group, 2,2-dimethylbutyl group, 1,3-dimethylbutyl group, 2,3-dimethylbutyl group, 2-ethylbutyl group, 2-methylpentyl group, 3-methylpentyl group and the like.

Alkenyl and alkynyl groups are preferably "$C_{2-20}$alkenyl" and "$C_{2-20}$alkynyl", more preferably "$C_{2-15}$ alkenyl" and "$C_{2-15}$ alkynyl", even more preferably "$C_{2-12}$ alkenyl" and "$C_{2-12}$ alkynyl", even more preferably "$C_{2-10}$ alkenyl" and "$C_{2-10}$ alkynyl", even more preferably "$C_{2-8}$ alkenyl" and "$C_{2-8}$ alkynyl", most preferably "$C_{2-6}$ alkenyl" and "$C_{2-6}$ alkynyl" groups, respectively.

Alkylene is divalent but otherwise defined as an Alkyl group above. Likewise, alkenylene and alkynylene are defined as divalent equivalents of alkenyl and alkynyl above.

A heteroaliphatic group (including heteroalkyl, heteroalkenyl and heteroalkynyl) is an aliphatic group as described above, which additionally contains one or more heteroatoms. Heteroaliphatic groups therefore preferably contain from 2 to 21 atoms, preferably from 2 to 16 atoms, more preferably from 2 to 13 atoms, more preferably from 2 to 11 atoms, more preferably from 2 to 9 atoms, even more preferably from 2 to 7 atoms, wherein at least one atom is a carbon atom. Particularly preferred heteroatoms are selected from O, S, N, P and Si. When heteroaliphatic groups have two or more heteroatoms, the heteroatoms may be the same or different.

Heteroalkylene is divalent but otherwise defined as a heteroalkyl group above. Likewise, heteroalkenylene and heteroalkynylene are defined as divalent equivalents of heteroalkenyl and heteroalkynyl above.

An alicyclic group is a saturated or partially unsaturated cyclic aliphatic monocyclic or polycyclic (including fused, bridging and spiro-fused) ring system which has from 3 to 20 carbon atoms, that is an alicyclic group with 3, 4, 5, 6, 7, 8, 9, 10, 11, 12, 13, 14, 15, 16, 17, 18, 19 or 20 carbon atoms. Preferably, an alicyclic group has from 3 to 15, more preferably from 3 to 12, even more preferably from 3 to 10, even more preferably from 3 to 8 carbon atoms, even more preferably from 3 to 6 carbons atoms. The term "alicyclic" encompasses cycloalkyl, cycloalkenyl and cycloalkynyl groups. It will be appreciated that the alicyclic group may comprise an alicyclic ring bearing one or more linking or non-linking alkyl substituents, such as $-CH_2$-cyclohexyl. Specifically, examples of the $C_{3-20}$ cycloalkyl group include cyclopropyl, cyclobutyl, cyclopentyl, cyclohexyl, cycloheptyl, adamantyl and cyclooctyl.

A heteroalicyclic group (including heterocycloalkyl) is an alicyclic group as defined above which has, in addition to carbon atoms, one or more ring heteroatoms, which are preferably selected from O, S, N, P and Si. Heteroalicyclic groups preferably contain from one to four heteroatoms, which may be the same or different. Heteroalicyclic groups preferably contain from 5 to 20 atoms, more preferably from 5 to 14 atoms, even more preferably from 5 to 12 atoms.

An aryl group is a monocyclic or polycyclic ring system having from 5 to 20 carbon atoms. An aryl group is preferably a "$C_{6-12}$ aryl group" and is an aryl group constituted by 6, 7, 8, 9, 10, 11 or 12 carbon atoms and includes condensed ring groups such as monocyclic ring group, or bicyclic ring group and the like. Specifically, examples of "$C_{6-10}$ aryl group" include phenyl group, biphenyl group, indenyl group, naphthyl group or azulenyl group and the like. It should be noted that condensed rings such as indan and tetrahydro naphthalene are also included in the aryl group.

A heteroaryl group is an aryl group having, in addition to carbon atoms, from one to four ring heteroatoms which are preferably selected from O, S, N, P and Si. A heteroaryl group preferably has from 5 to 20, more preferably from 5 to 14 ring atoms. Specifically, examples of a heteroaryl group include pyridine, imidazole, methylimidazole and dimethylaminopyridine.

Examples of alicyclic, heteroalicyclic, aryl and heteroaryl groups include but are not limited to acridine, benzimidazole, benzofuran, benzothiophene, benzoxazole, benzothiazole, carbazole, cinnoline, dioxin, dioxane, dioxolane, dithiane, dithiazine, dithiazole, dithiolane, furan, imidazoline, imidazolidine, indole, indoline, indolizine, indazole, isoindole, isoquinoline, isoxazole, isothiazole, morpholine, napthyridine, oxazole, oxadiazole, oxathiazole, oxathiazolidine, oxazine, oxadiazine, phenazine, phenothiazine, phenoxazine, phthalazine, piperazine, piperidine, pteridine, purine, pyran, pyrazine, pyrazole, pyrazoline, pyrazolidine, pyridazine, pyrimidine, pyrrole, pyrrolidine, pyrroline, quinoline, quinoxaline, quinazoline, quinolizine, tetrahydrofuran, tetrazine, tetrazole, thiophene, thiadiazine, thiadiazole, thiatriazole, thiazine, thiazole, thiomorpholine, thianaphthalene, thiopyran, triazine, triazole, and trithiane.

A halogen group is used herein mean a fluorine atom, a chlorine atom, a bromine atom, an iodine atom and the like, preferably a fluorine atom, a bromine atom or a chlorine atom, and more preferably a fluorine atom.

An alkylaryl group is preferably a "$C_{6-12}$ aryl $C_{1-20}$ alkyl group", more preferably a "$C_{6-12}$ aryl $C_{1-16}$ alkyl group", even more preferably a "$C_{6-12}$ aryl $C_{1-6}$ alkyl group" and is an aryl group as defined above bonded at any position to an alkyl group as defined above. The point of attachment of the alkylaryl group to a molecule may be via the alkyl portion and thus, preferably, the alkylaryl group is $-CH_2$-Ph or $-CH_2CH_2$-Ph. An alkylaryl group can also be referred to as "aralkyl".

An alkoxy group is preferably a "$C_{1-20}$ alkoxy group", more preferably a "$C_{1-15}$ alkoxy group", more preferably a "$C_{1-12}$ alkoxy group", more preferably a "$C_{1-10}$ alkoxy group", even more preferably a "$C_{1-8}$ alkoxy group", even more preferably a "$C_{1-6}$ alkoxy group" and is an oxy group that is bonded to the previously defined $C_{1-20}$ alkyl, $C_{1-15}$ alkyl, $C_{1-12}$ alkyl, $C_{1-10}$ alkyl, $C_{1-8}$ alkyl, or $C_{1-6}$ alkyl group respectively. Specifically, examples of "$C_{1-20}$ alkoxy group" include methoxy group, ethoxy group, n-propoxy group, iso-propoxy group, n-butoxy group, iso-butoxy group, sec-butoxy group, tert-butoxy group, n-pentyloxy group, iso-pentyloxy group, sec-pentyloxy group, n-hexyloxy group, iso-hexyloxy group, , n-hexyloxy group, n-heptyloxy group, n-octyloxy group, n-nonyloxy group, n-decyloxy group, n-undecyloxy group, n-dodecyloxy group, n-tridecyloxy group, n-tetradecyloxy group, n-pentadecyloxy group, n-hexadecyloxy group, n-heptadecyloxy group, n-octadecyloxy group, n-nonadecyloxy group, n-eicosyloxy group, 1,1-dimethylpropoxy group, 1,2-dimethylpropoxy group, 2,2-dimethylpropoxy group, 2-methylbutoxy group, 1-ethyl-2-methylpropoxy group, 1,1,2-trimethylpropoxy group, 1,1-dimethylbutoxy group, 1,2-dimethylbutoxy group, 2,2-dimethylbutoxy group, 2,3-dimethylbutoxy group, 1,3-dimethylbutoxy group, 2-ethylbutoxy group, 2-methylpentyloxy group, 3-methylpentyloxy group and the like.

An aryloxy group is preferably a "$C_{5-20}$ aryloxy group", more preferably a "$C_{6-12}$ aryloxy group", even more preferably a "$C_{6-10}$ aryloxy group" and is an oxy group that is bonded to the previously defined $C_{5-20}$ aryl, $C_{6-12}$ aryl, or $C_{6-10}$ aryl group respectively.

An alkylthio group is preferably a "$C_{1-20}$ alkylthio group", more preferably a "$C_{1-15}$ alkylthio group", more preferably a "$C_{1-12}$ alkylthio group", more preferably a "$C_{1-10}$ alkylthio group", even more preferably a "$C_{1-8}$ alkylthio group", even more preferably a "$C_{1-6}$ alkylthio group" and is a thio (-S-) group that is bonded to the previously defined $C_{1-20}$ alkyl, $C_{1-15}$ alkyl, $C_{1-12}$ alkyl, $C_{1-10}$ alkyl, $C_{1-8}$ alkyl, or $C_{1-6}$ alkyl group respectively.

An arylthio group is preferably a "$C_{5-20}$ arylthio group", more preferably a "$C_{6-12}$ arylthio group", even more preferably a "$C_{6-10}$ arylthio group" and is a thio (-S-) group that is bonded to the previously defined $C_{5-20}$ aryl, $C_{6-12}$ aryl, or $C_{6-10}$ aryl group respectively.

A silyl group is preferably a group $-Si(R_s)_3$, wherein each $R_s$ can be independently an aliphatic, heteroaliphatic, alicyclic, heteroalicyclic, aryl or heteroaryl group as defined above. In certain embodiments, each $R_s$ is independently an unsubstituted aliphatic, alicyclic or aryl. Preferably, each $R_s$ is an alkyl group selected from methyl, ethyl or propyl.

A silyl ether group is preferably a group $OSi(R_6)_3$ wherein each $R_6$ can be independently an aliphatic, heteroaliphatic, alicyclic, heteroalicyclic, aryl or heteroaryl group as defined above. In certain embodiments, each $R_6$ can be independently an unsubstituted aliphatic, alicyclic or aryl. Preferably, each $R_6$ is an optionally substituted phenyl or optionally substituted alkyl group selected from methyl, ethyl, propyl or butyl (such as n-butyl or tert-butyl (tBu)). Exemplary silyl ether groups include $OSi(Me)_3$, $OSi(Et)_3$, $OSi(Ph)_3$, $OSi(Me)_2(tBu)$, $OSi(tBu)_3$ and $OSi(Ph)_2(tBu)$.

A nitrile group (also referred to as a cyano group) is a group CN.

An imine group is a group -CRNR, preferably a group $-CHNR_7$ wherein $R_7$ is an aliphatic, heteroaliphatic, alicyclic, heteroalicyclic, aryl or heteroaryl group as defined above. In certain embodiments, $R_7$ is unsubstituted aliphatic, alicyclic or aryl. Preferably $R_7$ is an alkyl group selected from methyl, ethyl or propyl.

An acetylide group contains a triple bond $-C{\equiv}C-R_9$, preferably wherein $R_9$ can be hydrogen, an aliphatic, heteroaliphatic, alicyclic, heteroalicyclic, aryl or heteroaryl group as defined above. For the purposes of the invention when $R_9$ is alkyl, the triple bond can be present at any position along the alkyl chain. In certain embodiments, $R_9$ is unsubstituted aliphatic, alicyclic or aryl. Preferably $R_9$ is methyl, ethyl, propyl or phenyl.

An amino group is preferably $-NH_2$, $-NHR_{10}$ or $-N(R_{10})_2$ wherein $R_{10}$ can be an aliphatic, heteroaliphatic, alicyclic, heteroalicyclic, a silyl group, aryl or heteroaryl group as defined above. It will be appreciated that when the amino group is $N(R_{10})_2$, each $R_{10}$ group can be the same or different. In certain embodiments, each $R_{10}$ is independently an unsubstituted aliphatic, alicyclic, silyl or aryl. Preferably $R_{10}$ is methyl, ethyl, propyl, $SiMe_3$ or phenyl.

An amido group is preferably $-NR_{11}C(O)-$ or $-C(O)-NR_{11}-$ wherein $R_{11}$ can be hydrogen, an aliphatic, heteroaliphatic, alicyclic, heteroalicyclic, aryl or heteroaryl group as defined above. In certain embodiments, $R_{11}$ is unsubstituted aliphatic, alicyclic or aryl. Preferably $R_{11}$ is hydrogen, methyl, ethyl, propyl or phenyl. The amido group may be terminated by hydrogen, an aliphatic, heteroaliphatic, alicyclic, heteroalicyclic, aryl or heteroaryl group.

An ester group is preferably $-OC(O)R_{12}-$ or $-C(O)OR_{12}-$ wherein $R_{12}$ can be an aliphatic, heteroaliphatic, alicyclic, heteroalicyclic, aryl or heteroaryl group as defined above. In certain embodiments, $R_{12}$ is unsubstituted aliphatic, alicyclic or aryl. Preferably $R_{12}$ is methyl, ethyl, propyl or phenyl. The ester group may be terminated by an aliphatic, heteroaliphatic, alicyclic, heteroalicyclic, aryl or heteroaryl group. It will be appreciated that if $R_{12}$ is hydrogen, then the group defined by-$OC(O)R_{12}-$ or $-C(O)OR_{12}-$ will be a carboxylic acid group.

A sulfoxide is preferably $-S(O)R_{13}$ and a sulfonyl group is preferably $-S(O)_2R_{13}$ wherein $R_{13}$ can be an aliphatic, heteroaliphatic, alicyclic, heteroalicyclic, aryl or heteroaryl group as defined above. In certain embodiments, $R_{13}$ is unsubstituted aliphatic, alicyclic or aryl. Preferably $R_{13}$ is methyl, ethyl, propyl or phenyl.

A phosphinate group is preferably a group $-OP(O)(R_{16})_2$ or $-P(O)(OR_{16})(R_{16})$ wherein each $R_{16}$ is independently selected from hydrogen, or an aliphatic, heteroaliphatic, alicyclic, heteroalicyclic, aryl or heteroaryl group as defined above. In certain embodiments, $R_{16}$ is aliphatic, alicyclic or aryl, which are optionally substituted by aliphatic, alicyclic, aryl or $C_{1-6}$alkoxy. Preferably $R_{16}$ is optionally substituted aryl or $C_{1-20}$ alkyl, more preferably phenyl optionally substituted by $C_{1-6}$alkoxy (preferably methoxy) or unsubstituted $C_{1-20}$alkyl (such as hexyl, octyl, decyl, dodecyl, tetradecyl, hexadecyl, stearyl). A phosphonate group is preferably a group $-P(O)(OR_{16})_2$ wherein $R_{16}$ is as defined above. It will be appreciated that when either or both of $R_{16}$ is hydrogen for the group $-P(O)(OR_{16})_2$, then the group defined by $-P(O)(OR_{16})_2$ will be a phosphonic acid group.

A sulfinate group is preferably $-S(O)OR_{17}$ or $-OS(O)R_{17}$ wherein $R_{17}$ can be hydrogen, an aliphatic, heteroaliphatic, haloaliphatic, alicyclic, heteroalicyclic, aryl or heteroaryl group as defined above. In certain embodiments, $R_{17}$ is unsubstituted aliphatic, alicyclic or aryl. Preferably $R_{17}$ is hydrogen, methyl, ethyl, propyl or phenyl. It will be appreciated that if $R_{17}$ is hydrogen, then the group defined by $-S(O)OR_{17}$ will be a sulfonic acid group.

A carbonate group for X is preferably -OC(O)OR$_{13}$, wherein R$_{18}$ can be hydrogen, an aliphatic, heteroaliphatic, alicyclic, heteroalicyclic, aryl or heteroaryl group as defined above. In certain embodiments, R$_{13}$ is optionally substituted aliphatic, alicyclic or aryl. Preferably R$_{13}$ is hydrogen, methyl, ethyl, propyl, butyl (for example n-butyl, isobutyl or tert-butyl), phenyl, pentafluorophenyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, trifluoromethyl, cyclohexyl, benzyl or adamantyl. It will be appreciated that if R$_{17}$ is hydrogen, then the group defined by -OC(O)OR$_{13}$ will be a carbonic acid group.

In an -alkylC(O)OR$_{19}$ or -alkylC(O)R$_{19}$ group, R$_{19}$ can be hydrogen, an aliphatic, heteroaliphatic, alicyclic, heteroalicyclic, aryl or heteroaryl group as defined above. In certain embodiments, R$_{19}$ is unsubstituted aliphatic, alicyclic or aryl. Preferably R$_{19}$ is hydrogen, methyl, ethyl, propyl, butyl (for example n-butyl, isobutyl or tert-butyl), phenyl, pentafluorophenyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, trifluoromethyl or adamantyl.

It will be appreciated that although in formula (I), the groups X and G are illustrated as being associated with a single M$_1$ or M$_2$ metal centre, one or more X and G groups may form a bridge between the M$_1$ and M$_2$ metal centres.

For the purposes of the present invention, the epoxide substrate is not limited. The term epoxide therefore relates to any compound comprising an epoxide moiety. Examples of epoxides which may be used in the present invention include, but are not limited to, cyclohexene oxide, styrene oxide, ethylene oxide, propylene oxide, butylene oxide, substituted cyclohexene oxides (such as limonene oxide, $C_{10}H_{16}O$ or 2-(3,4-epoxycyclohexyl)ethyltrimethoxysilane, $C_{11}H_{22}O$), alkylene oxides (such as ethylene oxide and substituted ethylene oxides), unsubstituted or substituted oxiranes (such as oxirane, epichlorohydrin, 2-(2-methoxyethoxy)methyl oxirane (MEMO), 2-(2-(2-methoxyethoxy)ethoxy)methyl oxirane (ME2MO), 2-(2-(2-(2-methoxyethoxy)ethoxy)ethoxy)methyl oxirane (ME3MO), 1,2-epoxybutane, glycidyl ethers, vinyl-cyclohexene oxide, 3-phenyl-1,2-epoxypropane, 1,2- and 2,3-epoxybutane, isobutylene oxide, cyclopentene oxide, 2,3-epoxy-1,2,3,4-tetrahydronaphthalene, indene oxide, and functionalized 3,5-dioxaepoxides. Examples of functionalized 3,5-dioxaepoxides include:

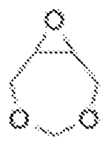 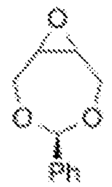 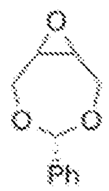 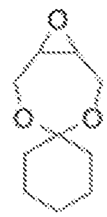 .

The epoxide moiety may be a glycidyl ether, glycidyl ester or glycidyl carbonate. Examples of glycidyl ethers, glycidyl esters glycidyl carbonates include:

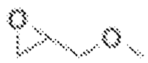
glycidyl methyl ether

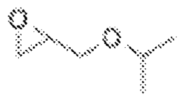
isopropyl glycidyl ether

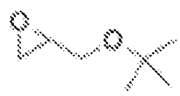
tert-butyl glycidyl ether

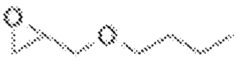
butyl glycidyl ether

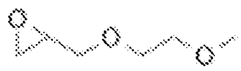
methoxyethyl glycidyl ether

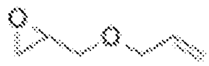
allyl glycidyl ether

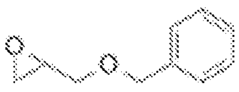
phenyl glycidyl ether

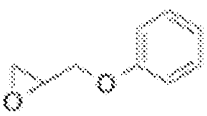
benzyl glycidyl ether

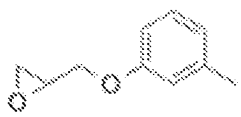
m-tolyl gylcidol ether

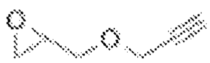
glycidyl propargyl ether

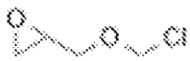
β-chloroethyl glycidyl ether

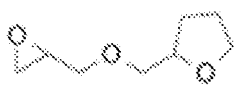
furfuryl glycidyl ether

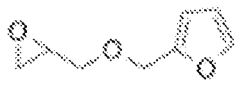

tetrahydrofurfuryl glycidyl ether

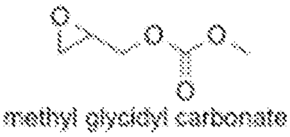

methyl glycidyl carbonate

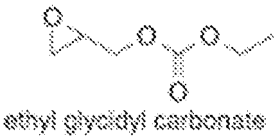

ethyl glycidyl carbonate

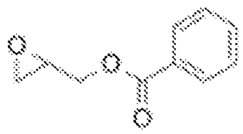

glycidyl benzoate

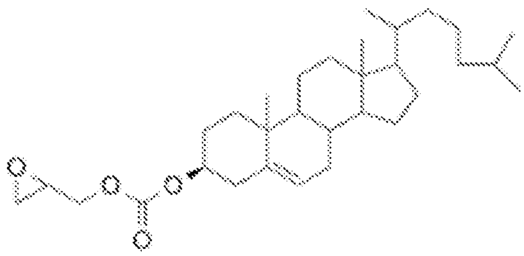

cholestryl glycidyl carbonate

The epoxide substrate may contain more than one epoxide moiety, i.e. it may be a bis-epoxide, a tris-epoxide, or a multi-epoxide containing moiety. Examples of compounds including more than one epoxide moiety include bisphenol A diglycidyl ether and 3,4-epoxycyclohexylmethyl 3,4-epoxycyclohexanecarboxylate. It will be understood that reactions carried out in the presence of one or more compounds having more than one epoxide moiety may lead to cross-linking in the resulting polymer.

The skilled person will appreciate that the epoxide can be obtained from "green" or renewable resources. The epoxide may be obtained from a (poly)unsaturated compound, such as those deriving from a fatty acid and/or terpene, obtained using standard oxidation chemistries.

The epoxide moiety may contain -OH moieties, or protected -OH moieties. The -OH moieties may be protected by any suitable protecting group. Suitable protecting groups include methyl or other alkyl groups, benzyl, allyl, tert-butyl, tetrahydropyranyl (THP), methoxymethyl (MOM), acetyl (C(O)alkyl), benzolyl (C(O)Ph), dimethoxytrityl (DMT), methoxyethoxymethyl (MEM), p-methoxybenzyl (PMB), trityl, silyl (such as trimethylsilyl (TMS), t-Butyldimethylsilyl (TBDMS), t-Butyldiphenylsilyl (TBDPS), tri-iso-propylsilyloxymethyl (TOM), and triisopropylsilyl (TIPS)), (4-methoxyphenyl)diphenylmethyl (MMT), tetrahydrofuranyl (THF), and tetrahydropyranyl (THP).

The epoxide preferably has a purity of at least 98%, more preferably >99%.

It will be understood that the term "an epoxide" is intended to encompass one or more epoxides. In other words, the term "an epoxide" refers to a single epoxide, or a mixture of two or more different epoxides. For example, the epoxide substrate may be a mixture of ethylene oxide and propylene oxide, a mixture of cyclohexene oxide and propylene oxide, a mixture of ethylene oxide and cyclohexene oxide, or a mixture of ethylene oxide, propylene oxide and cyclohexene oxide.

By the term "(poly)isocyanate" is meant a di- or polyisocyanates and thus includes polymeric isocyanates as well as di-, tri-, tetra- isocyanates etc.

When we use the term "optionally substituted" at the start of a list of chemical species we mean that all of the species in the list which can be substituted may be optionally substituted; that is we do not mean that only the first species mentioned in the list may be optionally substituted. The term optionally substituted when used herein means unsubstituted or substituted with a suitable group. Suitable groups will be known to the skilled person. Generally, such groups would not significantly detrimentally affect the function of the substituted group or of a larger moiety to which the substituted group is attached. In some cases, the skilled person would expect the substituent to improve the function of the substituted group.

Embodiments of the invention will now be described by way of example only and with reference to the accompanying figures in which:-

Figure1 shows the mass retained and extinguish time for a PEC foam according to the invention;

Figure 2 shows the mass retained and extinguish time for a further PEC foam according to the invention;

Figure 3 shows the Effect of TCPP content on mass retention after burning on rigid foams made with a PEC polyol and an APP benchmark polyol;

Figure 4 shows mass retention vs. time during rigid foam sample burning;

Figure 5 shows rate of heat emission from rigid foams during burning;

Figure 6 shows rate of heat emission vs. time of burning for rigid foam samples produced with PEC and APP benchmark polyols;

Figure 7 shows Gas emissions during burning of rigid foams made using a PEC polyol and an APP benchmark polyol;

Figure 8 shows the rate of smoke production in burning rigid foam samples made from PEC polyol and APP benchmark polyol;

Figure 9 shows mass retention of rigid foams after burning as a function of MDI content of formulation;

Figure 10 shows PIR foams formed;

Figure 11 shows FT-IR spectrum of PIR foams formed by alternating PPC polyol and random polyethercarbonate polyol;

Figure 12 shows rigid foam samples after the Buttler Chimney test;

Figure 13 shows rigid foam samples after burning for cone calorimetry;

Figure 14 shows the mass retained for rigid foam samples measured on the cone calorimeter;

Figure 15 shows the average rate of heat release inside 3 minutes for rigid foam samples measured on the cone calorimeter;

Figure 16 shows the fire growth rate for rigid foam samples measured on the cone calorimeter.

Figure 17 shows the specific extinction area for rigid foam samples measured on the cone calorimeter;

Figure 18 shows the carbon monoxide yield for rigid foam samples measured on the cone calorimeter;

Figure 19 shows side on images of rigid foam samples after cone calorimetry testing;

Figure 20 shows the viscosity of pentane-polyol mixtures at different addition levels; and

Figure 21 shows images of polyol-pentane (100 parts : 10) mixtures.

**METHODS**

The following measurements were made according to ASTM standards as described in Table 1.

**Table 1.** ASTM standards.

| Result | Test method used | Description |
|---|---|---|
| Hydroxyl Value | ASTM D4274 | Esterification of hydroxyl groups using phthalic anhydride in pyridine. |
| Viscosity | ASTM D4878 | Multiple shear rates used. |
| Isocyanate index | N/A | Calculated using isocyanate index and hydroxyl number. |
| Density | ASTM D1622 | Apparent density measurement. |
| Compression strength | ASTM D1621 | 4 mm cubes compressed in the direction of the foam rise. 4 mm/min crosshead rate |
| Fire retardance by Butler Chimney | ASTM D3014 | Specimens 2 x 2 cm x 25 cm long burned for 10 s using butane-powered blowtorch. Mass retention and extinguish time measured. |
| Fire retardance by Cone Calorimetry | ISO 5660-1 | Specimens 10 x 10 x 5 cm subjected to a heat flux of 50 kW $m^{-2}$ and allowed to burn. Various measurements of contribution to fire situation recorded. |

**EXAMPLE 1: POLYISOCYANURATE RIGID FOAM FORMULATIONS**

Polyethercarbonate polyols were synthesised according to the process described in WO2017/037441A9, with a variety of molecular weights and $CO_2$ contents, as described in Table 2.

The benchmark chosen for comparison was a commercially available aromatic polyester polyol (APP) based on phthalic anhydride and diethylene glycol, with a molecular weight of 350 g/mol. APPs are used in isocyanurate foams due to their enhanced fire retardance when compared to polyether polyols.

**Table 2.** Relevant information on Polyols

| Polyol name | $CO_2$ content / mass% | Hydroxyl Value / mgKOH/g | Molecular weight / g/mol | Viscosity at 25 °C / cP |
|---|---|---|---|---|
| APP benchmark | 0 | 322 | 350 | 2200 |
| PEC 1 | 11.8 | 153 | 730 | 200 |
| PEC 2 | 14.3 | 134 | 840 | 420 |
| PEC 3 | 18.8 | 114 | 990 | 1230 |
| PEC 4 | 23.6 | 142 | 790 | 3200 |
| PEC 5 | 19.5 | 167 | 670 | 800 |
| PEC 6 | 19.9 | 161 | 700 | 1150 |
| PPC1 | 32 | 204 | 550 | 15,500 |

**POLYISOCYANURATE FOAM FORMULATIONS**

Polyisocyanurate (PIR) rigid foam formulations were made according to the foam formulation in Table 3, which represents a standard industry formulation for such as foam, with the exception that no flame retardant was added, so the dependence of the flammability of the foam on polyol choice could be more clearly observed. Pentane was chosen as the blowing agent and the levels were kept low for the same reason. A standard mixture of potassium acetate and potassium octanoate were used as trimerization catalysts to ensure isocyanurate formation. Suprasec 5025, a polymeric methylene diisocyanate with a functionality of 2.7 was used as a standard diisocyanate. The same mass of polyol and isocyanate were used for each formulation, but due to the different polyol molecular weights the index was different for each formulation.

PIR foams were synthesised by the following method:

Components 4 and 5 (trimerization catalysts) were individually pre-mixed and heated in an oven at 80 °C until homogeneous. These were allowed to cool prior to next step. Components 1-6 were mixed by hand in a beaker until homogeneous. Component 7 (pentane, blowing agent) was added and mixed in by hand until the correct amount was obtained. Without delay, component 8 (polymeric MDI) was added to the mixture and mixed for 10-15 s using an overhead stirrer with paddle blade at 2200 rpm. Without delay, this mixture was poured into a lined tray which was pre-heated to 80 °C. The dimensions of the tray were 25 x 25 x 6 cm. The foam was allowed to free-rise. Rise time, gelation time and tack-free time were measured and within 2-3 minutes for all formulations.

**Table 3.** Polyisocyanurate foam formulation.

| | Component | Mass / % |
|---|---|---|
| 1 | Polyol | 30.64 |
| 2 | Water | 0.10 |
| 3 | Surfactant: Struksilon 8032© | 0.52 |
| 4 | Potassium acetate 15% in DEG | 0.42 |
| 5 | Potassium octanoate 15% in DEG | 2.54 |
| 6 | 1,1,4,7,7-pentamethylene diethylene triamine | 0.05 |
| 7 | n-pentane | 2.50 |
| 8 | Polymeric MDI: Suprasec 5025© | 63.23 |
| | Total | 100.00 |

RESULTS

**Table 4.** Results.

| Experiment | Polyol | Isocyanate index / % | Density / kg $m^{-3}$ | Compression strength / MPa | Mass retained on burning / % |
|---|---|---|---|---|---|
| 1 | PEC 1 | 330 | 54.2 | 0.311 | 61.2 |
| 2 | PEC 2 | 355 | 62.4 | 0.378 | 67.2 |
| 3 | PEC 3 | 389 | 56.1 | 0.376 | 56.9 |
| 4 | PEC 4 | 348 | 65.5 | 0.452 | 61.7 |
| 5 | APP benchmark | 200 | 46.6 | 0.311 | 47.4 |

Figure 1 demonstrates the improved flammability performance. It can also be seen from Table 4, PEC based PIR foams provided an increase of 10-15 % mass retention when compared to the APP benchmark. The charring effect was greater when PEC polyols were used, and the fire was not able to penetrate the foam as easily. In the absence of a flame-retardant, the presence of $CO_2$ in the polyols reduced the flammability of PIR foam significantly versus the aromatic benchmark. The improvement vs. aliphatic polyether polyols is therefore even more dramatic, even at relatively low $CO_2$ contents.

**EXAMPLE 2: POLYISOCYANURATE RIGID FOAM FORMULATIONS WITH HIGHER MDI CONTENT**

Example 1 was repeated, except the formulation was changed to alter the MDI content.

**Table 5.** Polyisocyanurate foam formulation.

| | Component | Mass / % |
|---|---|---|
| 1 | **Polyol** | 19.74 |
| 2 | **Water** | 0.12 |
| 3 | **Surfactant: Struksilon 8032©** | 0.60 |
| 4 | **Potassium acetate 15% in DEG** | 0.49 |
| 5 | **Potassium octanoate 15% in DEG** | 2.96 |
| 6 | **1,1,4,7,7-pentamethylene diethylene triamine** | 0.06 |
| 7 | **n-pentane** | 2.50 |
| 8 | **Polymeric MDI: Suprasec 5025©** | 73.52 |
| | **Total** | 100.00 |

RESULTS

**Table 6.** Results.

| Experiment | Polyol | Isocyanate index / % | Density / kg $m^{-3}$ | Compression strength / MPa | Mass retained on burning / % |
|---|---|---|---|---|---|
| 1 | PEC 1 | 446 | 49.4 | 0.304 | 81.6 |
| 2 | PEC 2 | 474 | 61.6 | 0.417 | 84.9 |
| 3 | PEC 3 | 502 | 59.0 | 0.434 | 79.0 |
| 4 | PEC 4 | 463 | 63.6 | 0.477 | 78.3 |
| 5 | APP benchmark | 300 | 58.6 | 0.534 | 73.1 |

Figure 2 demonstrates the improved flammability performance. It can also be seen from Table 6, PEC based PIR foams provided an increase of 5-10 % mass retention when compared to the APP benchmark. Due to the higher

isocyanate content than the previous example, the values of mass retained are all of higher value than previously. The charring effect was greater when PEC polyols were used, and the fire was not able to penetrate the foam as easily. In the absence of a flame-retardant, the presence of $CO_2$ in the polyols reduced the flammability of PIR foam significantly versus the aromatic benchmark.

**EXAMPLE 3: POLYISOCYANURATE RIGID FOAM FORMULATIONS CONTAINING TCPP FLAME RETARDANT ADDITIVE**

Further examples were produced with varying addition levels of the flame retardant additive Tris(1,3-dichloro-2-propyl)phosphate to demonstrate the differing performance of the PEC polyols vs. the APP benchmark polyol.

**Table 7.** Polyisocyanurate foam formulation.

| | Component | Mass / % |
|---|---|---|
| 1 | Polyol | 30.00 |
| 2 | Water | 0.10 |
| 3 | Surfactant: Struksilon 8032© | 0.64 |
| 4 | Potassium acetate 15% in DEG | 0.42 |
| 5 | Potassium octanoate 15% in DEG | 2.54 |
| 6 | 1,1,4,7,7-pentamethylene diethylene triamine | 0.06 |
| 7 | n-pentane | 4.00 |
| 8 | Polymeric MDI: Suprasec 5025© | 62.24 |
| 9 | Tris(1,3-dichloro-2-propyl)phosphate | 0.75-3.00 variable |
| | Total | 100.75-103.00 |

RESULTS

**Table 8.** Results.

| Expt | Polyol | Isocyanate index / % | TCPP content / % | Density / kg $m^{-3}$ | Compression strength / MPa | Mass retained on burning / % |
|---|---|---|---|---|---|---|
| 1 | PEC 5 | 313 | 0.75 | 36.9 | 0.177 | 75.6 |
| 2 | PEC 6 | 319 | 0.75 | 42.6 | 0.230 | 80.2 |
| 3 | APP benchmark | 200 | 0.75 | 36.7 | 0.274 | 68.1 |
| 4 | PEC 5 | 313 | 1.50 | | | 81.0 |
| 5 | APP benchmark | 200 | 1.50 | 37.5 | 0.264 | 81.4 |
| 6 | PEC 5 | 313 | 3.00 | 36.9 | 0.182 | 88.7 |
| 7 | APP benchmark | 200 | 3.00 | 37.8 | 0.268 | 87.4 |

The formulations were made with 0.75, 1.5 and 3wt% TCPP with the same isocyanate content in the formulations. Table 8 and Figure 3 show comparison of the flammability at 1.5 and 3.0 wt% TCPP demonstrates the performance is roughly equivalent for both the APP benchmark formulations and the PEC polyols, which demonstrates that in these formulations the flammability is governed by the isocyanate content and flame retardant content - that is the polyol choice makes little difference to the flammability of these specific formulations. However, when the flame retardant content is decreased to 0.75wt% both PEC5 and PEC6 (formulations 1 & 2) demonstrating similar mass retention to the formulations with 1.5wt% TCPP. The APP benchmark (formulation 3) shows significant degradation in its flammability performance with

reduced flame retardant content. Figure 11 shows the samples burnt in the Buttler Chimney test for formulations 2 (bottom) & 3 (top), which visually demonstrate the decreased flammability of the rigid foam formulations using PEC polyols. This demonstrates that PEC polyols can be used to reduce flame retardant loadings whilst keeping similar flammability performance, which is a benefit for cost and environmental reasons.

**Table 9.** Results of cone calorimetry experiment.

| | Benchmark (3) | PEC 6 (2) |
|---|---|---|
| Time to ignition / s | 1 | 1 |
| Test duration / s | 255 | 407 |
| Mass loss / % | 63 | 44 |
| Mass retained / % | 37 | 56 |
| Peak rate of heat release / kW $m^{-2}$ | 278.6 | 231.2 |
| Total heat released / MJ $m^{-2}$ | 32.9 | 31.5 |
| Fire performance index / $m^2$s $kW^{-1}$ | 0.004 | 0.004 |
| Smoke parameter / MW $kg^{-1}$ | 187.18 | 79.83 |
| Maximum average rate of heat emission / kW $m^{-2}$ | 191.17 | 133.56 |
| Fire growth rate / W $s^{-1}$ | 5791.7 | 4294.1 |
| Average rate of heat release within 3 min / kW $m^{-2}$ | 155.3 | 107.8 |
| Average rate of heat release within 5 min / kW $m^{-2}$ | | 89.4 |
| Effective heat of combustion / MJ $kg^{-1}$ | 27.6 | 32.62 |
| Specific Extinction Area / $m^2$ $kg^{-1}$ | 671.87 | 345.29 |
| CO Yield / kg $kg^{-1}$ | 0.0521 | 0.0282 |
| $CO_2$ Yield / kg $kg^{-1}$ | 0.06 | 0 |

Formulations 2 & 3 were subjected to cone calorimetry tests to further demonstrate the improved flammability performance of the PEC polyols, the results are summarised in table 9. Figure 4 demonstrates that once more, the PEC polyol demonstrated a higher mass retention in comparison to the APP benchmark. The rate of heat release and the total heat released were also less when the PEC polyol was used (see figures 5 & 6. Furthermore, the levels of smoke were significantly reduced when the PEC polyols was used (see figure 8) and the emissions of both CO and $CO_2$ were dramatically reduced (see figure 7). These factors demonstrate that the PEC-containing foam would contribute less to the propagation of a fire in a developed fire situation and would emit a smaller amount of smoke and toxic fumes in a fire situation than the APP benchmark polyol.

**Example 4** - **Formulations with further reduced MDI content**

Further formulations were developed with a reduced isocyanate content, to demonstrate the improved flammability performance of the PEC polyols, even at reduced isocyanate content. Whilst the aromatic isocyanates benefit the flammability performance of rigid foams, it is beneficial to reduce the isocyanate content from a cost perspective.

**Table 10:** Formulations with reduced isocyanate content

| Component | Mass / % |
|---|---|

| | | | | |
|---|---|---|---|---|
| 1 | Polyol | 29.09 | 33.74 | 38.23 |
| 2 | Water | 0.10 | 0.11 | 0.13 |
| 3 | Surfactant: Struksilon 8032© | 0.62 | 0.72 | 0.82 |
| 4 | Potassium acetate 15% in DEG | 0.41 | 0.47 | 0.54 |
| 5 | Potassium octanoate 15% in DEG | 2.46 | 2.86 | 3.24 |
| 6 | 1,1,4,7,7-pentamethylene diethylene triamine | 0.06 | 0.07 | 0.08 |
| 7 | n-pentane | 4.00 | 4.00 | 4.00 |
| 8 | Polymeric MDI: Suprasec 5025© | 60.36 | 55.11 | 50.08 |
| 9 | Tris(1,3-dichloro-2-propyl)phosphate | 2.91 | 2.91 | 2.91 |
| | Total | 100.00 | 100.00 | 100.00 |

Three different formulations with isocyanate indexes of 60, 55 and 50 were used with both PEC polyols and the benchmark polyols.

**Table 11:** Results from formulations with reduced isocyanate contents

| Expt | Polyol | Isocyanate index / % | MDI content / % | Density / kg $m^{-3}$ | Compression strength / MPa | Mass retained on burning / % |
|---|---|---|---|---|---|---|
| 1 | PEC 5 | 313 | 60 | 36.9 | 0.182 | 88.7 |
| 2 | APP Benchmark | 200 | 60 | 37.8 | 0.268 | 87.4 |
| 3 | PEC 6 | 252 | 55 | 34.7 | 0.160 | 89.3 |
| 4 | APP Benchmark | 158 | 55 | 37.4 | 0.224 | 72.0 |
| 5 | PEC 6 | 202 | 50 | 35.8 | 0.109 | 59.6 |
| 6 | APP Benchmark | 127 | 50 | 41.6 | 0.214 | 62.8 |

Table 11 and Figure 9 show the flammability results of these formulations. At an isocyanate content of 60%, the PEC polyol (formulation 1) delivers a marginal improvement in flammability performance on the APP benchmark (formulation 2). Once the MDI content is reduced to 55 %, the PEC polyol (formulation 3) retains the same flammability performance and a similar density and compression strength to formulation 1. However, at 55% isocyanate content formulation 4, using the APP benchmark, shows a 15% decrease in mass retained on burning. This demonstrates that the same flammability performance can be gained using PEC polyols with a 5% reduction in isocyanate content compared to the benchmark polyol. If the isocyanate content is reduced to 50%, both foams have significantly reduced flame retardance. At this index, the foams are expected to be predominantly polyurethane foams without significant trimerization and so would not be expected to have good flammability performance.

**Example 5** - **PIR foam formulations with an alternating polycarbonate polyol**

A comparative PIR formulation was attempted using an alternating polycarbonate diol, PPC-1. The formulation was very similar to those used for PEC polyols in example 1, with an index of 300.

**Table 12:** PPC-1 PIR foam formulation.

| | Component | Mass / % |
|---|---|---|
| 1 | Polyol | 28.95 |
| 2 | Water | 0.12 |
| 3 | Surfactant: Struksilon 8032© | 0.58 |
| 4 | Potassium acetate 15% in DEG | 0.35 |
| 5 | Potassium octanoate 15% in DEG | 2.43 |
| 6 | 1,1,4,7,7-pentamethylene diethylene triamine | 0.06 |
| 7 | n-pentane | 2.50 |
| 8 | Polymeric MDI: Suprasec 5025© | 65.03 |
| | Total | 100.00 |

PPC-1 has a viscosity of 15,500 cP at 25 °C (see table 2), approximately seven times higher than the APP benchmark, and five times higher than PEC-4 which contains 10% less $CO_2$. This made it considerably harder to mix in the rigid foam formulation, which was very viscous.

A large exotherm was observed in the centre of the foam during formation, with the internal temperature peaking at 134 °C, causing the foam to split during rise (see figure 10). In comparison the internal temperature of the foam made using PEC-4 only reached 103 °C during foam formation. Similar foams made using polypropylene glycol (PPG) polyols have shown internal temperatures around 100 °C, indicating the PEC foam formation proceeded as expected.

An FT-IR spectrum was taken of the PIR foam made using PPC-1 and also of a foam made using PEC-4. Figure 11 shows the foam made using PPC-1 contains a significant quantity of cyclic propylene carbonate, as observed by the strong band at 1790 $cm^{-1}$. PPC-1 did not contain any significant traces of cyclic propylene carbonate (<0.5 wt%), thus the cyclic propylene carbonate must have been formed as a degradation product of the PPC polyol during the foaming formation. This is most probably due to the combined sensitivity of PPC polyols to basic catalysts (such as the potassium acetate, potassium octanoate and amine catalysts used in PIR formation), and to temperature. In comparison, the foam made with random PEC-4 doesn't show any propylene carbonate formation in the IR spectrum, indicating the polyol is stable to both the basic catalysts and temperature and forms a foam correctly.

The results demonstrate that, unlike highly alternating PPC polyols, random polyethercarbonate polyols can be made to have similar (or lower) viscosities to the benchmark polyol, enabling easy processing and their use without the need for blending with other polyols. They also exhibit stability to both basic catalysts and elevated temperature during the foaming process, allowing controlled foam formation, while the alternating PPC polyol is not stable under these conditions. The larger exotherm observed during PPC foaming is thought to be due to the PPC polyol degradation process, or due to the formation of hotspots caused by the extremely high viscosity of the mixture.

It was not possible to measure any meaningful performance data from the foam produced by PPC-1 as the foam did not form correctly and the mechanical integrity was compromised.

**Example 6 - Cone calorimetry of the formulations of Examples 3 and 4**

Cone calorimetry was used to further exemplify the results in examples 3 and 4. Only selected formulations were carried forward - the reduced TCPP version at 0.75 %; and the reduced MDI version at 55 %, alongside a full fire-resistant formulation. The formulations are listed in table 13:

**Table 13:** Polyisocyanurate foam formulations.

| | Component | Mass / % | | |
|---|---|---|---|---|
| | | Full FR | Reduced TCPP | Reduced MDI |
| 1 | **Polyol** | 29.09 | 30.00 | 33.74 |
| 2 | **Water** | 0.10 | 0.10 | 0.11 |
| 3 | **Surfactant: Struksilon 8032©** | 0.62 | 0.64 | 0.72 |
| 4 | **Potassium acetate 15% in DEG** | 0.41 | 0.42 | 0.47 |
| 5 | **Potassium octanoate 15% in DEG** | 2.46 | 2.54 | 2.86 |
| 6 | **1,1,4,7,7-pentamethylene diethylene triamine** | 0.06 | 0.06 | 0.07 |
| 7 | **n-pentane** | 4.00 | 4.00 | 4.00 |
| 8 | **Polymeric MDI: Suprasec 5025©** | 60.36 | 62.24 | 55.11 |
| 9 | **Tris(1,3-dichloro-2-propyl)phosphate** | 2.91 | 0.75 | 2.91 |
| | **Total** | 100.00 | 100.75 | 100.00 |

A second APP benchmark was added to the experiment. The hydroxyl value of this benchmark was 240 mgKOH $g^{-1}$.

The results are shown in table 14:

**Table 14:** Results.

| Expt | Polyol | Isocyanate index / % | TCPP content / % | MDI content / % | Density / kg $m^{-3}$ | Compression strength / MPa | Mass retained on burning / % |
|---|---|---|---|---|---|---|---|
| 1 | APP 1 | 200 | 3 | 60 | 37.8 | 0.268 | 87.4 |
| 2 | APP 2 | 247 | 3 | 60 | 40.4 | 0.357 | 93.2 |
| 3 | PEC | 313 | 3 | 60 | 36.9 | 0.182 | 88.7 |
| 4 | APP 1 | 200 | 0.75 | 60 | 36.7 | 0.274 | 68.1 |
| 5 | APP 2 | 247 | 0.75 | 60 | 40.1 | 0.322 | 81.8 |
| 6 | PEC | 313 | 0.75 | 60 | 36.9 | 0.177 | 80.2 |
| 7 | APP 1 | 158 | 3 | 55 | 37.4 | 0.224 | 72.0 |
| 8 | APP 2 | 195 | 3 | 55 | 38.1 | 0.277 | 87.6 |
| 9 | PEC | 252 | 3 | 55 | 34.7 | 0.160 | 89.3 |

The following conclusions are drawn from the results of the cone calorimetry experiment (see Table 15). In a fully fire resistant formulation, the performance is good for all three of the polyols used. However, when the TCPP additive and MDI quantity were reduced, only the PEC based foam was able to maintain its high performance, with the two APP benchmarks losing performance in varying amounts (APP 2 being superior to APP 1).

The PEC based foams demonstrated greater mass retention than the benchmarks when the additive levels were reduced, demonstrating the foams to be more fire resistant (see Figure 14). They also showed lower rates of heat emission and fire growth rates than the benchmarks, meaning they contribute less to the growth of a fire than the APP examples (see Figures 15 and 16). Vast reductions in smoke (specific emission) and carbon monoxide emissions were found when compared to the benchmarks, even in the highly fire-resistant formulations, indicating they can decrease the risks of smoke inhalation during a fire (see Figures 17 and 18).

Side on images of samples after cone calorimetry testing are shown in Figure 19 for APP 1, Full FR (top left), APP 1, reduced MDI (top right), and PEC Full FR (bottom left) and PEC reduced MDI (bottom right). These images demonstrate enhanced resistance to the burn through of the sample in the PEC based foam.

A further benefit of PEC over APP was observed when blending the formulations. The blowing agent n-pentane was added and stirred in by hand. This process was visibly easier with PEC when compared to APP. This was verified by mixing varying amounts of pentane with 100 parts polyol and measuring the viscosity (see Figure 20). The viscosity was observed to decrease when PEC was mixed with pentane, indicating good miscibility. The same was not observed with either APP benchmark.

Figure 21 shows still images of polyol-pentane (100 parts : 10) mixtures. The PEC sample (shown in the rear) shows much better flow and a clear liquid, indicating good miscibility when compared to the APP sample (shown in the front).

**Example 7:** Synthesis of polyols with functionality > 2

Polyols were synthesised as per the teaching of WO2017/037441A9

**Synthesis of PEC 7:**

17.2 mg of a DMC catalyst according to example 1 of WO2018/158370A1 was taken into a 100 mL reactor along with hexanediol (4.8 g) and trimethylolpropane ethoxylate 450 (TMPEO-450) (3.0 g). The mixture was dried at 120 °C under vacuum for 1 hour. Catalyst 2 of WO2017/037441A9 (172 mg) was dissolved in PO (50 mL) and injected into the vessel. The vessel was heated to the desired temperature (73 °C) for 4 hours at 10 bar. The temperature was then raised to 85 °C. After reaction completion, the reactor was cooled to below 10°C and the pressure was released. NMR and GPC were measured immediately.

**Synthesis of PEC 8:**

Synthesis was carried out according to PEC 7 except with hexanediol (5.3 g) and TMPEO-450 (3.3 g).

**Synthesis of PEC 9:**

Synthesis was carried out according to PEC 7 except with hexanediol (5.3 g) and TMPEO-450 (3.3 g).

**Synthesis of PEC 10:**

Synthesis was carried out according to PEC 7 except on a 2L reactor using the following quantities: 206 mg of DMC catalyst, hexanediol (18 g), TMPEO-450 (68 g), EtOAc (240 g), Catalyst 2 of WO2017/037441A9 (2.06 g) and PO (498g)

**Synthesis of PEC 11:**

Synthesis was carried out according to PEC 10, except at 5 bar pressure.

**Table 15:** Results of cone calorimetry experiments.

| Experiment number | 1 | 2 | 3 | 4 | 5 | 6 | 7 | 8 | 9 |
|---|---|---|---|---|---|---|---|---|---|
| Time to ignition / s | 1 | 1 | 1 | 1 | 1 | 1 | 1 | 1 | 1 |
| Test duration / s | 343 | 597 | 402 | 255 | 445 | 407 | 355 | 494 | 293 |
| Mass loss / % | 43 | 35 | 43 | 63 | 58 | 44 | 62 | 49 | 43 |
| Mass retained / % | 57 | 65 | 57 | 37 | 42 | 56 | 38 | 51 | 57 |
| Peak rate of heat release / kW $m^{-2}$ | 203.1 | 166.5 | 193.7 | 278.6 | 236.6 | 231.2 | 223.8 | 205.3 | 188 |
| Total heat released / MJ $m^{-2}$ | 24.9 | 21.7 | 25.9 | 32.9 | 40.7 | 31.5 | 30.2 | 29.4 | 19.8 |
| Fire performance index / $m^2 s\ kW^{-1}$ | 0.005 | 0.006 | 0.005 | 0.004 | 0.004 | 0.004 | 0.004 | 0.005 | 0.005 |
| Smoke parameter / MW $kg^{-1}$ | 87.62 | 61.92 | 43.85 | 187.18 | 149.55 | 79.83 | 124.65 | 68.11 | 42.44 |
| Maximum average rate of heat emission / kW $m^{-2}$ | 135.22 | 92.51 | 124.12 | 191.17 | 158.5 | 133.56 | 164.46 | 126.04 | 123.54 |
| Fire growth rate / W $s^{-1}$ | 4366.6 | 3037.5 | 4022.1 | 5791.7 | 5064.1 | 4294.1 | 5187.9 | 4135.1 | 4012.7 |
| Average rate of heat release within 3 min / kW $m^{-2}$ | 96.3 | 55.1 | 93.3 | 155.3 | 130.4 | 107.8 | 118.9 | 92.3 | 88.2 |
| Average rate of heat release within 5 min / kW $m^{-2}$ | 77.6 | 47.9 | 75.7 | | 113.5 | 89.4 | 95.6 | 75.6 | |
| Effective heat of combustion / MJ $kg^{-1}$ | 28.2 | 28.6 | 27.89 | 27.6 | 30.99 | 32.62 | 23.76 | 30.23 | 23.53 |
| Specific Extinction Area / $m^2\ kg^{-1}$ | 431.42 | 371.88 | 226.39 | 671.87 | 632.09 | 345.29 | 556.99 | 331.78 | 225.72 |
| CO Yield / kg $kg^{-1}$ | 0.0445 | 0.134 | 0.0299 | 0.0521 | 0.042 | 0.0282 | 0.0575 | 0.0533 | 0.0241 |
| $CO_2$ Yield / kg $kg^{-1}$ | 0.27 | 0 | 0.28 | 0.06 | 0 | 0 | 0.87 | 0 | 0.6 |

**Synthesis of PEC 12:**

Synthesis was carried out according to PEC 11, except using 57.8g hexanediol and 36.3g TMPEO-450

**Synthesis of PEC 13:**

Synthesis was carried out according to PEC 11, except using 63.6g hexanediol and 39.9g TMPEO-450, at 10 bar pressure.

**Synthesis of PEC 14:**

Synthesis was carried out according to PEC 10, except with 118g hexanediol and no TMP-EO-450 at 10 bar pressure.

**Table 16:** Low molecular weight polyols with >2 functionality

| PEC | Functionality | $CO_2$ wt % | Mn - GPC (g/mol) | PDI | OH Value | Mn - OHv |
|---|---|---|---|---|---|---|
| **7** | 2.2 | 17.1 | 1050 | 1.19 | - | - |
| **8** | 2.2 | 14.5 | 940 | 1.18 | - | - |
| **9** | 2.2 | 14.2 | 840 | 1.17 | - | - |
| **10** | 2.5 | 26.9 | 1900 | 1.55 | **71.7** | **1955** |
| **11** | 2.5 | 20.1 | 1800 | 1.48 | **70.2** | **2002** |
| **12** | 2.2 | 17.0 | 1030 | 1.17 | **123.9** | **996** |
| **13** | 2.2 | 16.1 | 910 | 1.19 | **137.9** | **895** |
| **14** | 2.0 | 25.0 | 620 | 1.14 | **167.4** | **670** |

PEC Examples 7-14 demonstrate the synthesis of low molecular weight polyols containing a range of functionalities and $CO_2$ contents as produced by this method. Polyols with increased functionality are particularly useful in PIR and PUR rigid foam formulations as they increase the cross-linking ability of the polyol.

**Example 8:** Spray Polyurethane (PUR) rigid foam formulation made from polyethercarbonate polyols

A rigid polyurethane spray foam system was formulated using polyethercarbonate polyols. The polyols used are shown in table 17:

**Table 17**: Polyols used in spray foam formulations

| Polyol name | $CO_2$ content / mass% | Hydroxyl Value / mgKOH/g | Molecular weight / g/mol | Viscosity at 25 °C / cP |
|---|---|---|---|---|
| **APP benchmark** | 0 | 322 | 350 | 2200 |
| **APP benchmark 2** | 0 | 235 | 480 | 2400 |
| **PEC 15** | 17.6 | 157 | 715 | 782 |
| **PEC 14** | 25.0 | 167.4 | 670 | 2900 |
| **Propoxylated sorbitol polyol** | 0 | 490 | 515 | 6050 |
| **Mannich base polyol** | 0 | 450 | 623 | 5550 |

The spray foam formulations used are shown in table 18:

**Table 18**: Spray foam formulations

| | Component | Mass / % |
|---|---|---|
| | | |
| 1 | APP or PEC polyol | 16.40 |
| 2 | Propoxylated sorbitol polyol | 5.00 |
| 3 | Mannich base polyol | 21.62 |
| 4 | Surfactant: Struksilon 8032© | 0.60 |
| 5 | Water | 0.70 |
| 6 | Potassium octanoate 15% in DEG | 0.50 |
| 7 | Triethylene diamine 33% in DEG (LV 33) | 0.13 |
| 8 | Tibkat 214 tin catalyst | 0.05 |
| 9 | Solstice LBA© | 5.00 |
| 10 | Tris(1-chloro-2-propyl)phosphate | 5.00 |
| 11 | Lupranat M20S PMDI | 50 |
| | Total | 105 |

The four foams made from these formulations had densities in the range 37.9 - 40.6 kg $m^{-3}$. This exemplifies the use of PEC polyols in PUR foams in addition to PIR foams. All foams had a cure time of 45-50 s.

**Example 9**: Polyisocyanurate foam formulation made from polyethercarbonate polyols with functionality greater than 2

The polyols used are shown in table 19:

**Table 19**: Polyol with functionality>2 used in PIR foam formulations

| Polyol name | $CO_2$ content / mass% | Hydroxyl Value / mgKOH/g | Functionality / eq./mol | Molecular weight / g/mol | Viscosity at 25 °C / cP |
|---|---|---|---|---|---|
| PEC 13 | 16. 1 | 138 | 2.2 | 895 | NM |

The formulation outlined in table 13 (full FR) was successfully used to make the PIR foam using PEC 13. The foam had a tack-free time of 100 s.

**Example 10**: Polyisocyanurate foam made from combination of polyethercarbonate and other polyols PEC 15 was used in conjunction with other polyols according to the following formulations.

**Table 20**: Formulations for PIR foams using polyol blends

| | Component | Mass / % | | | | |
|---|---|---|---|---|---|---|
| | | A | B | C | D | E |
| 1 | PEC Polyol | 21.09 | 27.63 | 26.93 | 29.09 | 29.09 |
| 2 | Mannich base polyol | 8.00 | | | | |
| 3 | Glycerol | | 1.45 | | | |
| 4 | Trimethylolpropane | | | 2.15 | | |
| 3 | Water | 0.10 | 0.10 | 0.10 | 0.10 | 0.10 |
| 4 | Surfactant: Struksilon 8032© | 0.62 | 0.62 | 0.62 | 0.62 | 0.62 |
| 5 | Potassium acetate 15% in DEG | 0.41 | 0.41 | 0.41 | 0.41 | 0.41 |
| 6 | Potassium octanoate 15% in DEG | 2.46 | 2.46 | 2.46 | 2.46 | 2.46 |
| 7 | 1,1,4,7,7-pentamethylene diethylene triamine | 0.06 | 0.06 | 0.06 | 0.06 | 0.06 |
| 8 | n-pentane | 4.00 | 4.00 | 4.00 | 4.00 | 4.00 |
| 9 | Polymeric MDI: Suprasec 5025© | 60.36 | 60.36 | 60.36 | 60.36 | 60.36 |
| 10 | Tris(1-chloro-2-propyl)phosphate | 2.91 | 2.91 | 2.91 | 2.91 | 2.91 |
| | Total | 100.00 | | | | |
| | | | | | | |
| | Cure time (80 C mould) | | | 52 | 90 | |
| | Cure time (unheated mould) | 70 | 120 | | | 300 |

The PEC was used in the above formulation to successfully make a PIR foam, demonstrating a blend of polyols can be used should it be desired for the final application. The blend of polyols had a hydroxyl value of 240. This enables the formulator to select the isocyanate index according to what blend of polyols is used, in addition the cure speed can be controlled both with and without the use of a heated mould.

**Example 11:** Polyisocyanurate foams made from combination of polyether carbonate polyols and Aromatic Polyester Polyols.

PIR foams were made using blends of polyethercarbonate polyol and APP benchmark polyols. The formulations are shown in table 21:

**Table 21:** formulations of PIR foams using blends of PEC polyols and APP benchmarks.

| | Component | Mass / % |
|---|---|---|
| | | |
| 1 | PEC 15 | 14.54 |
| 2 | APP 2 | 14.55 |
| 3 | Water | 0.10 |
| 4 | Surfactant: Struksilon 8032© | 0.62 |
| 5 | Potassium acetate 15% in DEG | 0.41 |
| 6 | Potassium octanoate 15% in DEG | 2.46 |
| 7 | 1,1,4,7,7-pentamethylene diethylene triamine | 0.06 |
| 8 | n-pentane | 4.00 |

| | | |
|---|---|---|
| 9 | **Polymeric MDI: Suprasec 5025©** | **60.36** |
| 10 | Tris(1-chloro-2-propyl)phosphate | 2.91 |
| | **Total** | 100.00 |

The foam made from the formulation above showed physical properties which demonstrates that PEC polyols can be used alongside APP polyols if this was to be desired.

**Example 12:** Performance improvements of rigid foams catalysed by bismuth catalysts

Bismuth neodecanoate was employed in order to enhance the cure speed of the PIR foam based on PEC polyol, which contains a substantial amount of secondary hydroxyls. As such, performance enhancements in lower thermal conductivity (lambda) and higher compression strength were observed.

**Table 22:** Formulations of PIR foams using bismuth neodecanoate as added catalyst

| | **Component** | **Mass / %** | | |
|---|---|---|---|---|
| | | A | B | C |
| **1** | **PEC 15** | 29.09 | 29.09 | |
| **2** | **APP 2** | | | 29.09 |
| **3** | **Water** | 0.10 | 0.10 | 0.10 |
| **4** | **Surfactant: Struksilon 8032©** | 0.62 | 0.62 | 0.62 |
| **5** | **Potassium acetate 15% in DEG** | 0.41 | 0.41 | 0.41 |
| **6** | **Potassium octanoate 15% in DEG** | 2.46 | 2.46 | 2.46 |
| **7** | **1,1,4,7,7-pentamethylene diethylene triamine** | 0.06 | 0.06 | 0.06 |
| **8** | **n-pentane** | 4.00 | 4.00 | 4.00 |
| **9** | **Bismuth neodecanoate** | | 0.35 | |
| **10** | **Polymeric MDI: Suprasec 5025©** | 60.36 | 60.36 | 60.36 |
| **11** | **Tris(1-chloro-2-propyl)phosphate** | 2.91 | 2.91 | 2.91 |
| | **Total** | 100.00 | 100.00 | 100.00 |
| | | | | |
| | **Cure time (80 C mould)** | 90 | 70 | 65 |
| | **Free-rise density (kg $m^{-3}$)** | 34.7 | 40.4 | 38.1 |
| | **Compression strength (kPa)** | 160 | 231 | 277 |
| | **Thermal conductivity (mW $m^{-1}K^{-1}$)** | 27.4 | 24 | 24.5 |

This exemplifies that the reaction speed of PEC polyol in PIR foam can be altered with use of selected catalysts in order to provide the desired foam formation properties and subsequent physical properties of the foam, as desired by the formulator.

Attention is directed to all papers and documents which are filed concurrently with or previous to this specification in connection with this application and which are open to public inspection with this specification.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract

and drawings), or to any novel one, or any novel combination, of the steps of any method or process so disclosed.

## Claims

1. A rigid foam, typically, a polyurethane foam, more typically, a polyisocyanurate or a mixed polyisocyanurate/polyurethane foam, comprising the reaction product of an (poly)isocyanate, and a polyethercarbonate polyol copolymer wherein the polyethercarbonate polyol copolymer is derived from the copolymerisation of one or more epoxides with $CO_2$, wherein the total-$CO_2$- content of the polyethercarbonate polyol copolymer is between 1 and 40wt%, the carbonate linkages are <95% of the total linkages from the copolymerisation, and the molecular weight is between 100 to 5000 g/mol.

2. A rigid foam according to claim 1, wherein the polyethercarbonate polyol copolymer forms from 20 to 100wt% of the total polyol present during the reaction with the (poly) isocyanate to produce the rigid foam, more typically, 40 to 100wt%, most typically, 50-100wt% of the total polyol present such as at least, 60, 70, 80, 90, 92, 94, 96, 98, or 99wt% of the total polyol present.

3. A rigid foam according to claim 1 or 2, wherein the $CO_2$ content in the polyether carbonate polyol copolymer is 5-35wt%, more preferably, 10-30wt%, most preferably, 15-30wt%, such as 15-25wt%; and/or wherein the carbonate content of the polyethercarbonate polyol is up to 90% of a fully alternating polycarbonate polyol which is free of ether linkages, more preferably, <85%; and/or wherein the ether linkage content of the polyethercarbonate polyol copolymer is at least 10%, more preferably at least 15%; and/or wherein more than 95% of the chain ends of the polyethercarbonate polyol copolymer are -OH groups, more preferably, at least 98%, most preferably, at least 99%; and/or wherein the functionality of the polyol copolymer may be between 2-6, more typically, 2-4, most typically, 2-3 such as 2; and/or wherein the OH content in the polyol may be in the range 20-500 mg KOH/g, preferably 70-350, more preferably, 100-300; and/or wherein the polyethercarbonate polyol which has m carbonate linkages and n ether linkages, wherein m and n are integers, and wherein m/(n+m) is from greater than zero to less than 0.95; optionally, wherein m/(n+m) may be about 0.05, about 0.10, about 0.15, about 0.20, about 0.25, about 0.25, about 0.30, about 0.35, about 0.40, about 0.45, about 0.50, about 0.55, about 0.60, about 0.65, about 0.70, about 0.75, about 0.80, about 0.85, about 0.90, about 0.95, or within any range falling within two of these specific values, for example, m/(n+m) may be from about 0.05 to about 0.95, from about 0.10 to about 0.90, from about 0.15 to about 0.85, from about 0.20 to about 0.80, or from about 0.20 to about 0.70.

4. A rigid foam according to any preceding claim, wherein the polyethercarbonate polyol copolymers have the following formula (IV):

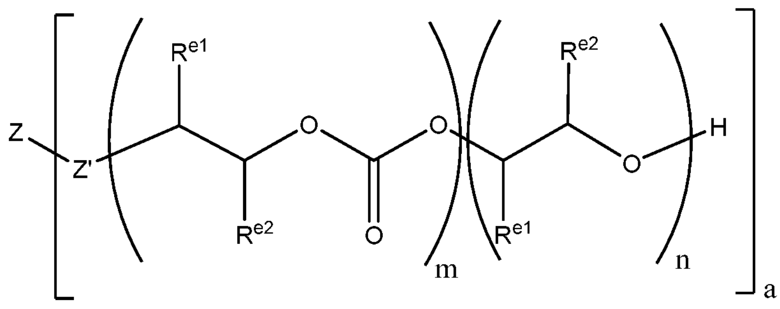

(IV)

wherein the identity of Z and Z' depends on the nature of the starter compound, the identity of $R^{e1}$ and $R^{e2}$ will depend on the nature of the epoxide used to prepare the polyethercarbonate polyol, and m and n define the amount of the carbonate and ether linkages in the polyethercarbonate polyol; optionally wherein the starter compound is of the formula (III):

$$Z(R^Z)_a \qquad (III)$$

wherein Z can be any group which can have 2 or more -$R^Z$ groups attached to it; optionally wherein Z is selected from optionally substituted alkylene, alkenylene, alkynylene, heteroalkylene, heteroalkenylene, heteroalkynylene, cycloalkylene, cycloalkenylene, hererocycloalkylene, heterocycloalkenylene, arylene, heteroarylene, or Z may be a combination of any of these groups, for example Z may be an alkylarylene, heteroalkylarylene,

heteroalkylheteroarylene or alkylheteroarylene group;

a is an integer which is at least 2;
each $R^Z$ may be -OH, -NHR', -SH, -C(O)OH, -P(O)(OR')(OH), -PR'(O)(OH)$_2$ or -PR'(O)OH, and R' may be H, or optionally substituted alkyl, heteroalkyl, aryl, heteroaryl, cycloalkyl or heterocycloalkyl;

each $R^{e1}$ is independently selected from H, halogen, hydroxyl, or optionally substituted alkyl, alkenyl, alkynyl, cycloalkyl, heterocycloalkyl, aryl, heteroaryl, heteroalkyl or heteroalkenyl, preferably $R^{e1}$ is selected from H or optionally substituted alkyl;

each $R^{e2}$ is independently selected from H, halogen, hydroxyl, or optionally substituted alkyl, alkenyl, alkynyl, cycloalkyl, heterocycloalkyl, aryl, heteroaryl, heteroalkyl or heteroalkenyl, preferably $R^{e2}$ is selected from H or optionally substituted alkyl;
or $R^{e1}$ and $R^{e2}$ together form a saturated, partially unsaturated or unsaturated ring containing carbon and hydrogen atoms, and optionally one or more heteroatoms (e.g. O, N or S), for example, $R^{e1}$ and $R^{e2}$ together form a 5 or six membered ring; and
Z' corresponds to $R^z$, except that a bond replaces the labile hydrogen atom;
wherein although the polymer drawn in IV depicts Z' bound to the carbon of an ethylene unit from the epoxide, $R^Z$ may react first with $CO_2$ if it is -OH, -SH, -NHR', P(O)(OR')(OH), -PR'(O)(OH)$_2$ or -PR'(O)OH and in these instances, Z' would correspondingly be -O-C(O)O-, -S-C(O)O-, -NR'-C(O)O-, -P(O)(OR')O-C(O)O-, -PR'(O)(OH)O-C(O)O- or -PR'(O)O-C(O)OO-.

**5.** A rigid foam according to any preceding claim, wherein the number of ether and carbonate linkages (n+m) in the polyether carbonate defines the molecular weight of the polyethercarbonate polymer wherein $n \leq 5$ and $m \leq 5$, or $n \leq 10$ and $m \leq 10$, or $n \leq 20$ and $m \leq 20$ or $n \leq 50$ and $m \leq 50$, or wherein preferably, $m + n \leq 10$, or $m + n \leq 20$, or $m + n \leq 100$; and/or wherein the polyol polymers utilised have a PDI of from about 1 to less than about 2, preferably from about 1 to less than about 1.75, more preferably from about 1 to less than about 1.5, even more preferably from about 1 to less than about 1.3; and/or wherein the polyol polymers utilised have a molecular weight in the range of from about 100 to about 5,000 g/mol, preferably from about 200 to about 3,000 g/mol, preferably from about 300 to about 2,000 g/mol, more preferably from about 300 to about 1000 g/mol, most preferably from about 300 to 800 g/mol.

**6.** A rigid foam according to any preceding claim, wherein there are one or more polyols, which are reacted with one or more (poly)isocyanates to produce the final rigid foam product; and/or wherein the (poly)isocyanate comprises two or more isocyanate groups per molecule; and/or wherein the (poly)isocyanate employed has a functionality greater than 2 such as a functionality between 2 to 5, more typically, 2-4, most typically, 2-3.

**7.** A rigid foam according to any preceding claim, wherein the rigid foam incorporates a prepolymer; and/or wherein the flammability according to ASTM D3014 is in the range 40-100% of mass retained; and/or wherein the rigid foam has a flammability less than 20% mass lost and an isocyanate content of 30-99 wt%, preferably 40-90 wt%, more preferably 50-80 wt; and/or wherein the rigid foam has a compression strength in the range 10-700 kPa, more typically, 100-700 kPa; and/or wherein the rigid foam has a mass retention on burning of greater than 40%, more typically, greater than 70%, most typically, greater than 80%.

**8.** A rigid foam according to any preceding claim, wherein the rigid foams comprise one or more suitable flame retardants; optionally wherein the flame retardants are present in amounts from 0-60 parts of the total mixture.

**9.** A method of producing a rigid foam comprising the reaction product of an (poly)isocyanate, and a polyethercarbonate polyol copolymer comprising the steps of:
reacting a (poly)isocyanate with a polyethercarbonate polyol copolymer, in the presence of a suitable catalyst for polyurethane production, and optionally in the presence of a trimerisation catalyst for polyisocyanurate production, under conditions that will produce a rigid foam, wherein the polyethercarbonate polyol copolymer is derived from the copolymerisation of one or more epoxides with $CO_2$, wherein the total -$CO_2$- content of the copolymer is between 1 and 40wt%, the carbonate linkages are <95% of the total linkages from the copolymerisation and the molecular weight is between 100 to 5000 g/mol.

**10.** A method according to claim 9, wherein the reaction is carried out at an isocyanate index of at least 200, more typically, of at least 220 such as 250 or 300; and/or wherein the isocyanate index for the reaction is in the range 100 to 800, typically, in the range 200-350; and/or wherein the initial reaction temperatures during the polyol/isocyanate reaction

are between 0 and 200 °C, more typically between 60 - 100 °C; and/or wherein the temperatures during any trimerisation reaction are between 20 and 200 °C, more typically between 60 - 140 °C; and/or wherein an excess of (poly)isocyanate, more typically, an excess of polymeric isocyanate relative to polyol is used so that polyisocyanurate ring formation in the presence of trimerisation catalyst is possible.

**11.** A method according to claim 9 or 10, wherein the mixtures which produce the rigid foams contain one or more catalysts such as tertiary amine compounds and/or organometallic compounds.

**12.** A method according to any of claims 9-11 or a rigid foam according to any of claims 1 to 8, wherein suitable trimerization catalysts include tertiary amines, alkali metal carboxylates, quaternary ammonium salts, combinations thereof, and combinations of tertiary amines and epoxides; optionally wherein the tertiary amine catalysts include 1,3,5-tris(dialkylaminoalkyl) hexahydrotriazines such as 1,3,5-tris(dimethylaminopropyl) hexahydrotriazine, 1,3,5-trialkyl hexahydrotriazines such as 1,3,5-tripropyl hexahydrotriazine, 2,4,6-tris(dimethylaminomethyl) phenols such as 2,4,6-tris(dimethylaminomethyl) phenol and diaminobicyclooctane; alkali metal carboxylate catalysts include potassium acetate and potassium octanoate; and quaternary ammonium salts include salts of the structure $(NR_4)_yA$ where:
A is an anion derived from an acid having a pK value (wherein pK is the negative log of the dissociation constant), in aqueous solution at substantially room temperature, of 2.0 or greater and being free of substituents which can react with isocyanates under conditions of trimerization and being selected from the group consisting of inorganic oxygen acids, carboxylic acids and carbonic acid, each R is any organic group other than A and free of any substituents and functional groups which can react with isocyanates under conditions of trimerization, and where no more than one R per N contains an aromatic ring attached directly to N, and y is a whole number equal in value to the valence of A; or optionally, wherein the quaternary ammonium salts are selected from trimethylammonium formate, tetramethyl ammonium carbonate, tetramethylammonium 2-ethyl hexanoate, tetramethyl ammonium chloroacetate, tetramethyl octanoate, and tetramethyl ammonium dibutylphosphate; or optionally wherein the tertiary amines for use with epoxides include DABCO (diethylene triamine), tetramethyl ethylenediamine, pentamethyl diethylene triamine and hexamethyl triethylene tetramine.

**13.** A rigid foam according to any one of claims 1-8, wherein the polyethercarbonate copolymer has a functionality of greater than 2 and wherein the total $-CO_2-$ content of the polyethercarbonate polyol copolymer is between 10 and 35wt%, preferably between 10 and 30wt%, the carbonate linkages are <95% of the total linkages from the copolymerisation, and the molecular weight of the polyethercarbonate polyol copolymer is less than 1500 g/mol, preferably less than 1000 g/mol.

**14.** A rigid foam according to any one of claims 1-8, wherein the molecular weight of the polyethercarbonate polyol copolymer is less than 1000 g/mol, the carbonate linkages are <95% of the total linkages from the copolymerisation, and the total $-CO_2-$ content is between 20 and 35wt%, preferably between 22 and 35wt%, between 25 and 35wt% or between 30 and 35wt%.

**15.** A composition forming one part of a two part composition for producing a rigid foam, said composition comprising a polyethercarbonate polyol copolymer and a blowing agent, wherein the polyethercarbonate polyol copolymer is derived from the copolymerisation of one or more epoxides with $CO_2$, wherein the total-$CO_2$- content of the polyethercarbonate polyol copolymer is between 1 and 40wt%, the carbonate linkages are <95% of the total linkages from the copolymerisation, and the molecular weight is between 100 to 5000 g/mol, and wherein the blowing agent is a hydrocarbon, preferably selected from the group comprising butane, isobutane, 2,3-dimethylbutane, n- and iso-pentane isomers, hexane isomers, heptane isomers and cycloalkanes including cyclopentane, cyclohexane and cycloheptane, more preferably from the group comprising cyclopentane, iso-pentane, n-pentane, hexane and heptane; optionally wherein the blowing agent is n-pentane.

## Patentansprüche

**1.** Hartschaum, typischerweise ein Polyurethanschaum, noch typischer ein Polyisocyanurat- oder ein gemischter Polyisocyanurat-/Polyurethanschaum, umfassend das Reaktionsprodukt aus einem (Poly)isocyanat und einem Polyethercarbonatpolyol-Copolymer, wobei das Polyethercarbonatpolyol-Copolymer aus der Copolymerisation von einem oder mehreren Epoxiden mit $CO_2$ abgeleitet ist, wobei der Gesamt-$CO_2$-Gehalt des Polyethercarbonatpolyol-Copolymers zwischen 1 und 40 Gew.-% liegt, die Carbonatbindungen <95 % der Gesamtbindungen aus der Copolymerisation ausmachen und das Molekulargewicht zwischen 100 und 5000 g/mol liegt.

**2.** Hartschaum nach Anspruch 1, wobei das Polyethercarbonatpolyol-Copolymer 20 bis 100 Gew.-% des gesamten Polyols bildet, das während der Reaktion mit dem (Poly)isocyanat zum Herstellen des Hartschaumstoffs vorhanden ist, noch typischer 40 bis 100 Gew.-%, am typischsten 50-100 Gew.-% des gesamten vorhandenen Polyols, wie mindestens 60, 70, 80, 90, 92, 94, 96, 98 oder 99 Gew.-% des gesamten vorhandenen Polyols.

**3.** Hartschaum nach Anspruch 1 oder 2, wobei der $CO_2$-Gehalt in dem Polyethercarbonatpolyol-Copolymer 5-35 Gew.-%, bevorzugter 10-30 Gew.-% und am bevorzugtesten 15-30 Gew.-%, wie beispielsweise 15-25 Gew.-%, beträgt; und/oder wobei der Carbonatgehalt des Polyethercarbonatpolyols bis zu 90 %, und bevorzugter <85 %, eines vollständig alternierenden Polycarbonatpolyols beträgt, das frei von Etherbindungen ist; und/oder wobei der Etherbindungsgehalt des Polyethercarbonatpolyol-Copolymers mindestens 10 % und bevorzugter mindestens 15 % beträgt; und/oder wobei mehr als 95 % der Kettenenden des Polyethercarbonatpolyol-Copolymers -OH-Gruppen sind, bevorzugter mindestens 98 %, am bevorzugtesten mindestens 99 %; und/oder wobei die Funktionalität des Polyolcopolymers zwischen 2 und 6, noch typischer zwischen 2 und 4, am typischsten zwischen 2 und 3, wie beispielsweise 2, liegen kann; und/oder wobei der OH-Gehalt in dem Polyol in dem Bereich von 20 bis 500 mg KOH/g, bevorzugt 70 bis 350, noch bevorzugter 100 bis 300, liegen kann; und/oder wobei das Polyethercarbonatpolyol m Carbonatbindungen und n Etherbindungen aufweist, wobei m und n ganze Zahlen sind, und wobei m/(n+m) von größer als Null bis Kleiner als 0,95 ist; optional, wobei m/(n+m) etwa 0,05, etwa 0,10, etwa 0,15, etwa 0,20, etwa 0,25, etwa 0,25, etwa 0,30, etwa 0,35, etwa 0,40, etwa 0,45, etwa 0,50, etwa 0,55, etwa 0,60, etwa 0,65, etwa 0,70, etwa 0,75, etwa 0,80, etwa 0,85, etwa 0,90, etwa 0,95 betragenf oder innerhalb eines beliebigen Bereich liegen kann, der innerhalb von zwei dieser spezifischen Werte liegt, beispielsweise kann m/(n+m) etwa 0,05 bis etwa 0,95, etwa 0,10 bis etwa 0,90, etwa 0,15 bis etwa 0,85, etwa 0,20 bis etwa 0,80 oder von etwa 0,20 bis etwa 0,70 betragen.

**4.** Hartschaum nach einem der vorstehenden Ansprüche, wobei die Polyethercarbonatpolyol-Copolymere die folgende Formel (IV) aufweisen:

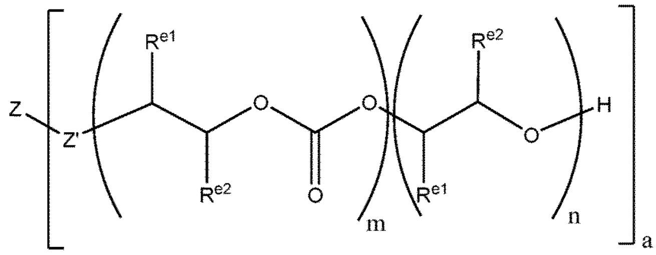
(IV)

wobei die Identität von Z und Z' von der Art der Starterverbindung abhängt, die Identität von $R^{e1}$ und $R^{e2}$ von der Art des zum Herstellen des Polyethercarbonatpolyols verwendeten Epoxids abhängt und m und n die Menge der Carbonat- und Etherbindungen in dem Polyethercarbonatpolyol definieren; optional, wobei die Starterverbindung die folgende Formel (III) aufweist:

$$Z(R^Z)_a \qquad (III)$$

wobei Z eine beliebige Gruppe sein kann, an die 2 oder mehr -$R^Z$-Gruppen gebunden sein können; optional, wobei Z ausgewählt ist aus optional substituiertem Alkylen, Alkenylen, Alkinylen, Heteroalkylen, Heteroalkenylen, Heteroalkinylen, Cycloalkylen, Cycloalkenylen, Heterocycloalkylen, Heterocycloalkenylen, Arylen, Heteroarylen, oder Z eine Kombination aus einer dieser Gruppen sein kann, beispielsweise kann Z eine Alkylarylen-, Heteroalkylarylen-, Heteroalkylheteroarylen- oder Alkylheteroarylengruppe sein;

a eine ganze Zahl von mindestens 2 ist;
Jedes $R^Z$ -OH, -NHR', -SH, -C(O)OH, -P(O)(OR')(OH), - PR' (O)$(OH)_2$ oder -PR'(O)OH sein kann und R' H oder optional substituiertes Alkyl, Heteroalkyl, Aryl, Heteroaryl, Cycloalkyl oder Heterocycloalkyl sein kann;
jedes $R^{e1}$ unabhängig ausgewählt ist aus H, Halogen, Hydroxyl oder optional substituiertem Alkyl, Alkenyl, Alkinyl, Cycloalkyl, Heterocycloalkyl, Aryl, Heteroaryl, Heteroalkyl oder Heteroalkenyl, bevorzugt $R^{e1}$ ausgewählt ist aus H oder optional substituiertem Alkyl;
jedes $R^{e2}$ unabhängig ausgewählt ist aus H, Halogen, Hydroxyl oder optional substituiertem Alkyl, Alkenyl, Alkinyl, Cycloalkyl, Heterocycloalkyl, Aryl, Heteroaryl, Heteroalkyl oder Heteroalkenyl, bevorzugt $R^{e2}$ ausgewählt ist aus H oder optional substituiertem Alkyl;
oder $R^{e1}$ und $R^{e2}$ zusammen einen gesättigten, teilweise ungesättigten oder ungesättigten Ring bilden, der

Kohlenstoff- und Wasserstoffatome und optional ein oder mehrere Heteroatome (z. B. O, N oder S) enthält, beispielsweise bilden $R^{e1}$ und $R^{e2}$ zusammen einen 5- oder sechs-gliedrigen Ring; und Z' $R^Z$ entspricht, mit der Ausnahme, dass eine Bindung das labile Wasserstoffatom ersetzt; wobei, obwohl das in IV gezeichnete Polymer Z' an den Kohlenstoff einer Ethyleneinheit aus dem Epoxid gebunden darstellt, $R^Z$ zuerst mit $CO_2$ reagieren kann, wenn es - OH, -SH, -NHR', P(O) (OR') (OH), -PR' (O) $(OH)_2$ oder - PR' (O)OH ist und in diesen Fällen Z' dementsprechend - O-C(O)O-, -S-C(O)O-, -NR'-C(O)O-, -P(O)(OR')O-C(O)O-, - PR' (O)(OH)O-C(O)O- oder -PR' (O)O-C(O)O-. wäre.

**5.** Hartschaum nach einem der vorstehenden Ansprüche, wobei die Anzahl der Ether- und Carbonatbindungen (n+m) in dem Polyethercarbonat das Molekulargewicht des Polyethercarbonatpolymers definiert, wobei $n \leq 5$ und $m \leq 5$ oder $n \leq 10$ und $m \leq 10$ oder $n \leq 20$ und $m \leq 20$ oder $n \leq 50$ und $m \leq 50$ oder wobei bevorzugt $m + n \leq 10$ oder $m + n \leq 20$ oder $m + n \leq 100$; und/oder wobei die verwendeten Polyolpolymere einen PDI von etwa 1 bis weniger als etwa 2, bevorzugt von etwa 1 bis weniger als etwa 1,75, noch bevorzugter von etwa 1 bis weniger als etwa 1,5 und sogar noch bevorzugter von etwa 1 bis weniger als etwa 1,3 aufweisen; und/oder wobei die verwendeten Polyolpolymere ein Molekulargewicht in dem Bereich von etwa 100 bis etwa 5.000 g/mol, bevorzugt von etwa 200 bis etwa 3.000 g/mol, vorzugsweise von etwa 300 bis etwa 2.000 g/mol, noch bevorzugter von etwa 300 bis etwa 1.000 g/mol, am bevorzugtesten von etwa 300 bis 800 g/mol aufweisen.

**6.** Hartschaum nach einem der vorstehenden Ansprüche, wobei ein oder mehrere Polyole vorhanden sind, die mit einem oder mehreren (Poly)isocyanaten umgesetzt werden, um das endgültige Hartschaumprodukt herzustellen; und/oder wobei das (Poly)isocyanat zwei oder mehr Isocyanatgruppen pro Molekül umfasst; und/oder wobei das verwendete (Poly) isocyanat eine Funktionalität von mehr als 2 aufweist, wie beispielsweise eine Funktionalität zwischen 2 und 5, noch typischer zwischen 2 und 4, am typischsten zwischen 2 und 3.

**7.** Hartschaum nach einem der vorstehenden Ansprüche, wobei der Hartschaum ein Prepolymer enthält; und/oder wobei die Entflammbarkeit gemäß ASTM D3014 in dem Bereich von 40 bis 100 % der zurückbehaltenen Masse liegt; und/oder wobei der Hartschaum eine Entflammbarkeit von weniger als 20 % Massenverlust und einen Isocyanatgehalt von 30 nis 99 Gew.-%, bevorzugt 40-90 Gew.-%, noch bevorzugter 50-80 Gew.-%, aufweist; und/oder wobei der Hartschaum eine Druckfestigkeit in dem Bereich von 10-700 kPa, noch typischer 100-700 kPa, aufweist; und/oder wobei der Hartschaum eine Massenretention beim Brennen von mehr als 40 %, noch typischer mehr als 70 %, am typischsten mehr als 80 %, aufweist.

**8.** Hartschaum nach einem der vorstehenden Ansprüche, wobei die Hartschäume ein oder mehrere geeignete Flammschutzmittel umfassen; optional, wobei die Flammschutzmittel in Mengen von 0 bis 60 Teilen der Gesamtmischung vorhanden sind.

**9.** Verfahren zum Herstellen eines Hartschaums, umfassend das Reaktionsprodukt eines (Poly)isocyanats und eines Polyethercarbonatpolyol-Copolymers, wobei das Verfahren die folgenden Schritte umfasst:
Reagieren eines (Poly)isocyanats mit einem Polyethercarbonatpolyol-Copolymer bei Vorhandensein eines geeigneten Katalysators für die Polyurethanherstellung und optional bei Vorhandensein eines Trimerisierungskatalysators für die Polyisocyanurat-Herstellung unter Bedingungen, die einen Hartschaum erzeugen, wobei das Polyethercarbonatpolyol-Copolymer aus der Copolymerisation von einem oder mehreren Epoxiden mit $CO_2$ abgeleitet ist, wobei der Gesamt-$CO_2$-Gehalt des Copolymers zwischen 1 und 40 Gew.-% liegt, die Carbonatbindungen <95 % der Gesamtbindungen aus der Copolymerisation ausmachen und das Molekulargewicht zwischen 100 und 5000 g/mol liegt.

**10.** Verfahren nach Anspruch 9, wobei die Reaktion bei einem Isocyanatindex von mindestens 200, noch typischer von mindestens 220, wie 250 oder 300, durchgeführt wird; und/oder wobei der Isocyanatindex für die Reaktion in dem Bereich von 100 bis 800, noch typischer in dem Bereich von 200 bis 350, liegt; und/oder wobei die anfänglichen Reaktionstemperaturen während der Polyol/Isocyanat-Reaktion zwischen 0 und 200 °C, noch typischer zwischen 60 und 100 °C liegen; und/oder wobei die Temperaturen während einer Trimerisierungsreaktion zwischen 20 und 200 °C, noch typischer zwischen 60 und 140 °C liegen; und/oder wobei ein Überschuss an (Poly)isocyanat, noch typischer ein Überschuss an polymerem Isocyanat im Verhältnis zu Polyol verwendet wird, sodass eine Polyisocyanurat-Ringbildung bei Vorhandensein eines Trimerisierungskatalysators möglich ist.

**11.** Verfahren nach Anspruch 9 oder 10, wobei die Mischungen zum Herstellen der Hartschäume einen oder mehrere Katalysatoren wie tertiäre Aminverbindungen und/oder organometallische Verbindungen enthalten.

**12.** Verfahren nach einem der Ansprüche 9 bis 11 oder ein Hartschaum nach einem der Ansprüche 1 bis 8, wobei geeignete Trimerisierungskatalysatoren tertiäre Amine, Alkalimetallcarboxylate, quaternäre Ammoniumsalze, Kombinationen davon und Kombinationen von tertiären Aminen und Epoxiden enthalten; optional, wobei die tertiären Aminkatalysatoren 1,3,5-Tris(dialkylaminoalkyl)hexahydrotriazine wie 1,3,5-Tris(dimethylaminopropyl)hexahydrotriazin, 1,3,5-Trialkylhexahydrotriazine wie 1,3,5-Tripropylhexahydrotriazin, 2,4,6-Tris(dimethylaminomethyl)phenole wie 2,4,6-Tris(dimethylaminomethyl)phenol und Diaminobicyclooctan enthalten; Alkalimetallcarboxylatkatalysatoren Kaliumacetat und Kaliumoctanoat enthalten; und quaternäre Ammoniumsalze Salze der Struktur $(NR_4)_yA$ enthalten, wobei:

A ein Anion ist, das von einer Säure mit einem pK-Wert (wobei pK der negative Logarithmus der Dissoziationskonstante ist) in wässriger Lösung bei im Wesentlichen Raumtemperatur von 2,0 oder mehr abgeleitet ist und frei von Substituenten ist, die unter Trimerisierungsbedingungen mit Isocyanaten reagieren können, und das aus der Gruppe bestehend aus anorganischen Sauerstoffsäuren, Carbonsäuren und Kohlensäure ausgewählt ist, jedes R eine beliebige organische Gruppe außer A ist und frei von Substituenten und funktionellen Gruppen ist, die unter Trimerisierungsbedingungen mit Isocyanaten reagieren können, und wobei nicht mehr als ein R pro N einen direkt an N gebundenen aromatischen Ring enthält, und y eine ganze Zahl ist, deren Wert der Wertigkeit von A entspricht; oder

optional, wobei die quaternären Ammoniumsalze ausgewählt sind aus Trimethylammoniumformiat, Tetramethylammoniumcarbonat, Tetramethylammonium-2-ethylhexanoat, Tetramethylammoniumchloracetat, Tetramethyloctanoat und Tetramethylammoniumdibutylphosphat;

oder optional, wobei die tertiären Amine zum Verwenden mit Epoxiden DABCO (Diethylentriamin), Tetramethylethylendiamin, Pentamethylentriethylentriamin und Hexamethylentriethylentetramin enthalten.

**13.** Hartschaum nach einem der Ansprüche 1 bis 8, wobei das Polyethercarbonatcopolymer eine Funktionalität von mehr als 2 aufweist und wobei der Gesamt-$CO_2$-Gehalt des Polyethercarbonatpolyol-Copolymers zwischen 10 und 35 Gew.-%, bevorzugt zwischen 10 und 30 Gew.-%, liegt, die Carbonatbindungen <95 % der Gesamtbindungen aus der Copolymerisation ausmachen und das Molekulargewicht des Polyethercarbonatpolyol-Copolymers weniger als 1500 g/mol, bevorzugt weniger als 1000 g/mol, beträgt.

**14.** Hartschaum nach einem der Ansprüche 1 bis 8, wobei das Molekulargewicht des Polyethercarbonatpolyol-Copolymers weniger als 1000 g/mol beträgt, die Carbonatbindungen <95 % der Gesamtbindungen aus der Copolymerisation ausmachen und der Gesamt-$CO_2$-Gehalt zwischen 20 und 35 Gew.-%, bevorzugt zwischen 22 und 35 Gew.-%, zwischen 25 und 35 Gew.-% oder zwischen 30 und 35 Gew.-% liegt.

**15.** Zusammensetzung, die einen Teil einer zweiteiligen Zusammensetzung zum Herstellen eines Hartschaums bildet, wobei die Zusammensetzung ein Polyethercarbonatpolyol-Copolymer und ein Treibmittel umfasst, wobei das Polyethercarbonatpolyol-Copolymer aus der Copolymerisation von einem oder mehreren Epoxiden mit $CO_2$ abgeleitet ist, wobei der Gesamt-$CO_2$-Gehalt des Polyethercarbonatpolyol-Copolymers zwischen 1 und 40 Gew.-% liegt, die Carbonatbindungen <95 % der Gesamtbindungen aus der Copolymerisation ausmachen und das Molekulargewicht zwischen 100 und 5000 g/mol liegt, und wobei das Treibmittel ein Kohlenwasserstoff ist, bevorzugt ausgewählt aus der Gruppe umfassend Butan, Isobutan, 2,3-Dimethylbutan, n- und iso-Pentan-Isomere, Hexan-Isomere, Heptan-Isomere und Cycloalkane, enthaltend Cyclopentan, Cyclohexan und Cycloheptan, noch bevorzugter aus der Gruppe umfassend Cyclopentan, Isopentan, n-Pentan, Hexan und Heptan; optional, wobei das Treibmittel n-Pentan ist.

## Revendications

**1.** Mousse rigide, typiquement, une mousse de polyuréthane, plus typiquement, un polyisocyanurate ou une mousse mixte de polyisocyanurate/polyuréthane, comprenant le produit de réaction d'un (poly)isocyanate, et un copolymère de polyol de polyéthercarbonate, dans laquelle le copolymère de polyol de polyéthercarbonate est dérivé de la copolymérisation d'un ou plusieurs époxydes avec du $CO_2$, dans laquelle la teneur totale en $CO_2$ du copolymère de polyol de polyéthercarbonate est comprise entre 1 et 40 % en poids, les liaisons carbonate sont <95 % des liaisons totales issues de la copolymérisation, et le poids moléculaire est de 100 à 5000 g/mol.

**2.** Mousse rigide selon la revendication 1, dans laquelle le copolymère de polyol de polyéthercarbonate forme de 20 à 100 % en poids du polyol total présent pendant la réaction avec le (poly)isocyanate pour produire la mousse rigide, plus typiquement, de 40 à 100 % en poids, le plus typiquement, de 50 à 100 % en poids du polyol total présent tel qu'au

moins, 60, 70, 80, 90, 92, 94, 96, 98 ou 99 % en poids du polyol total présent.

**3.** Mousse rigide selon la revendication 1 ou 2, dans laquelle la teneur en $CO_2$ dans le copolymère de polyol de polyéthercarbonate est de 5 à 35 % en poids, de préférence, de 10 à 30 % en poids, de manière davantage préférée, de 15 à 30 % en poids, comme de 15 à 25 % en poids ; et/ou dans laquelle la teneur en carbonate du polyol de polyéthercarbonate va jusqu'à 90 % d'un polyol de polycarbonate entièrement alterné qui est exempt de liaisons éther, de préférence, <85 % ; et/ou dans laquelle la teneur en liaisons éther du copolymère de polyol de polyéthercarbonate est d'au moins 10 %, de préférence d'au moins 15 % ; et/ou dans laquelle plus de 95 % des extrémités de chaîne du copolymère de polyol de polyéthercarbonate sont des groupes -OH, de préférence, au moins 98 %, de manière davantage préférée, au moins 99 % ; et/ou dans laquelle la fonctionnalité du copolymère de polyol peut être de 2 à 6, plus typiquement, de 2 à 4, le plus typiquement, de 2 à 3 comme 2 ; et/ou dans laquelle la teneur en OH dans le polyol peut se situer dans la plage de 20 à 500 mg de KOH/g, de préférence de 70 à 350, de manière davantage préférée, de 100 à 300 ; et/ou dans laquelle le polyol de polyéthercarbonate qui a des liaisons carbonate m et des liaisons éther n, m et n étant des nombres entiers, et m/(n+m) étant supérieur à zéro et inférieur à 0,95 ; éventuellement, m/(n+m) pouvant être d'environ 0,05, d'environ 0,10, d'environ 0,15, d'environ 0,20, d'environ 0,25, d'environ 0,25, d'environ 0,30, d'environ 0,35, d'environ 0,40, d'environ 0,45, d'environ 0,50, d'environ 0,55, d'environ 0,60, d'environ 0,65, d'environ 0,70, d'environ 0,75, d'environ 0,80, d'environ 0,85, d'environ 0,90, d'environ 0,95, ou dans n'importe quelle plage se situant dans deux de ces valeurs spécifiques, par exemple, m/(n+m) pouvant être d'environ 0,05 à environ 0,95, d'environ 0,10 à environ 0,90, d'environ 0,15 à environ 0,85, d'environ 0,20 à environ 0,80, ou d'environ 0,20 à environ 0,70.

**4.** Mousse rigide selon l'une quelconque des revendications précédentes, dans laquelle les copolymères de polyol de polyéthercarbonate présentent la formule (IV) suivante :

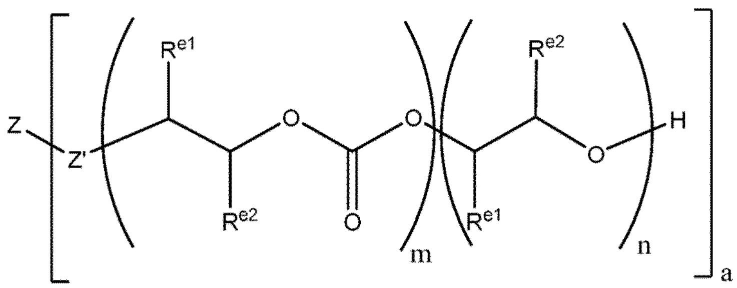

(IV)

dans laquelle l'identité de Z et Z' dépend de la nature du composé de départ, l'identité de $R^{e1}$ et $R^{e2}$ dépendra de la nature de l'époxyde utilisé pour préparer le polyol de polyéthercarbonate, et m et n définissent la quantité de liaisons carbonate et éther dans le polyol de polyéthercarbonate ; éventuellement, dans laquelle le composé de départ est de formule (III) :

$$Z\ (R^Z)_a \qquad \text{(III)}$$

dans laquelle Z peut être n'importe quel groupe qui peut avoir 2 groupes $-R^Z$ ou plus attachés à celui-ci ; éventuellement dans laquelle Z est choisi parmi alkylène, alcénylène, alcynylène, hétéroalkylène, hétéroalcénylène, hétéroalcynylène, cycloalkylène, cycloalcénylène, hétérocycloalkylène, hétérocycloalcénylène, arylène, hétéroarylène éventuellement substitués, ou Z peut être une combinaison de n'importe lequel de ces groupes, par exemple Z peut être un groupe alkylarylène, hétéroalkylarylène, hétéroalkylhétéroarylène ou alkylhétéroarylène ;

a est un nombre entier qui est d'au moins 2 ;
chaque $R^Z$ peut être -OH, -NHR', -SH, -C(O)OH, - P(O)(OR') (OH), -PR' (O)$(OH)_2$ ou -PR' (O)OH, et R' peut être H, ou alkyle, hétéroalkyle, aryle, hétéroaryle, cycloalkyle ou hétérocycloalkyle éventuellement substitués ;
chaque $R^{e1}$ est indépendamment choisi parmi H, halogène, hydroxyle ou alkyle, alcényle, alcynyle, cycloalkyle, hétérocycloalkyle, aryle, hétéroaryle, hétéroalkyle ou hétéroalcényle éventuellement substitués, de préférence $R^{e1}$ est choisi parmi H ou alkyle éventuellement substitué ;
chaque $R^{e2}$ est indépendamment choisi parmi H, halogène, hydroxyle ou alkyle, alcényle, alcynyle, cycloalkyle, hétérocycloalkyle, aryle, hétéroaryle, hétéroalkyle ou hétéroalcényle éventuellement substitués, de préférence $R^{e2}$ est choisi parmi H ou alkyle éventuellement substitué ;
ou $R^{e1}$ et $R^{e2}$ forment ensemble un cycle saturé, partiellement insaturé ou insaturé contenant des atomes de carbone et d'hydrogène, et éventuellement un ou plusieurs hétéroatomes (par exemple O, N ou S), par exemple, $R^{e1}$ et $R^{e2}$ forment ensemble un cycle à 5 ou six chaînons ; et
Z' correspond à $R^Z$, sauf qu'une liaison remplace l'atome d'hydrogène labile ;
dans laquelle bien que le polymère dessiné dans la formule IV représente Z' lié au carbone d'une unité d'éthylène de l'époxyde, $R^Z$ peut réagir d'abord avec du $CO_2$ s'il s'agit de -OH, -SH, -NHR', P(O)(OR')(OH), -PR' (O)$(OH)_2$ ou -PR' (O)OH et dans ces cas, Z' serait en conséquence -O-C(O)O-, -S-C(O)O-, -NR'-C(O)O-, - P (O)(OR')O-C(O)O-, -PR'(O)(OH)O-C(O)O- ou -PR'(O)OC(O)O-.

**5.** Mousse rigide selon l'une quelconque des revendications précédentes, dans laquelle le nombre de liaisons éther et carbonate (n+m) dans le polyéthercarbonate définit le poids moléculaire du polymère de polyéthercarbonate où $n \leq 5$ et $m \leq 5$, ou $n \leq 10$ et $m \leq 10$, ou $n \leq 20$ et $m \leq 20$ ou $n \leq 50$ et $m \leq 50$, ou dans laquelle, de préférence, $m + n \leq 10$, ou $m + n \leq 20$, ou $m + n \leq 100$ ; et/ou dans laquelle les polymères de polyols utilisés ont un PDI d'environ 1 à moins d'environ 2, de préférence d'environ 1 à moins d'environ 1,75, de manière davantage préférée d'environ 1 à moins d'environ 1,5, de manière encore davantage préférée, d'environ 1 à moins d'environ 1,3 ; et/ou dans laquelle les polymères de polyols utilisés ont un poids moléculaire dans la plage d'environ 100 à environ 5 000 g/mol, de préférence d'environ 200 à environ 3 000 g/mol, de préférence d'environ 300 à environ 2 000 g/mol, de manière davantage préférée d'environ 300 à environ 1 000 g/mol, de manière préférée entre toutes d'environ 300 à 800 g/mol.

**6.** Mousse rigide selon l'une quelconque des revendications précédentes, dans laquelle se trouvent un ou plusieurs polyols, qui sont mis à réagir avec un ou plusieurs (poly)isocyanates pour produire le produit de mousse rigide final ; et/ou dans laquelle le (poly)isocyanate comprend deux ou plusieurs groupes isocyanate par molécule ; et/ou dans laquelle le (poly)isocyanate utilisé a une fonctionnalité supérieure à 2 telle qu'une fonctionnalité de 2 à 5, plus typiquement, de 2 à 4, le plus typiquement, de 2 à 3.

**7.** Mousse rigide selon l'une quelconque des revendications précédentes, dans laquelle la mousse rigide incorpore un prépolymère ; et/ou dans laquelle l'inflammabilité selon ASTM D3014 se trouve dans la plage de 40 à 100 % de la masse retenue ; et/ou dans laquelle la mousse rigide présente une inflammabilité inférieure à 20 % de la masse perdue et une teneur en isocyanate de 30 à 99 % en poids, de préférence de 40 à 90 % en poids, de manière davantage préférée de 50 à 80 % en poids ; et/ou dans laquelle la mousse rigide présente une résistance à la compression se situant dans la plage de 10 à 700 kPa, plus typiquement de 100 à 700 kPa ; et/ou dans laquelle la mousse rigide présente une rétention de masse lors de la combustion supérieure à 40 %, plus typiquement, supérieure à 70 %, le plus typiquement, supérieure à 80 %.

**8.** Mousse rigide selon l'une quelconque des revendications précédentes, dans laquelle les mousses rigides comprennent un ou plusieurs retardateurs de flamme appropriés ; éventuellement dans laquelle les retardateurs de flamme sont présents en quantités de 0 à 60 parties du mélange total.

**9.** Procédé de production d'une mousse rigide comprenant le produit de réaction d'un (poly)isocyanate et d'un copolymère de polyol de polyéthercarbonate comprenant les étapes consistant à :
faire réagir un (poly)isocyanate avec un copolymère de polyol de polyéthercarbonate, en présence d'un catalyseur approprié pour la production de polyuréthane, et éventuellement en présence d'un catalyseur de trimérisation pour la production de polyisocyanurate, dans des conditions qui produiront une mousse rigide, dans lequel le copolymère de polyol de polyéthercarbonate est dérivé de la copolymérisation d'un ou plusieurs époxydes avec du $CO_2$, dans lequel la teneur totale en $CO_2$ du copolymère est comprise entre 1 et 40 % en poids, les liaisons carbonate sont <95 % des liaisons totales issues de la copolymérisation et le poids moléculaire est de 100 à 5000 g/mol.

**10.** Procédé selon la revendication 9, dans lequel la réaction est effectuée à un indice d'isocyanate d'au moins 200, plus typiquement, d'au moins 220 comme 250 ou 300 ; et/ou dans lequel l'indice d'isocyanate pour la réaction se situe dans la plage de 100 à 800, typiquement, dans la plage de 200 à 350 ; et/ou dans lequel les températures de réaction initiales au cours de la réaction polyol/isocyanate se situent entre 0 et 200 °C, plus typiquement entre 60 et 100 °C ; et/ou dans lequel les températures au cours de toute réaction de trimérisation se situent entre 20 et 200 °C, plus typiquement entre 60 et 140 °C ; et/ou dans lequel un excès de (poly)isocyanate, plus typiquement, un excès d'isocyanate polymère par rapport au polyol est utilisé de sorte que la formation de cycle polyisocyanurate en présence d'un catalyseur de trimérisation soit possible.

**11.** Procédé selon la revendication 9 ou 10, dans lequel les mélanges qui produisent les mousses rigides contiennent un

ou plusieurs catalyseurs tels que des composés d'amine tertiaire et/ou des composés organométalliques.

**12.** Procédé selon l'une quelconque des revendications 9 à 11 ou mousse rigide selon l'une quelconque des revendications 1 à 8, dans lesquels les catalyseurs de trimérisation appropriés comprennent des amines tertiaires, des carboxylates de métaux alcalins, des sels d'ammonium quaternaire, des combinaisons de ceux-ci, et des combinaisons d'amines tertiaires et d'époxydes ; éventuellement dans lesquels les catalyseurs d'amines tertiaires comprennent les 1,3,5-tris(dialkylaminoalkyl) hexahydrotriazines telles que 1,3,5-tris(diméthylaminopropyl) hexahydrotriazine, des 1,3,5-trialkyl hexahydrotriazines telles que 1,3,5-tripropyl hexahydrotriazine, des 2,4,6-tris(diméthylaminométhyl) phénols tels que 2,4,6-tris (diméthylaminométhyl) phénol et diaminobicyclooctane ; les catalyseurs de carboxylates de métaux alcalins comprennent l'acétate de potassium et l'octanoate de potassium ; et les sels d'ammonium quaternaire comprennent des sels de la structure $(NR_4)_yA$ où :
A est un anion dérivé d'un acide ayant une valeur pK (où pK est le log négatif de la constante de dissociation), en solution aqueuse à température sensiblement ambiante, de 2,0 ou plus et étant exempt de substituants qui peuvent réagir avec des isocyanates dans des conditions de trimérisation et étant choisi dans le groupe constitué par les acides oxygénés inorganiques, les acides carboxyliques et l'acide carbonique, chaque R est un groupe organique autre que A et exempt de tous substituants et groupes fonctionnels qui peuvent réagir avec des isocyanates dans des conditions de trimérisation, et où pas plus d'un R par N contient un cycle aromatique attaché directement à N, et y est un nombre entier égal en valeur à la valence de A ; ou éventuellement, où les sels d'ammonium quaternaire sont choisis parmi le formate de triméthylammonium, le carbonate de tétraméthylammonium, le 2-éthyl hexanoate de tétraméthylammonium, le chloroacétate de tétraméthylammonium, l'octanoate de tétraméthylammonium et le dibutylphosphate de tétraméthylammonium ; ou éventuellement où les amines tertiaires pour une utilisation avec des époxydes comprennent du DABCO (diéthylène triamine), de la tétraméthyl éthylènediamine, de la pentaméthyl diéthylène triamine et de l'hexaméthyl triéthylène tetramine.

**13.** Mousse rigide selon l'une quelconque des revendications 1 à 8, dans laquelle le copolymère de polyéthercarbonate a une fonctionnalité supérieure à 2 et dans laquelle la teneur totale en $CO_2$ du copolymère de polyol de polyéthercarbonate est comprise entre 10 et 35 % en poids, de préférence entre 10 et 30 % en poids, les liaisons carbonate sont <95 % des liaisons totales issues de la copolymérisation, et le poids moléculaire du copolymère de polyol de polyéthercarbonate est inférieur à 1 500 g/mol, de préférence inférieur à 1 000 g/mol.

**14.** Mousse rigide selon l'une quelconque des revendications 1 à 8, dans laquelle le poids moléculaire du copolymère de polyol de polyéthercarbonate est inférieur à 1000 g/mol, les liaisons carbonate sont <95 % des liaisons totales issues de la copolymérisation, et la teneur totale en $CO_2$ est comprise entre 20 et 35 % en poids, de préférence entre 22 et 35 % en poids, entre 25 et 35 % en poids ou entre 30 et 35 % en poids.

**15.** Composition formant une partie d'une composition en deux parties pour produire une mousse rigide, ladite composition comprenant un copolymère de polyol de polyéthercarbonate et un agent gonflant, dans laquelle le copolymère de polyol de polyéthercarbonate est dérivé de la copolymérisation d'un ou plusieurs époxydes avec du $CO_2$, dans laquelle la teneur totale en $CO_2$ du copolymère de polyol de polyéthercarbonate est comprise entre 1 et 40 % en poids, les liaisons carbonate sont <95 % des liaisons totales issues de la copolymérisation, et le poids moléculaire est de 100 à 5000 g/mol, et dans laquelle l'agent gonflant est un hydrocarbure, de préférence choisi dans le groupe comprenant butane, isobutane, 2,3-diméthylbutane, isomères n-pentane et iso-pentane, isomères hexane, isomères heptane et cycloalcanes, y compris cyclopentane, cyclohexane et cycloheptane, de préférence dans le groupe comprenant cyclopentane, iso-pentane, n-pentane, hexane et heptane ; éventuellement dans laquelle l'agent gonflant est le n-pentane.

Figure 1. Mass retained and extinguish time for PEC foams in example 1.

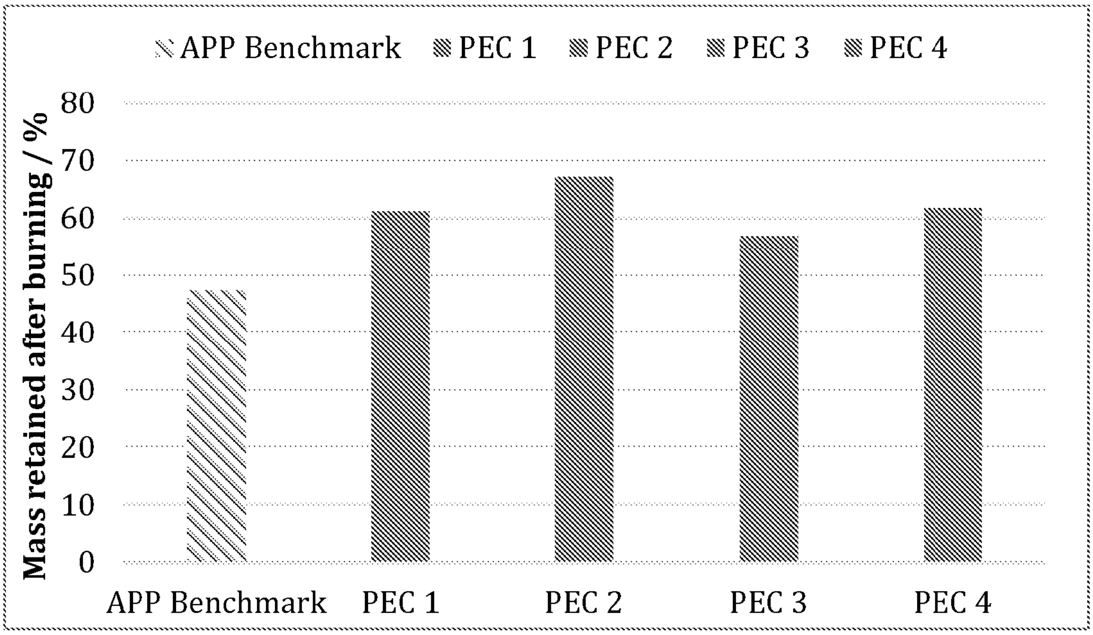


Figure 2. Mass retained and extinguish time for PEC foams in example 2.

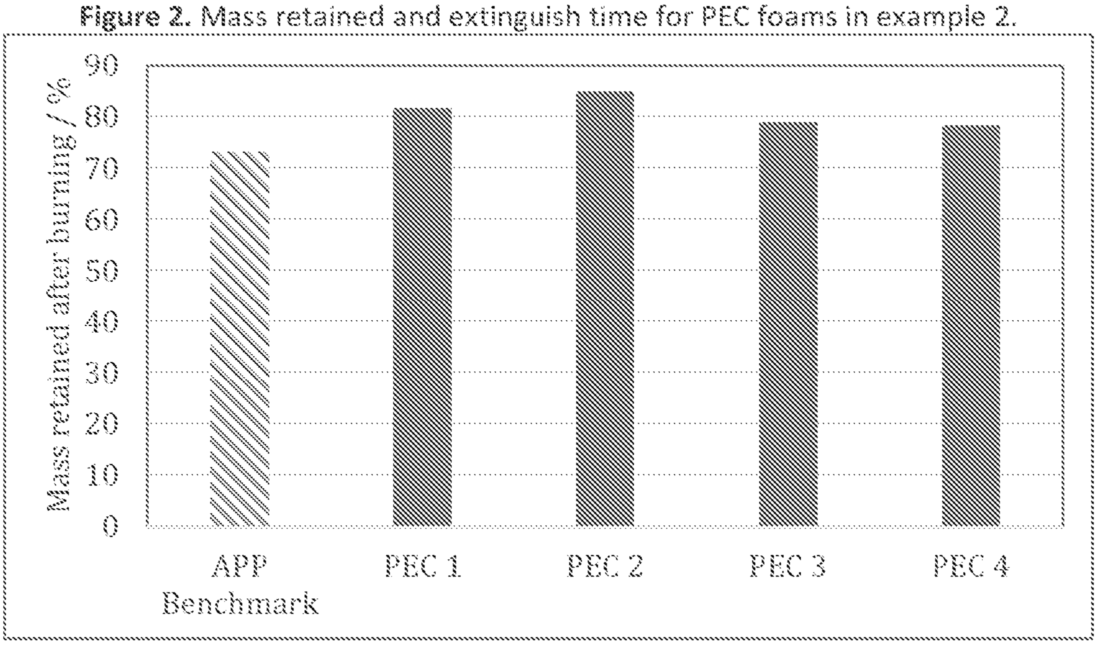

**Figure 3.** Effect of TCPP content on mass retention after burning on rigid foams made with a PEC polyol and an APP benchmark polyol from example 3.

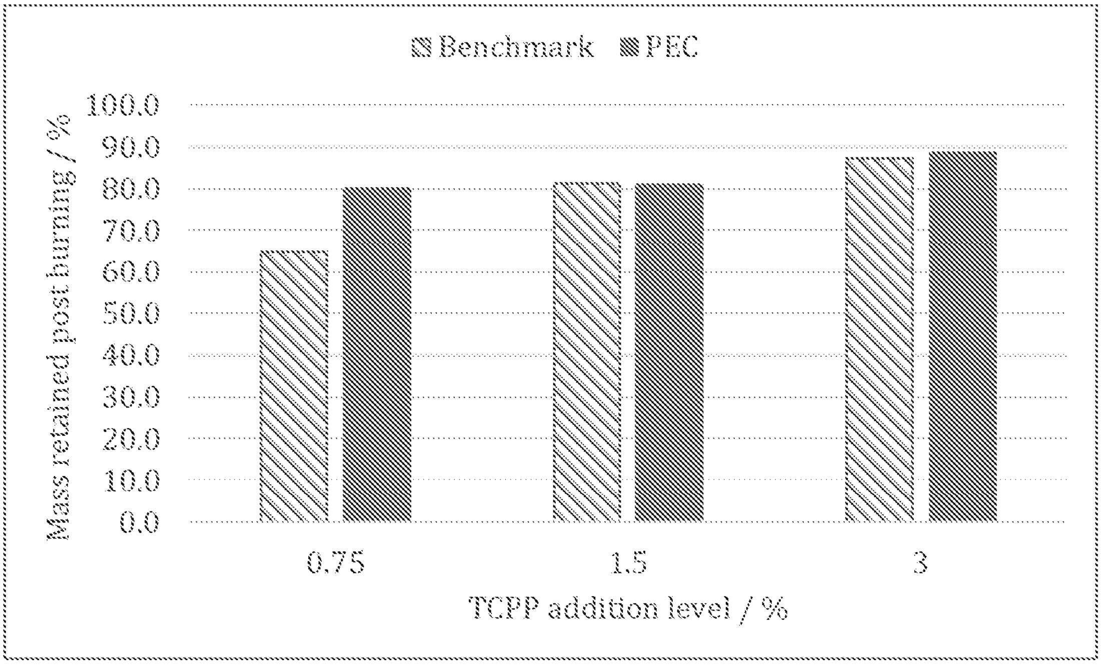


**Figure 4.** Mass retention vs. time during rigid foam sample burning. Measured by cone calorimetry.

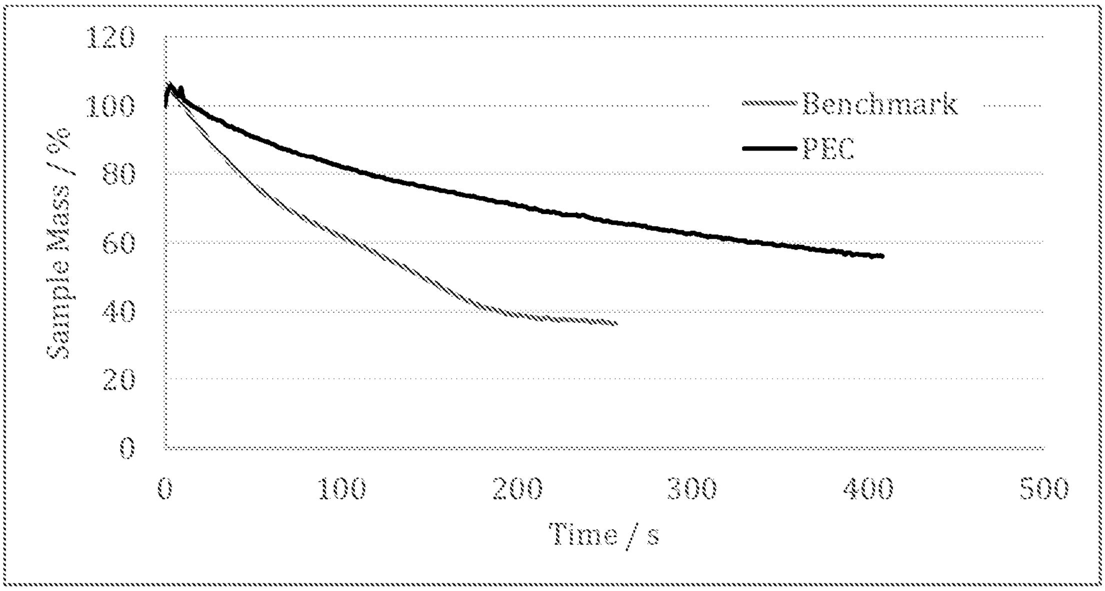

**Figure 5.** Rate of heat emission from rigid foams of example 3, made from PEC polyol and APP Benchmark during burning, measured by cone calorimetry.

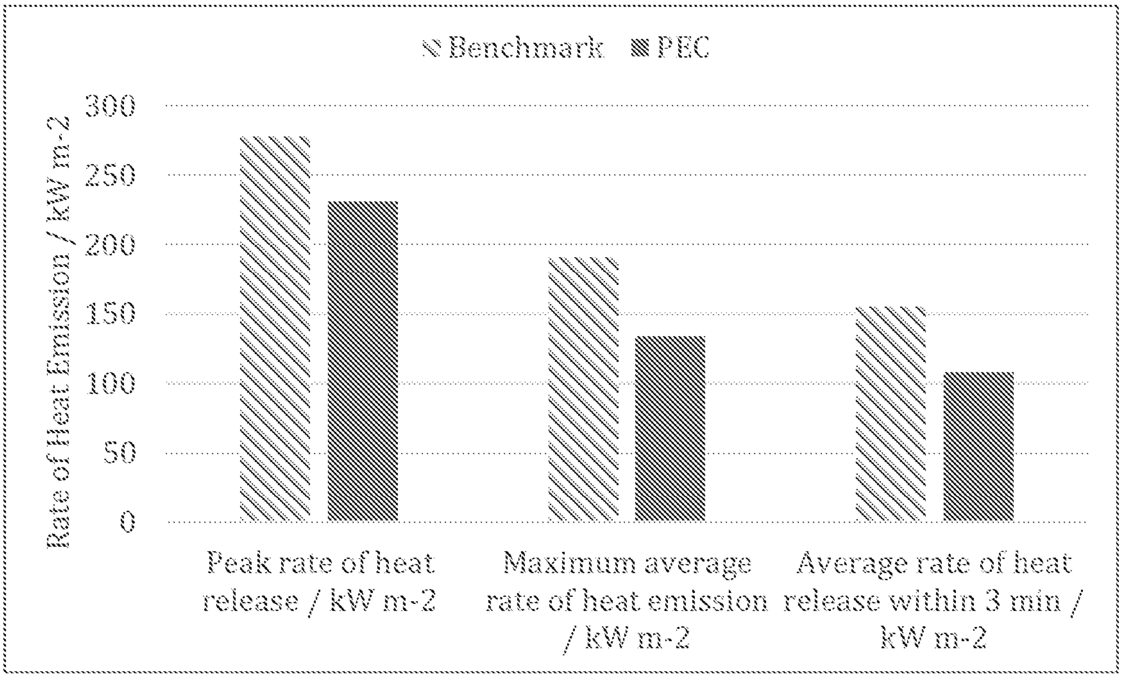


**Figure 6.** Rate of heat emission vs. time of burning for rigid foam samples produced with PEC and APP benchmark polyols from example 3.

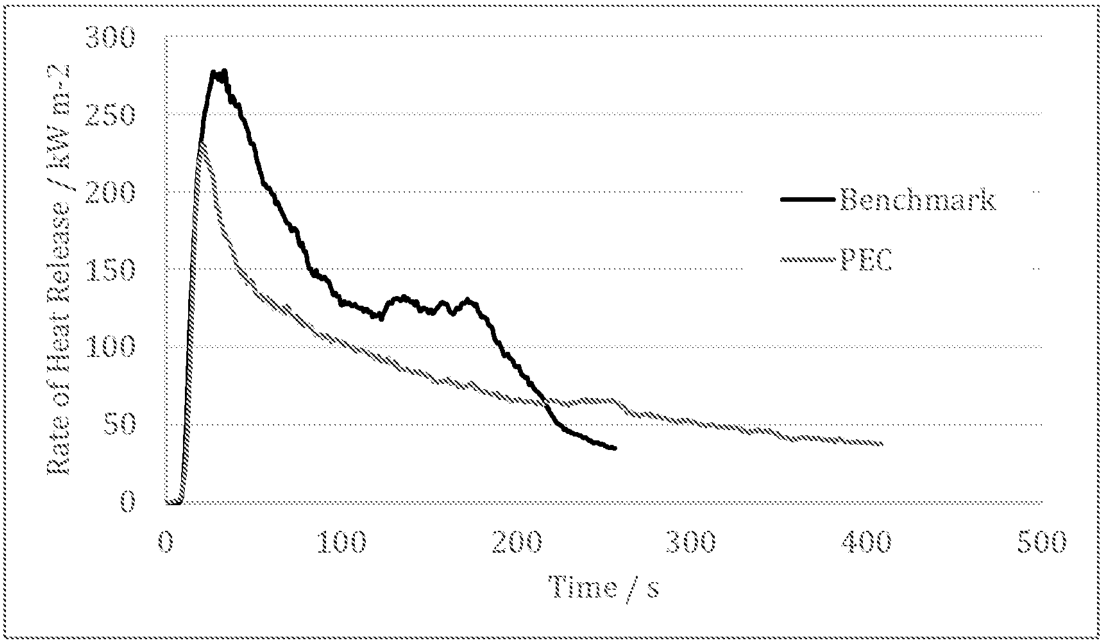

**Figure 7.** Gas emissions during burning of rigid foams of example 3 made using a PEC polyol and an APP benchmark polyol. PEC polyol produced no $CO_2$ during burning.

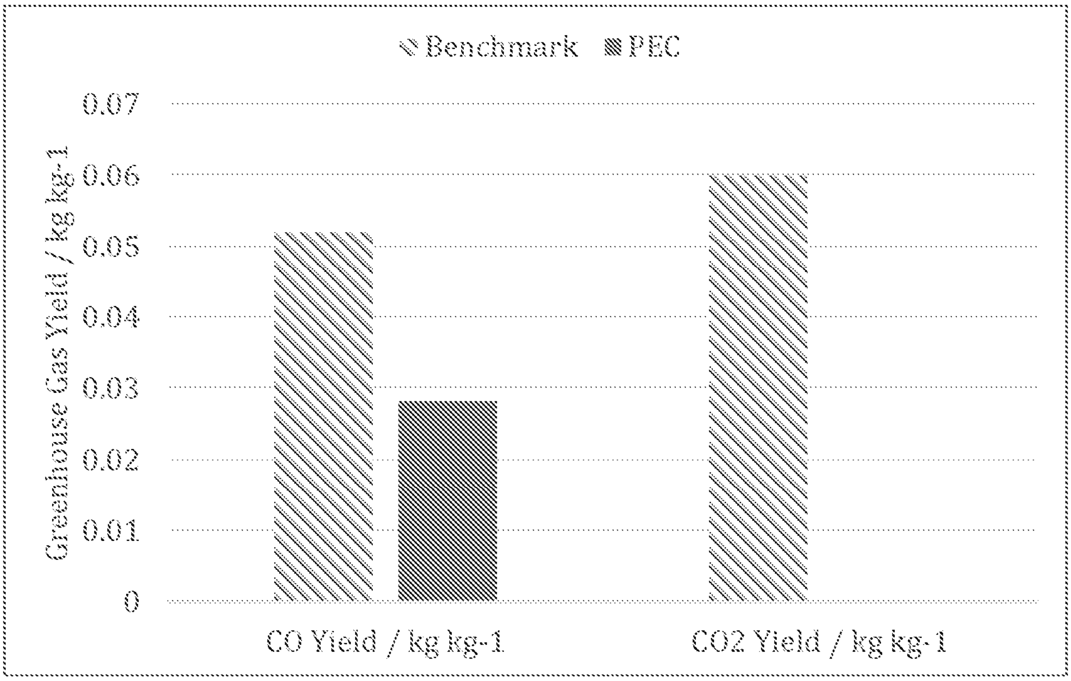


**Figure 8.** Rate of smoke production in burning rigid foam samples made from PEC polyol and APP benchmark polyol in example

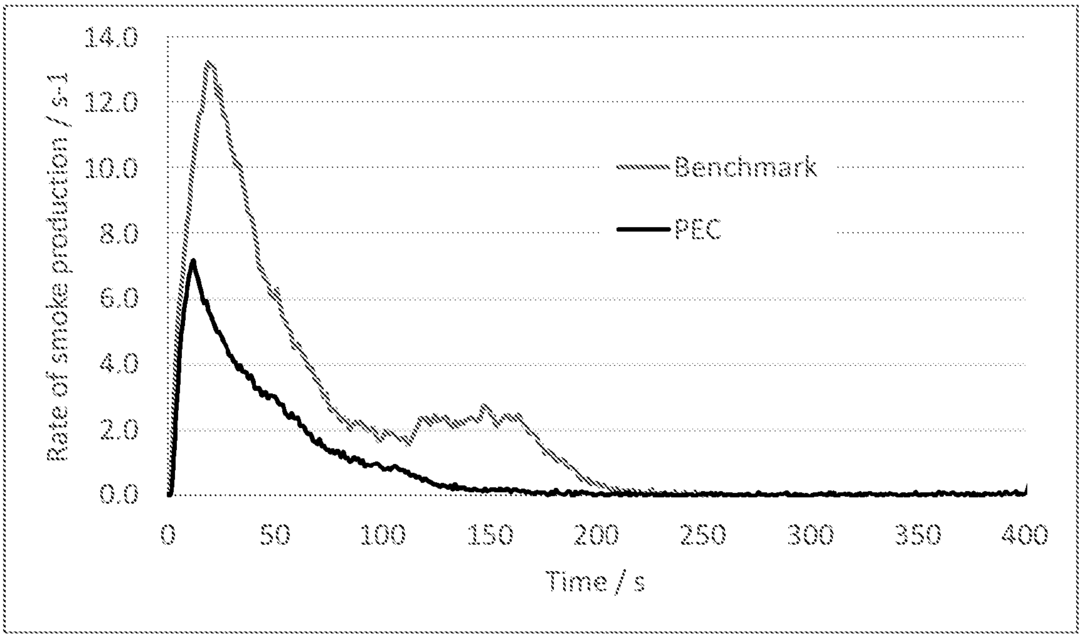

**Figure 9.** Mass retention of rigid foams of example 4 after burning as a function of MDI content of formulation.

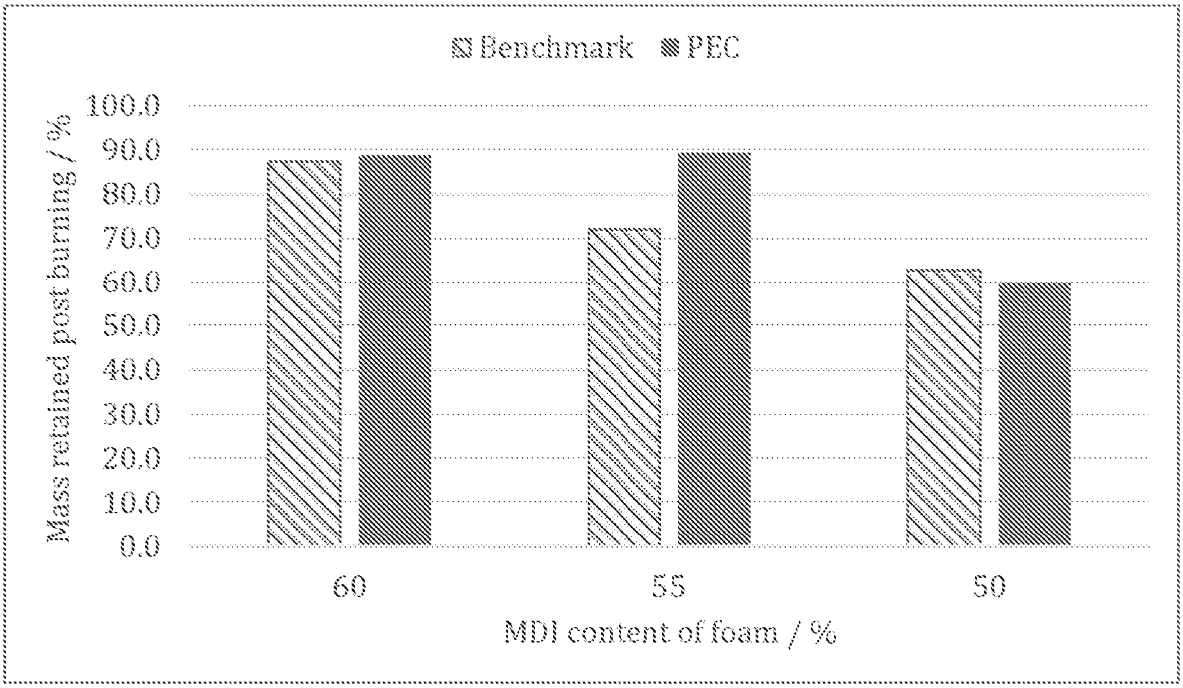


**Figure 10.** PIR foams formed using PEC-4 (left) and alternating PPC-1 (right) which shows a large split caused by an exotherm during foam formation. The larger circular holes in the top right-hand side of the centre are caused by the presence of a temperature probe during formation.

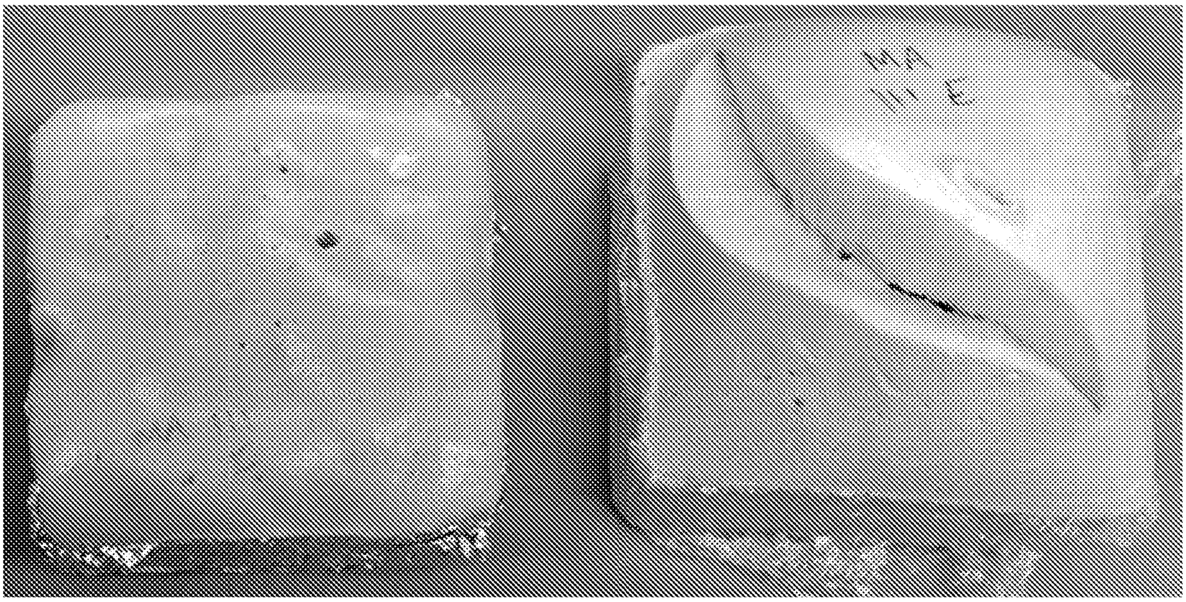

**Figure 11.** FT-IR spectrum of PIR foams formed by alternating PPC polyol and random polyethercarbonate polyol.

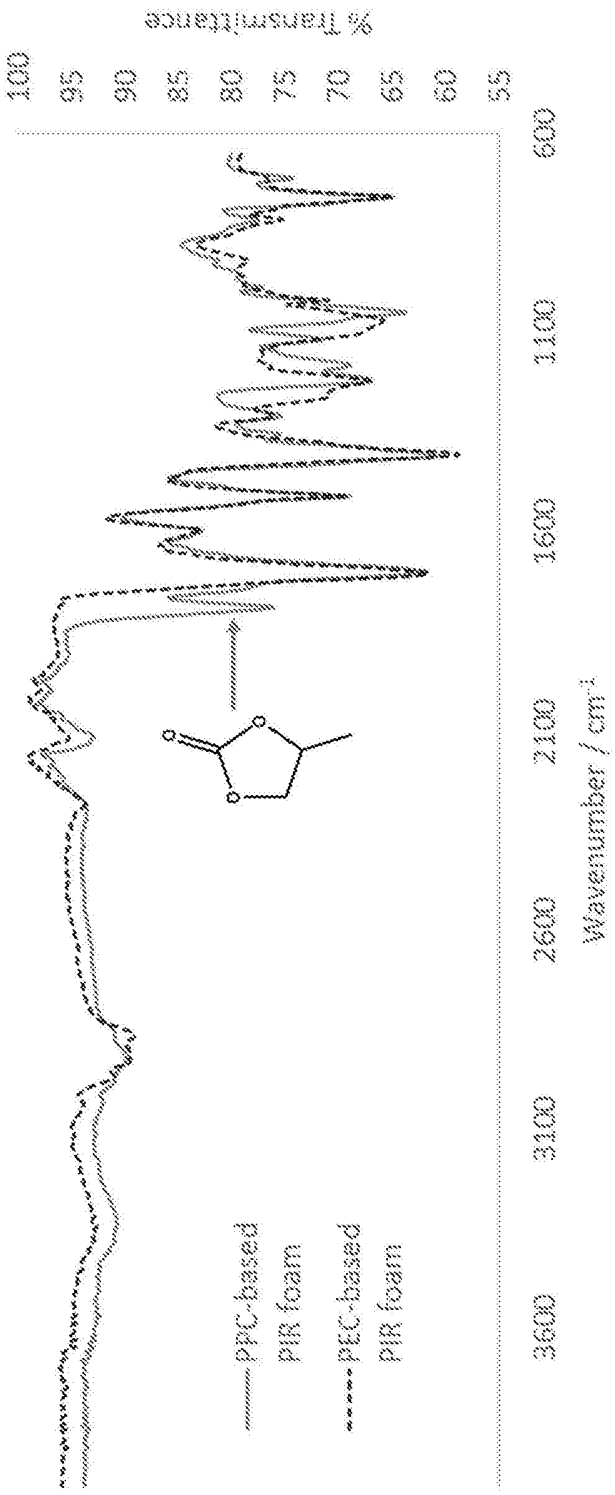

**Figure 12.** Rigid foam samples of example 3 after the Buttler Chimney test. Formulation 3 (APP Benchmark) – top, formulation 2 (PEC 6) – bottom.

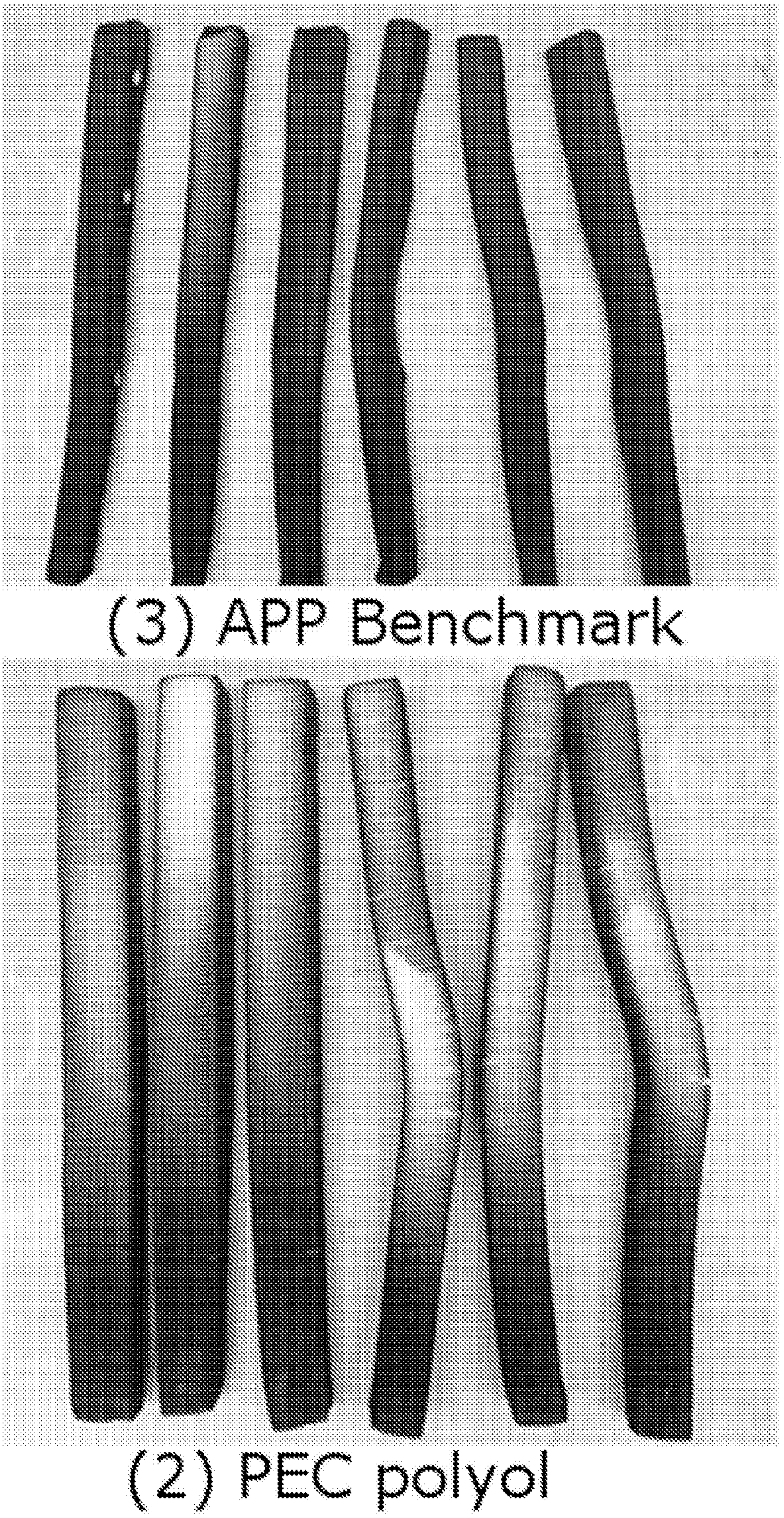

**Figure 13.** Rigid foam samples of example 3 after burning for cone calorimetry. Top – formulation 3 (APP benchmark), bottom – formulation 2 (PEC 6).

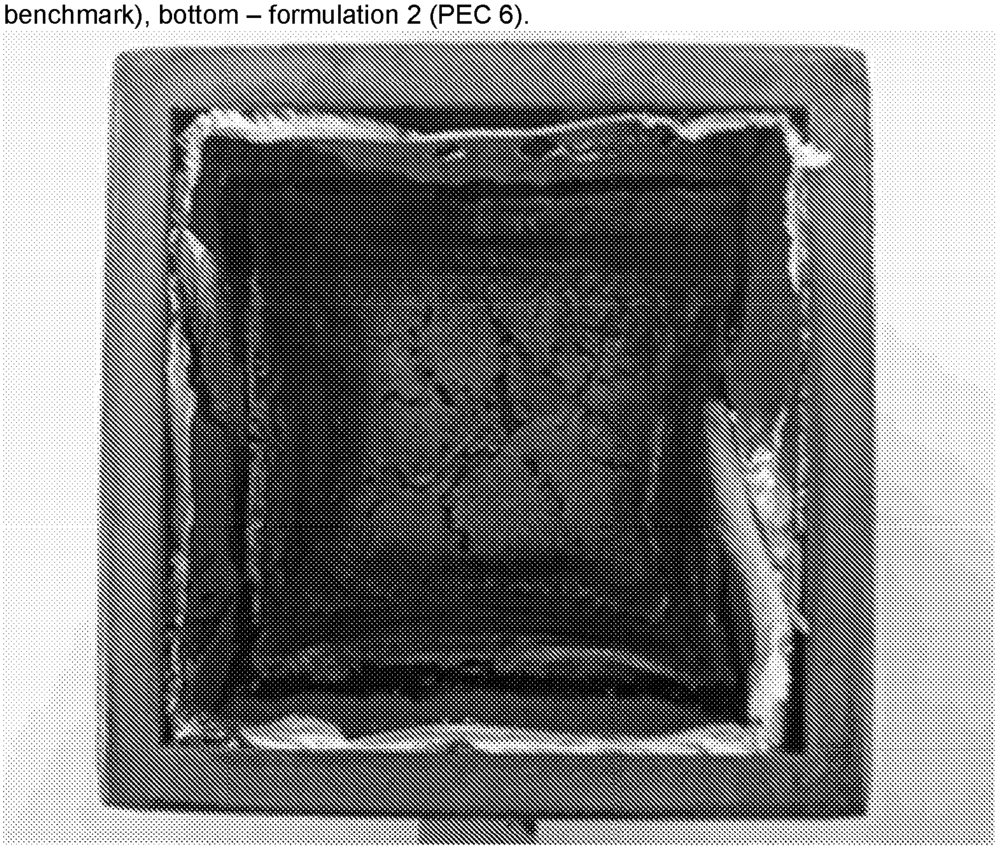

(3) APP Benchmark

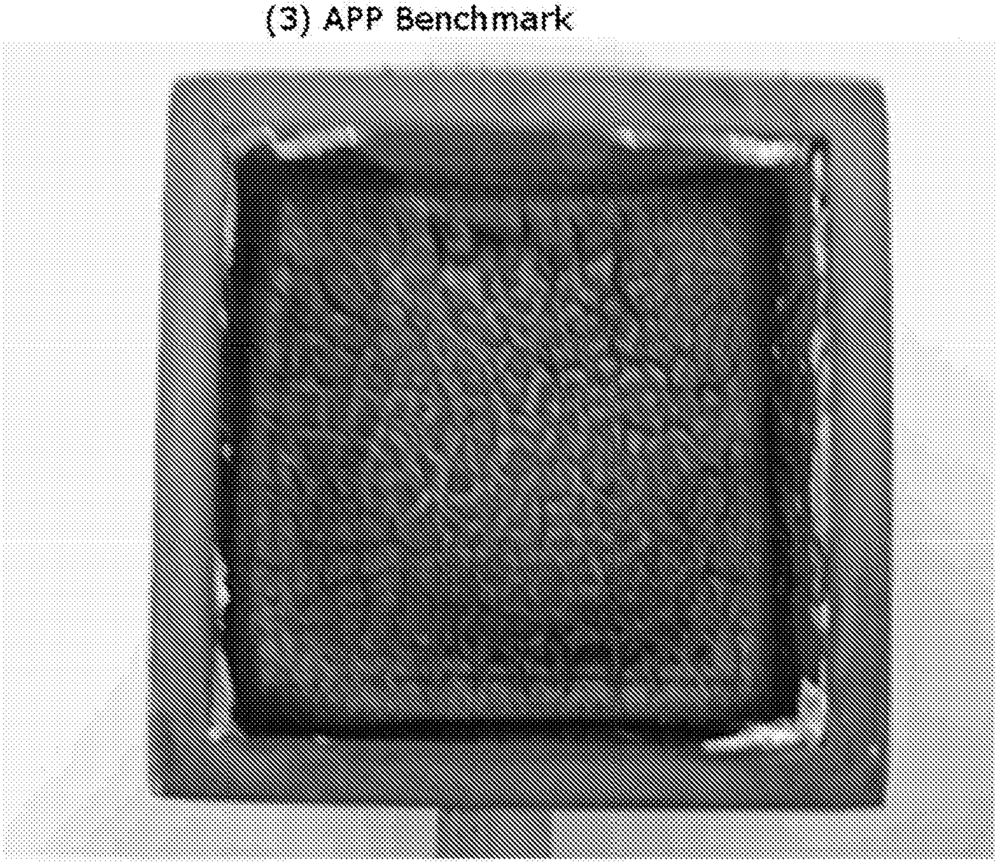

(2) PEC polyol

**Figure 14.** Mass retained for samples measured on the cone calorimeter

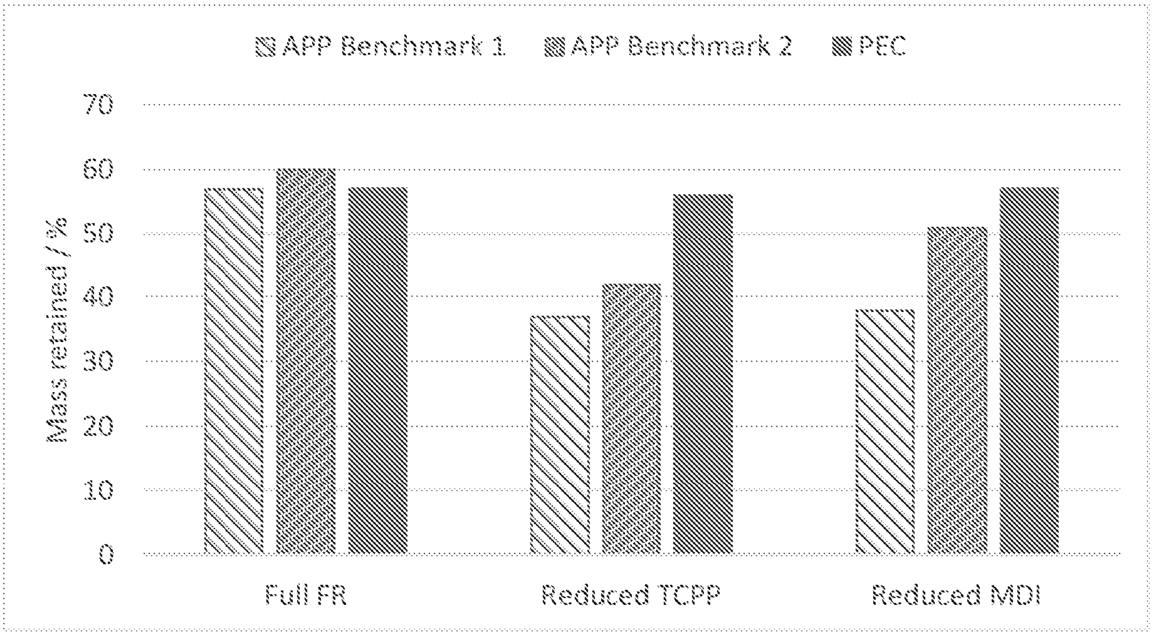


**Figure 15.** Average rate of heat release inside 3 minutes for samples measured on the cone calorimeter.

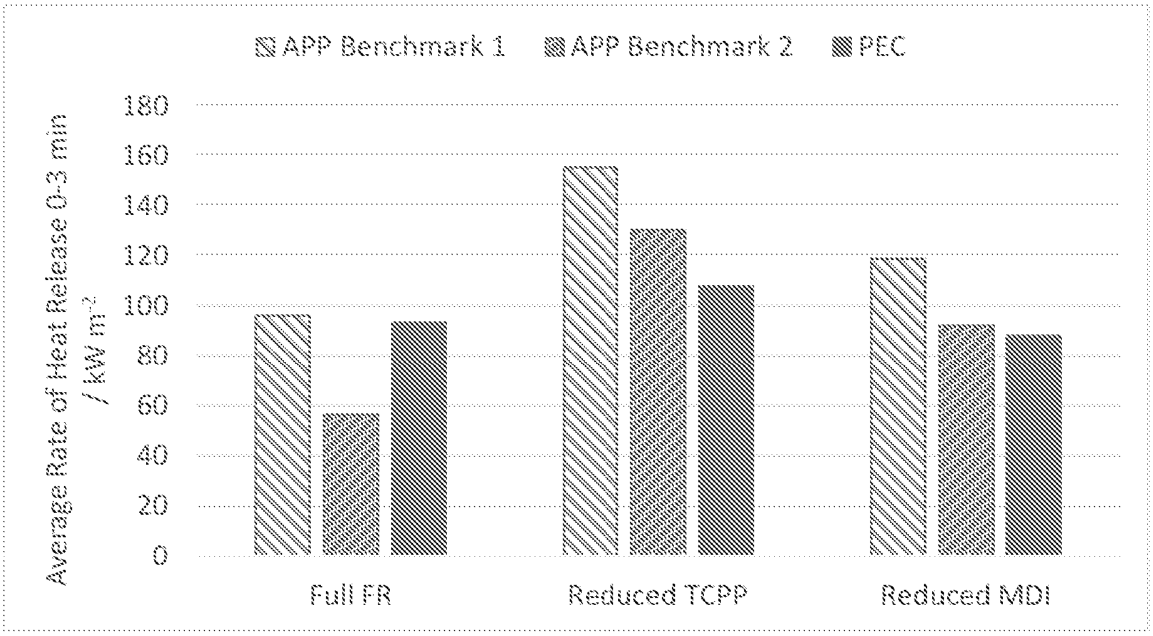

**Figure 16.** Fire growth rate for samples measured on the cone calorimeter.

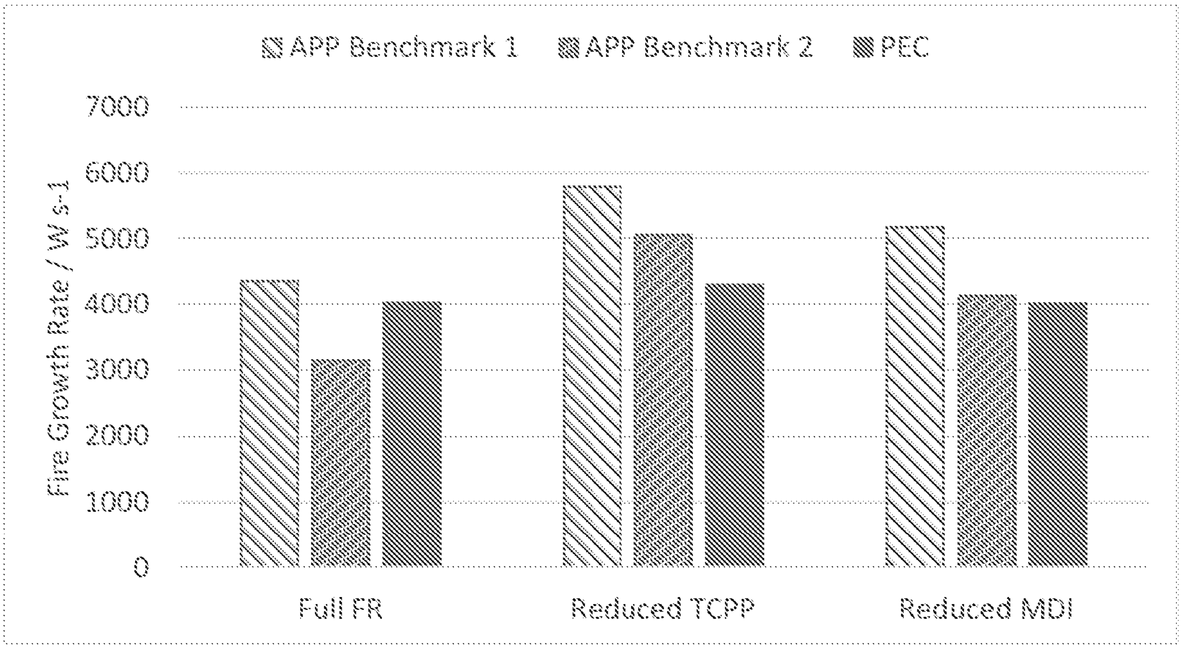


**Figure 17.** Specific extinction area for samples measured on the cone calorimeter.

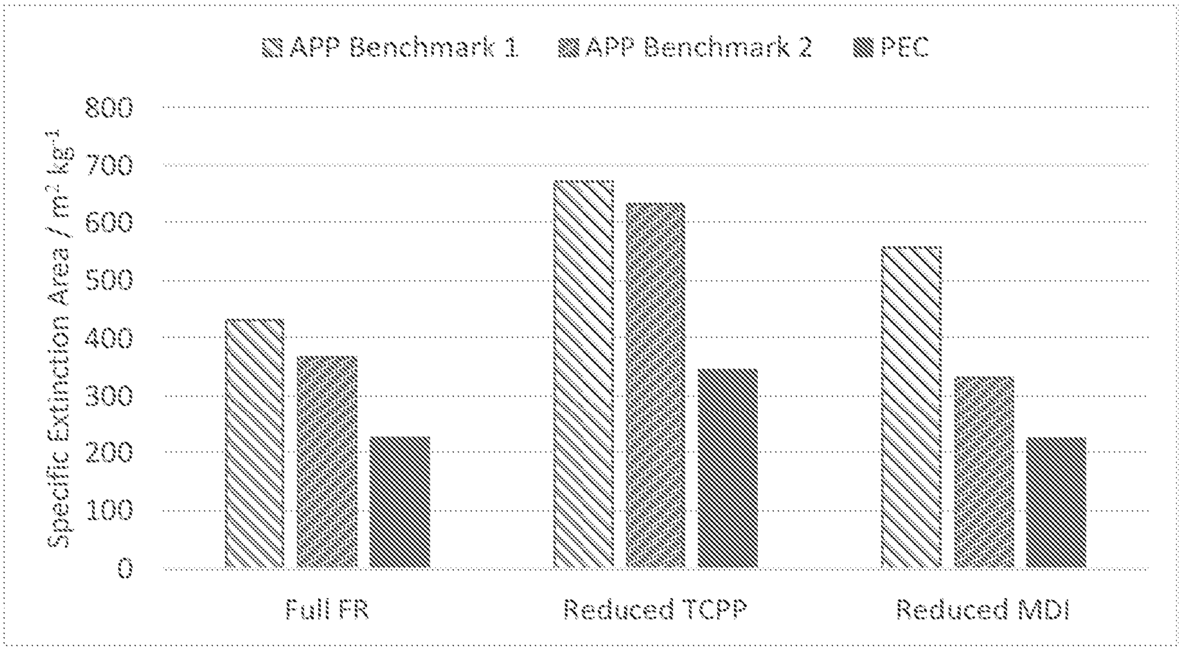

**Figure 18.** Carbon monoxide yield for samples measured on the cone calorimeter.

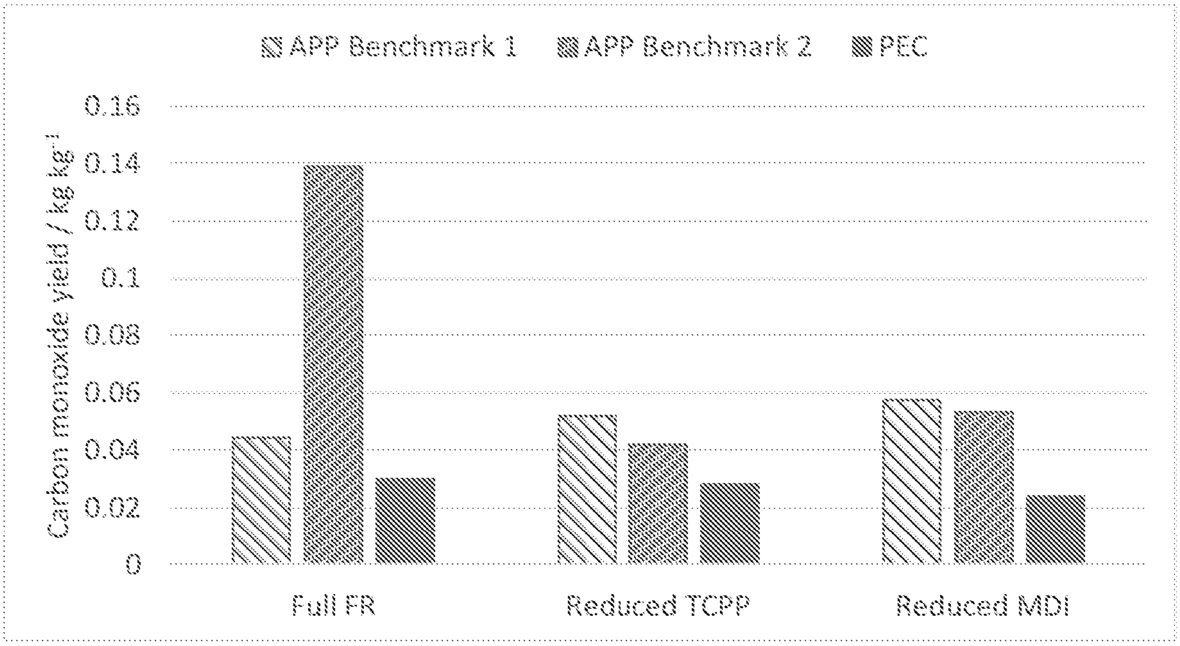

**Figure 19.** Side on images of samples after cone calorimetry testing. Demonstrating improved shape retention and enhanced resistance to the burn through of the sample in the PEC based foam.

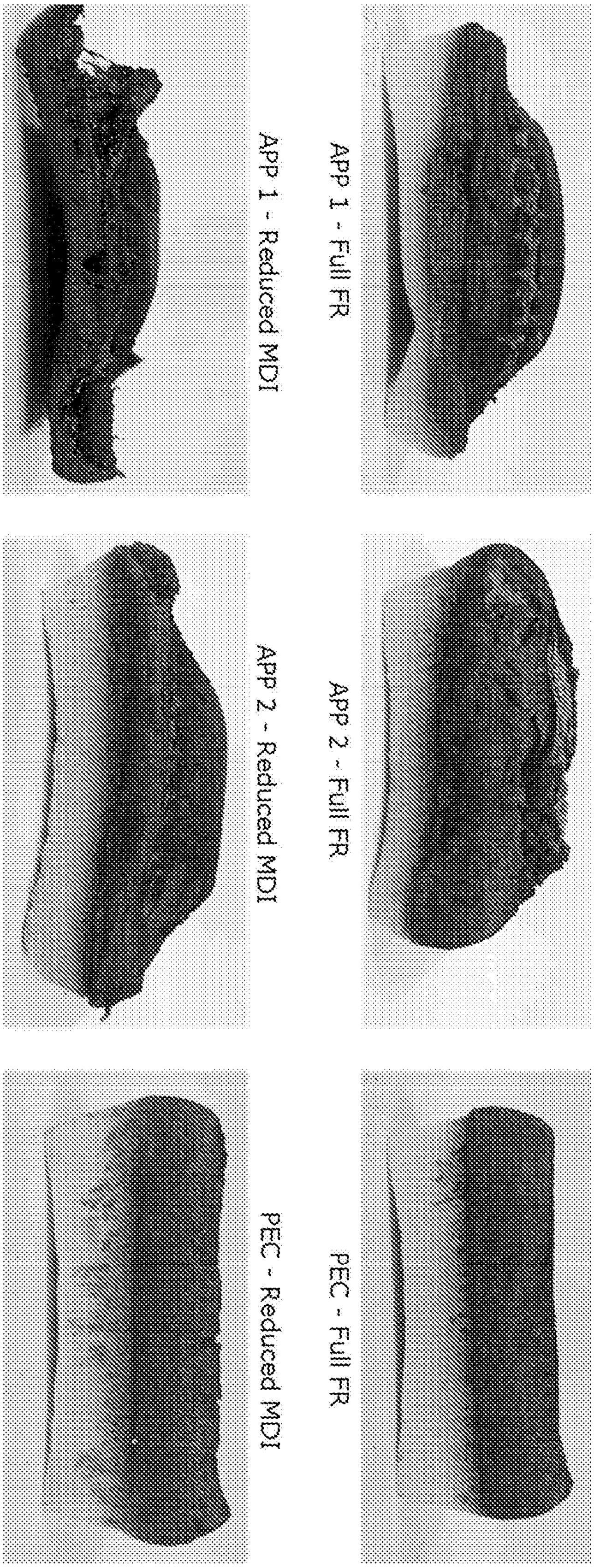

**Figure 20.** Viscosity of pentane-polyol mixtures at different addition levels.

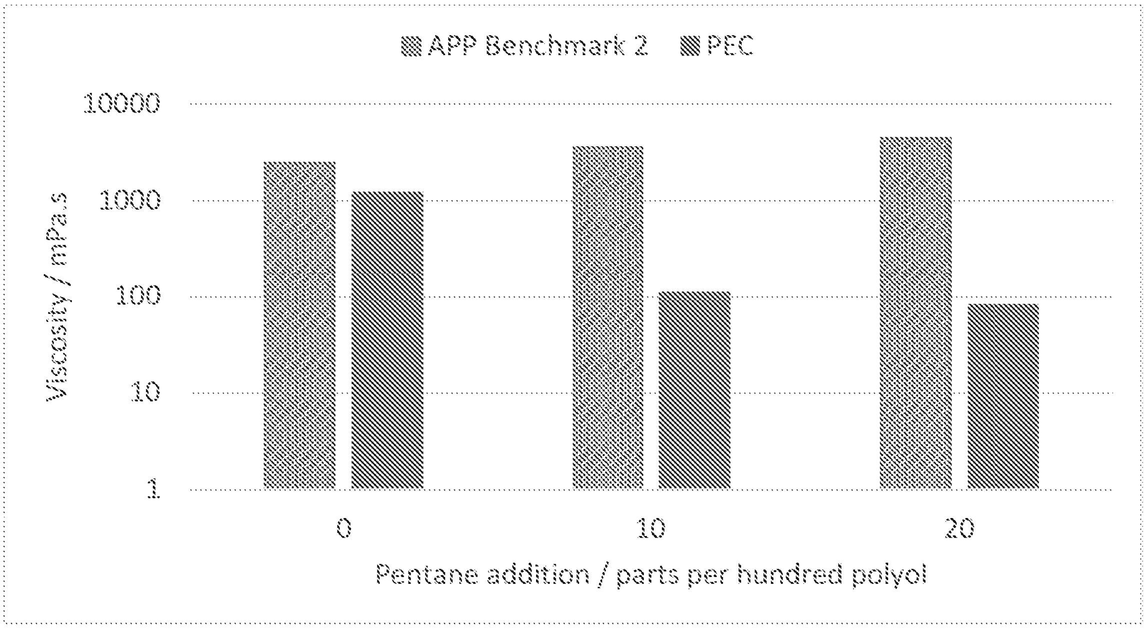


**Figure 21.** Still images of polyol-pentane (100 parts : 10) mixtures. PEC (rear) shows much better flow and a clear liquid, indicating good miscibility when compared to APP (front).

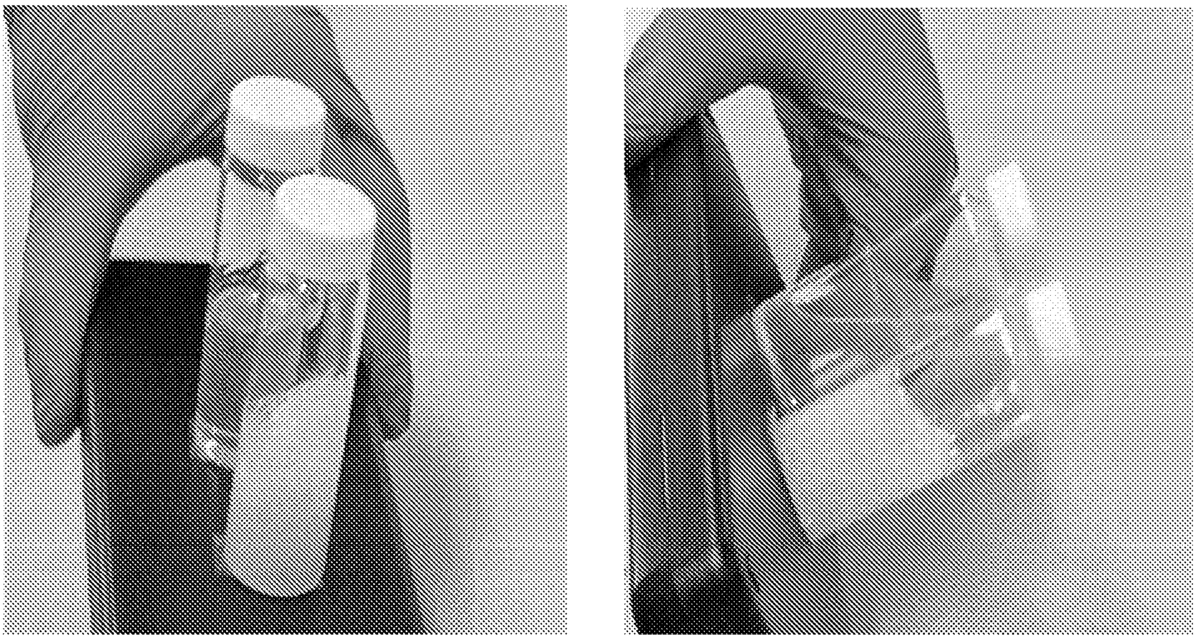

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016135109 A, Covestro
- US 9512259 B
- WO 2014186397 A
- WO 2017037441 A
- US 20140323670 A
- WO 2017037441 A9
- WO 2018158370 A1